# EUROPEAN PATENT APPLICATION

(11) **EP 4 600 797 A1**
(43) Date of publication of application: **13.08.2025**
(21) Application number: 23884974.9
(22) Date of filing: 01.11.2023
(51) Int. Cl.: G06F 3/0483

(54) **APPLICATION DISPLAY METHOD, ELECTRONIC DEVICE, AND STORAGE MEDIUM**

(30) Priority: 02.11.2022 CN 202211364432
(71) Applicant: Huawei Technologies Co., Ltd., Shenzhen, Guangdong 518129 (CN)
(72) Inventor: ZHOU, Yupei, Shenzhen, Guangdong 518129 (CN); HE, Qian, Shenzhen, Guangdong 518129 (CN); WANG, Shuyun, Shenzhen, Guangdong 518129 (CN); DU, Yiquan, Shenzhen, Guangdong 518129 (CN); XU, Wenfei, Shenzhen, Guangdong 518129 (CN)
(74) Representative: MERH-IP Matias Erny Reichl Hoffmann Patentanwälte PartG mbB
(86) International application number: PCT/CN2023/128991
(87) International publication number: WO 2024/094046

(57) **Abstract**

This application relates to the field of electronic device technologies, and provides an application display method, an electronic device, and a computer-readable storage medium. The application display method includes: displaying a first window, where the first window is used to run a first application (S110); receiving a first operation (S120); in response to the first operation, switching the first window to a bookmark of the first application (S130); displaying a second window, where the second window is used to run a second application (S140); receiving a second operation, where the second operation is used to drag the second window to the bookmark of the first application (S150); and in response to the second operation, switching the bookmark of the first application to a combined bookmark of the first application and the second application (S160). An application may be displayed in a display interface of an electronic device in a form of a bookmark, so that a user conveniently switches the application.

## Description

This application claims priority to Chinese Patent Application No. 202211364432.1, filed with the China National Intellectual Property Administration on November 2, 2022 and entitled "APPLICATION DISPLAY METHOD, ELECTRONIC DEVICE, AND STORAGE MEDIUM", which is incorporated herein by reference in its entirety.

### TECHNICAL FIELD

This application relates to the field of electronic device technologies, and in particular, to an application display method, an electronic device, and a computer-readable storage medium.

### BACKGROUND

Currently, applications on electronic devices are increasingly abundant, and the increasingly abundant applications may provide various services for users. For example, a user may use a conversation application (for example, WeChat^{™}) for social contact, use a navigation application (for example, Baidu Maps^{™}) for travel assistance, and use a video application (for example, iQIYI^{™}) to watch films and television programs.

When using an electronic device, the user usually needs to switch a current application, for example, switch iQIYI to WeChat. In the conventional technology, an operation for switching an application on an electronic device is relatively complex.

### SUMMARY

Some implementations of this application provide an application display method, an electronic device, and a computer-readable storage medium. The following describes this application from a plurality of aspects. Mutual reference may be made to implementations and beneficial effects of the plurality of aspects below.

According to a first aspect, this application provides an application display method, applied to an electronic device. The method includes: displaying a first window, where the first window is used to run a first application; receiving a first operation; in response to the first operation, switching the first window to a bookmark of the first application; displaying a second window, where the second window is used to run a second application; receiving a second operation, where the second operation is used to drag the second window to the bookmark of the first application; and in response to the second operation, switching the bookmark of the first application to a combined bookmark of the first application and the second application.

According to implementations of this application, an application may be displayed in a display interface of the electronic device in a form of a bookmark, so that a user switches the application.

In some implementations, the first operation is used to drag the first window to a first bookmark hot zone. According to implementations of this application, a bookmark of an application may be created by using a simple operation.

In some implementations, the first window is a fixed window, and the receiving a first operation includes: receiving a third operation, where the third operation is used to switch the first window to a movable window of the first application; and receiving a fourth operation, where the fourth operation is used to drag the movable window of the first application to the first bookmark hot zone.

In some implementations, the first window is a full-screen window, and a display interface of the electronic device includes a first gesture hot zone; and the third operation is a first gesture operation acting on the first gesture hot zone.

According to implementations of this application, a bookmark creation manner can better comply with an operation habit of the user.

In some implementations, the first window is one of a plurality of split-screen windows displayed on the electronic device, a display interface of the electronic device includes a first gesture hot zone, the first gesture hot zone includes a plurality of sub-hot zones, and the sub-hot zones correspond to different split-screen windows; and the third operation is a first gesture operation acting on a sub-hot zone corresponding to the first window.

In some implementations, the movable window of the first application is a task card of the first application.

In some implementations, the first window is a floating window, and the receiving a first operation includes: receiving a fifth operation, where the fifth operation is used to drag the first window to the first bookmark hot zone.

In some implementations, the bookmark of the first application is located in a first region of a screen of the electronic device, and the first bookmark hot zone does not overlap a created bookmark in the first region.

In some implementations, the first region is a side region or a vertex region of the screen of the electronic device, and the first bookmark hot zone is located on an inner side of the created bookmark in the first region and is set adjacent to the created bookmark in the first region.

According to implementations of this application, a bookmark creation manner can better comply with an operation habit of the user.

In some implementations, the method further includes: receiving a sixth operation for the combined bookmark; and in response to the sixth operation, restoring the combined bookmark to split-screen windows of the first application and the second application, or restoring the combined bookmark to floating windows of the first application and the second application.

According to implementations of this application, the user can conveniently switch or open an application.

In some implementations, the method further includes: receiving a seventh operation for the combined bookmark; and in response to the seventh operation, displaying a thumbnail of a user interface of the first application and a thumbnail of a user interface of the second application.

According to implementations of this application, the user can quickly learn of an application status.

In some implementations, the first region includes a plurality of bookmarks, and the method further includes: switching the plurality of bookmarks to a collapsed state in response to receiving no operation for the plurality of bookmarks within specified duration.

According to implementations of this application, an occupation area of a bookmark on the screen can be reduced.

In some implementations, the method further includes: receiving a bookmark expanding operation; and in response to the bookmark expanding operation, restoring the plurality of bookmarks from the collapsed state to an expanded state.

In some implementations, the method further includes: displaying a third window, where the third window is used to run a third application; receiving an eighth operation; and in response to the eighth operation, switching the third window to a bookmark of the third application, where the bookmark of the third application is located in a second region of the screen of the electronic device. In a display direction of the electronic device, the first region and the second region are located on two opposite sides of the screen of the electronic device.

According to implementations of this application, bookmarks may be generated in different regions, so that the user creates a plurality of bookmarks.

In some implementations, the eighth operation is used to drag the third window to a second bookmark hot zone; and the second bookmark hot zone does not overlap a created bookmark in the second region and is set adjacent to the created bookmark in the second region.

According to implementations of this application, a bookmark creation manner can better comply with an operation habit of the user.

In some implementations, one of the first region and the second region is a side region of the screen of the electronic device, and the other is a vertex region of the screen of the electronic device.

In some implementations, a bookmark in the first region is used to be restored to one of a fixed window and a floating window, and a bookmark in the second region is used to be restored to the other of the fixed window and the floating window.

According to implementations of this application, the user can create different types of bookmarks.

According to a second aspect, this application provides an application display method, applied to an electronic device. The method includes: displaying a split-screen interface, where the split-screen interface includes a first split-screen window and a second split-screen window, the first split-screen window is used to run a fourth application, and the second split-screen window is used to run a fifth application; receiving a ninth operation, where the ninth operation is used to drag a combined split-screen window of the first split-screen window and the second split-screen window to a first bookmark hot zone; and in response to the ninth operation, switching the combined split-screen window of the first split-screen window and the second split-screen window to a combined bookmark of the fourth application and the fifth application.

According to implementations of this application, a user may create a combined bookmark based on a split-screen window, to improve operation experience.

In some implementations, a display interface of the electronic device includes a first gesture hot zone, the first gesture hot zone includes a plurality of sub-hot zones, and the sub-hot zones correspond to different split-screen windows; and the receiving a ninth operation includes: receiving a third operation, where the third operation is a first gesture operation acting on a first sub-hot zone, the first sub-hot zone is a sub-hot zone corresponding to the combined split-screen window of the first split-screen window and the second split-screen window, and the third operation is used to switch the combined split-screen window to a combined movable window of the fourth application and the fifth application; and receiving a fourth operation, where the fourth operation is used to drag the combined movable window to the first bookmark hot zone.

According to a third aspect, this application provides an application display method, applied to an electronic device. The method includes: displaying a first floating window and a second floating window, where the first floating window is used to run a sixth application, the second floating window is used to run a seventh application, the first floating window and the second floating window overlap each other, and a ratio of an area of an overlapping region of the first floating window and the second floating window to an area of the first floating window exceeds a first threshold; receiving a tenth operation; in response to the tenth operation, binding the first floating window and the second floating window into a combined floating window; receiving an eleventh operation, where the tenth operation is used to drag the combined floating window to a first bookmark hot zone; and in response to the eleventh operation, switching the combined floating window to a combined bookmark of the sixth application and the seventh application.

According to implementations of this application, a user may create a combined bookmark based on a floating window, to improve operation experience.

According to a fourth aspect, an implementation of this application provides an electronic device, including: a memory, configured to store instructions for execution by one or more processors of the electronic device; and a processor, where when the processor executes the instructions in the memory, the electronic device is enabled to perform the method according to any implementation of the first aspect, any implementation of the second aspect, or any implementation of the third aspect in this application. For beneficial effects that can be achieved in the fourth aspect, refer to the beneficial effects of the method provided in any implementation of the first aspect, any implementation of the second aspect, or any implementation of the third aspect. Details are not described herein again.

According to a fifth aspect, an implementation of this application provides a computer-readable storage medium. The computer-readable storage medium stores instructions, and when the instructions are executed on a computer, the computer is enabled to perform the method according to any implementation of the first aspect, any implementation of the second aspect, or any implementation of the third aspect. For beneficial effects that can be achieved in the fifth aspect, refer to the beneficial effects of the method provided in any implementation of the first aspect, any implementation of the second aspect, or any implementation of the third aspect. Details are not described herein again.

### BRIEF DESCRIPTION OF DRAWINGS

FIG. 1A is a diagram of a full-screen display mode according to an embodiment of this application;
FIG. 1B is a diagram of a split-screen display mode according to an embodiment of this application;
FIG. 1C is a diagram of a floating-window display mode according to an embodiment of this application;
FIG. 2 is a diagram of a display interface of an electronic device according to an embodiment of this application;
FIG. 3A to FIG. 3C are diagrams of an application switching manner in some embodiments;
FIG. 4A to FIG. 4C are diagrams of an application switching manner in some other embodiments;
FIG. 5A to FIG. 5C are diagrams of an application switching manner in some other embodiments;
FIG. 6A and FIG. 6B are diagrams of use statuses of an electronic device according to an embodiment of this application;
FIG. 7A to FIG. 7E are a diagram 1 of a bookmark creation method according to an embodiment of this application;
FIG. 8A to FIG. 8C are a diagram 2 of a bookmark creation method according to an embodiment of this application;
FIG. 8D and FIG. 8E are a diagram 1 of a bookmark arrangement manner according to an embodiment of this application;
FIG. 9A to FIG. 9F are a diagram 3 of a bookmark creation method according to an embodiment of this application;
FIG. 10A to FIG. 10C are a diagram 4 of a bookmark creation method according to an embodiment of this application;
FIG. 11A to FIG. 11C are a diagram 5 of a bookmark creation method according to an embodiment of this application;
FIG. 12A to FIG. 12E are a diagram 6 of a bookmark creation method according to an embodiment of this application;
FIG. 13A and FIG. 13B are a diagram 7 of a bookmark creation method according to an embodiment of this application;
FIG. 13C is a diagram 8 of a bookmark creation method according to an embodiment of this application;
FIG. 14 is a diagram of a created bookmark in a first region according to an embodiment of this application;
FIG. 15A to FIG. 15D are a diagram 1 of an application open operation according to an embodiment of this application;
FIG. 16A and FIG. 16B are a diagram of an application preview operation according to an embodiment of this application;
FIG. 17A to FIG. 17D are a diagram of a focus bookmark designation operation according to an embodiment of this application;
FIG. 18 is a diagram 1 of a bookmark expanding operation according to an embodiment of this application;
FIG. 19 shows an example setting manner of a first region and a second region according to an embodiment of this application;
FIG. 20A to FIG. 20C are a diagram 9 of a bookmark creation method according to an embodiment of this application;
FIG. 21A to FIG. 21C are a diagram 10 of a bookmark creation method according to an embodiment of this application;
FIG. 22A and FIG. 22B are a diagram 11 of a bookmark creation method according to an embodiment of this application;
FIG. 23A to FIG. 23C are a diagram 12 of a bookmark creation method according to an embodiment of this application;
FIG. 24A to FIG. 24C are a diagram 13 of a bookmark creation method according to an embodiment of this application;
FIG. 25 is a diagram of a created bookmark in a second region according to an embodiment of this application;
FIG. 26A and FIG. 26B are a diagram 2 of an application open operation according to an embodiment of this application;
FIG. 27 is a diagram 2 of a bookmark expanding operation according to an embodiment of this application;
FIG. 28 is a diagram of a created bookmark according to an embodiment of this application;
FIG. 29 is a diagram of a bookmark quantity setting manner according to an embodiment of this application;
FIG. 30 is an example flowchart 1 of an application display method according to an embodiment of this application;
FIG. 31 is an example flowchart 2 of an application display method according to an embodiment of this application;
FIG. 32 is an example flowchart 3 of an application display method according to an embodiment of this application;
FIG. 33 is an example flowchart 4 of an application display method according to an embodiment of this application;
FIG. 34 is a diagram of a software architecture of an electronic device according to an embodiment of this application;
FIG. 35 is an example flowchart 5 of an application display method according to an embodiment of this application;
FIG. 36 is an example flowchart 6 of an application display method according to an embodiment of this application;
FIG. 37 is an example flowchart 7 of an application display method according to an embodiment of this application;
FIG. 38 is an example flowchart 8 of an application display method according to an embodiment of this application;
FIG. 39 is an example flowchart 9 of an application display method according to an embodiment of this application;
FIG. 40 is an example flowchart 10 of an application display method according to an embodiment of this application;
FIG. 41 is an example flowchart 11 of an application display method according to an embodiment of this application;
FIG. 42A is an example flowchart 12 of an application display method according to an embodiment of this application;
FIG. 42B is an example flowchart 13 of an application display method according to an embodiment of this application;
FIG. 42C is an example flowchart 14 of an application display method according to an embodiment of this application;
FIG. 42D is an example flowchart 15 of an application display method according to an embodiment of this application;
FIG. 43 is a diagram of a structure of an electronic device according to an embodiment of this application;
FIG. 44 is a block diagram of an electronic device according to an embodiment of this application; and
FIG. 45 is a diagram of a structure of a system on chip (SoC, System on Chip) according to an embodiment of this application.

### DESCRIPTION OF EMBODIMENTS

Implementations of this application provide an application display method, so that applications can be stacked in a display interface of an electronic device in a form of "bookmarks", to facilitate application switching by a user.

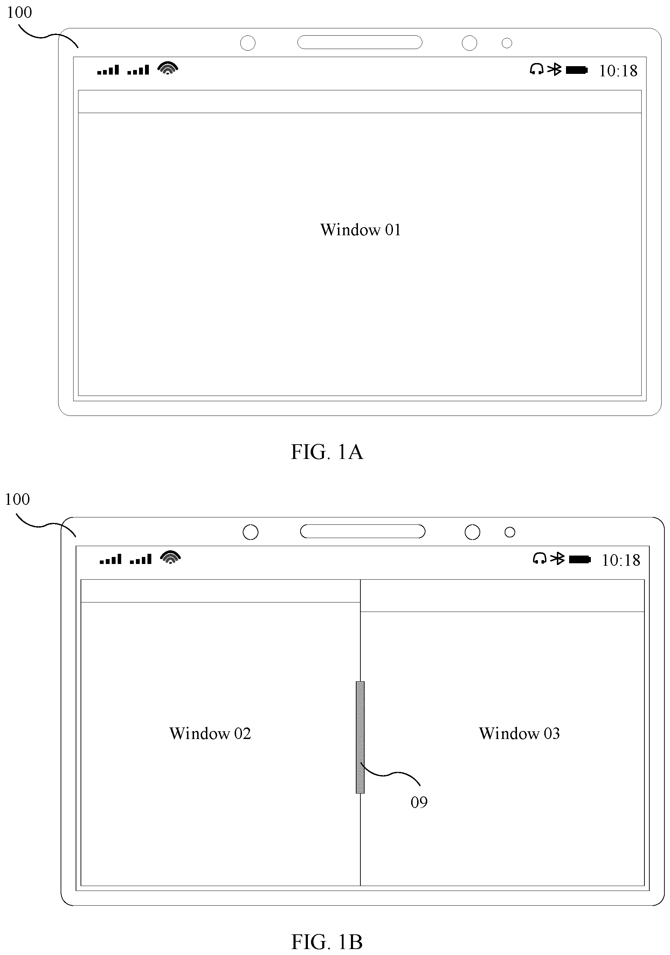

For ease of understanding, several window display modes of the electronic device are first described.
(1) Full-screen display mode: Refer to FIG. 1A. When an electronic device 100 is in a full-screen display mode, only one application window (for example, a window 01) is displayed on a screen of the electronic device 100, and the screen of the electronic device 100 is basically filled with the window. In this specification, a window displayed in the full-screen display mode is referred to as a full-screen window.
(2) Split-screen display mode: Refer to FIG. 1B. When an electronic device 100 is in a split-screen display mode, the electronic device 100 displays two or more application windows (for example, a window 02 and a window 03). Each window occupies a part of a screen, and any two windows do not overlap each other. In some embodiments, a size of each window may be changed. For example, sizes of the window 02 and the window 03 may be changed by dragging a drag bar 09 between the window 02 and the window 03. In this specification, a window displayed in the split-screen display mode is referred to as a split-screen window. For example, both the window 02 and the window 03 are split-screen windows.

For the full-screen window and the split-screen window, positions of the full-screen window and the split-screen window on the screen of the electronic device 100 are usually fixed, or can only be changed to a limited extent (for example, in some embodiments, positions of the window 02 and the window 03 may be exchanged). In this application, a window that has a relatively fixed position, such as the full-screen window or the split-screen window, is referred to as a fixed window.

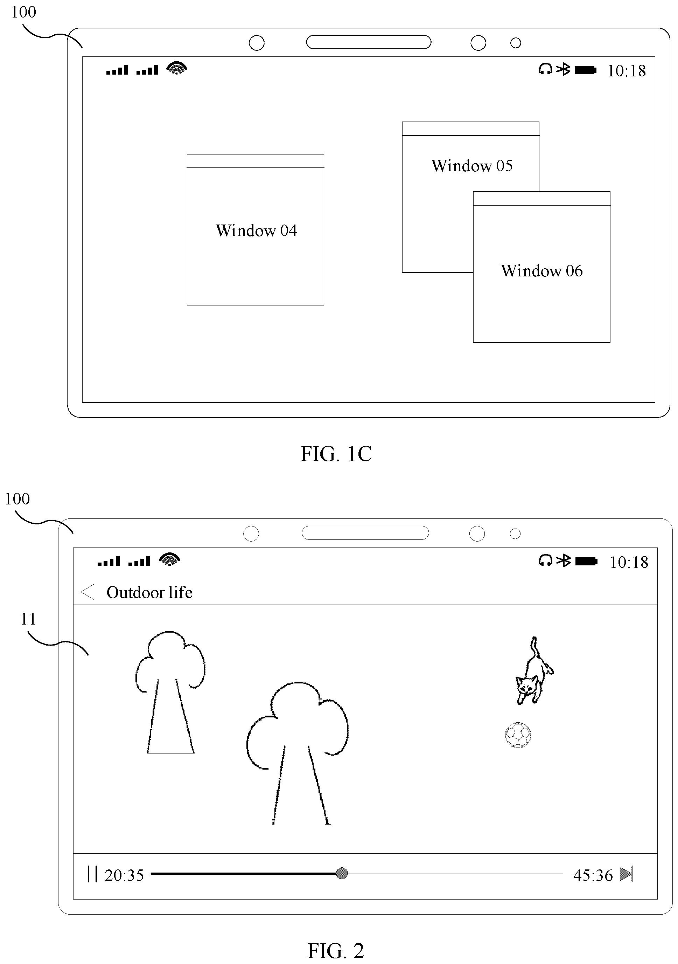

(3) Floating-window display mode: Refer to FIG. 1C. When an electronic device 100 is in a floating-window display mode, at least one application window (for example, a window 04, 05, or 06) floats on another user interface (for example, a window of another application or a desktop of the electronic device 100), and partially covers the another user interface. In this application, a window in a floating state is referred to as a "floating window". The floating window is a movable window. For example, when a user drags a specified area (for example, a title bar) of the floating window, a position of the floating window may be changed. In addition, when the user drags the floating window, another user interface of the electronic device 100 does not change with the position of the floating window. In addition, when the user does not perform an operation on the floating window, the floating window remains at a fixed position and does not change with another user interface.

In this embodiment, the electronic device 100 may display a plurality of floating windows, for example, floating windows 04, 05, and 06. Different floating windows may be separated from each other (for example, floating windows 04 and 05), or may overlap each other (for example, floating windows 05 and 06).

The following describes specific embodiments of this application. The method provided in this application may be applied to various electronic devices 100, for example, a mobile phone, a tablet computer, a wearable device, an in-vehicle device, an augmented reality (Augmented reality, AR) device/a virtual reality (Virtual reality, VR) device, a notebook computer, an ultra-mobile personal computer (ultra-mobile personal computer, UMPC), a netbook, and a personal digital assistant (personal digital assistant, PDA). This is not limited in this application.

The electronic device 100 may include various applications, for example, a news application (for example, Toutiao^{™}), a conversation application (for example, WeChat^{™}), a video application (for example, iQIYI^{™}), and a shopping application (for example, JD^{™}). The electronic device 100 may display a user interface of each application in a window (which may be a full-screen window, a split-screen window, or a floating window), so that a user can interact with the application.

For example, refer to FIG. 2. The electronic device 100 may display a video picture of a video application B1 (for example, iQIYI) in a full-screen window 11, so that the user watches films and television programs by using the video application B1. In this application, when the electronic device 100 displays a user interface of an application B by using a window A, "the window A is a window of the application B", or "the window A is used to run the application B".

When using the electronic device 100, the user usually needs to switch a currently used application. For example, when the electronic device 100 is displaying the full-screen window 11 of the video application B1, if the user wants to chat with a friend, the user needs to invoke a window of a conversation application B2 (for example, WeChat).

The following provides some example manners in which the user invokes the conversation application B2.

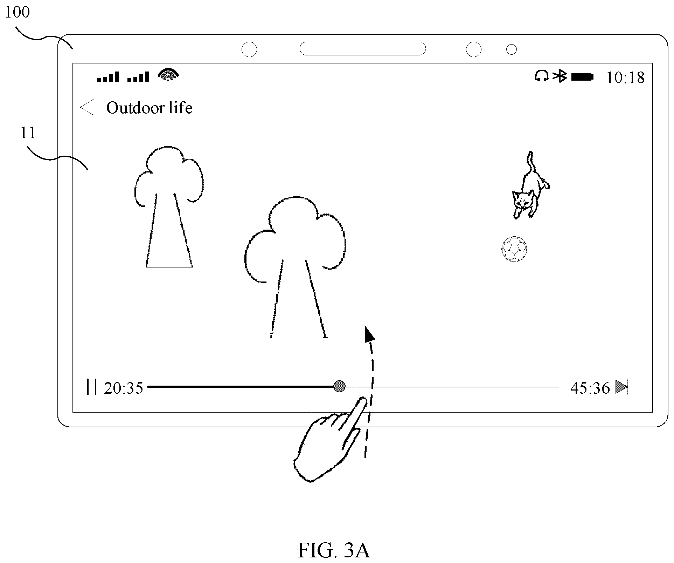

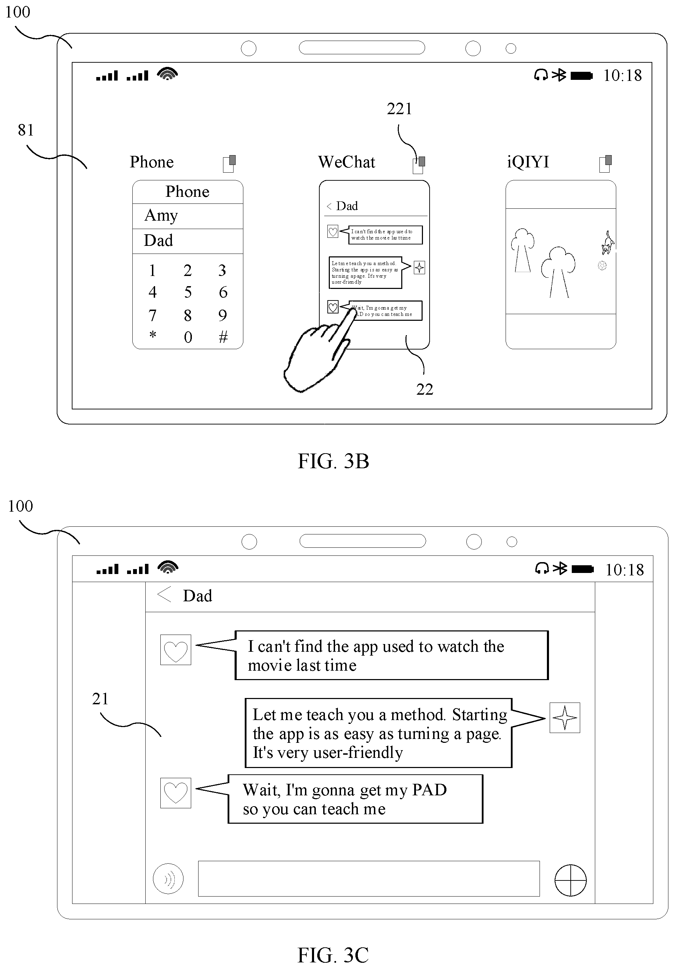

In some examples, refer to FIG. 3A to FIG. 3C. The user may invoke the conversation application B2 by using a desktop multi-task interface 81. Specifically, refer to FIG. 3A. The electronic device 100 is displaying the full-screen window 11 of the application B1. After the user performs a slide-up and pause gesture at the bottom of a screen of the electronic device 100, the desktop multi-task interface 81 shown in FIG. 3B may be displayed. A specific action of the slide-up and pause gesture may be: A finger of the user slides up from the bottom of the screen by a specific height (for example, about 1/5 of a height of the screen), and then pauses for preset duration (for example, more than 0.5s).

The desktop multi-task interface 81 includes a plurality of task cards, including a task card 22 of the conversation application B2. After the user taps the task card 22, as shown in FIG. 3C, the electronic device 100 may display a full-screen window 21 of the conversation application B2. In addition, after the electronic device 100 displays the full-screen window 21 of the conversation application B2, the video application B1 is exited and runs in the background of the electronic device 100.

In the example shown in FIG. 3A to FIG. 3C, the electronic device 100 can display a window of only one application. For example, when the electronic device 100 displays a window of the conversation application B2, the video application B1 is switched to run in the background, and is not displayed in an interface of the electronic device 100. When the user wants to display windows of two applications at the same time (for example, when the user wants to chat with a friend while watching films and television programs), the manner provided in this example cannot meet a user requirement.

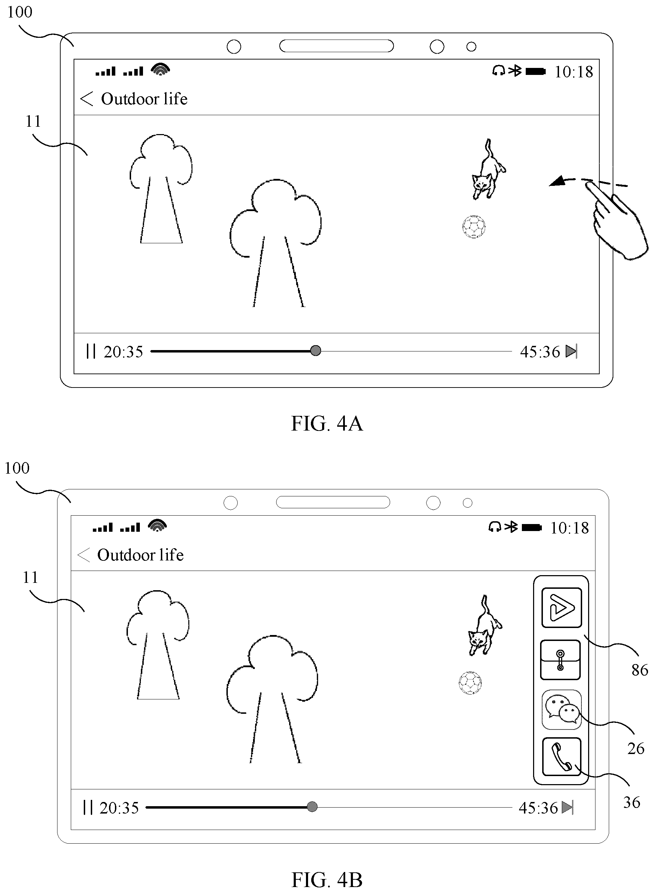

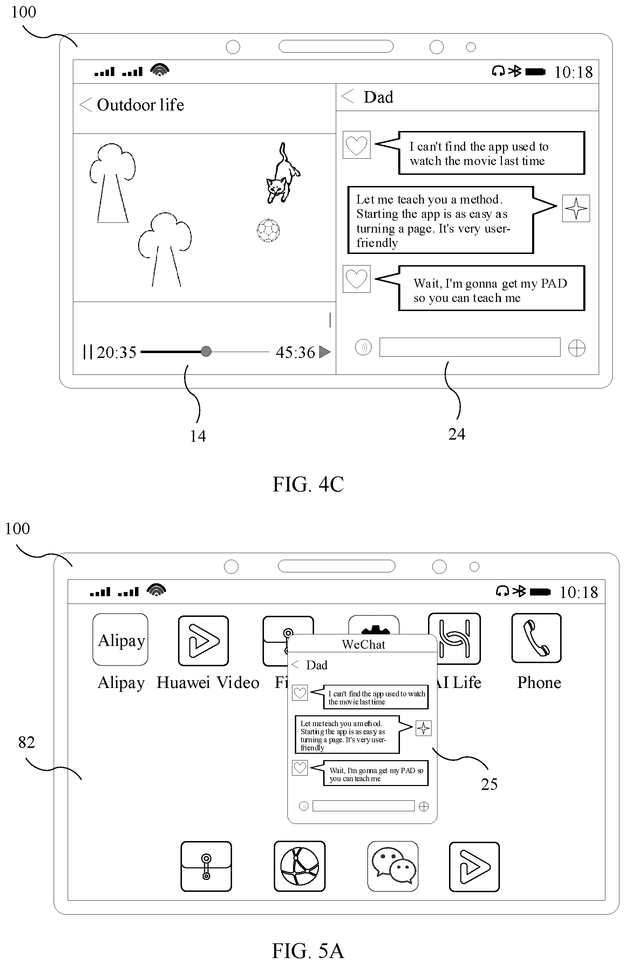

In some other examples, refer to FIG. 4A to FIG. 4C. The user may invoke a window of the conversation application B2 by using a side taskbar 86 (or referred to as a "dock bar 86") of the electronic device 100. In this example, the electronic device 100 may display a plurality of application windows. Specifically, refer to FIG. 4A. The electronic device 100 is displaying the full-screen window 11 of the video application B1. When the user performs a side-slide and pause gesture on a side (a left side or a right side, where the right side is shown in FIG. 4A) of the screen of the electronic device 100, the side taskbar dock bar 86 shown in FIG. 4B may be invoked. The dock bar 86 includes application icons of several applications, including an application icon 26 of the conversation application B2. When the user drags the application icon 26 to the window 11 of the video application B 1, the electronic device 100 may display a split-screen interface 84 shown in FIG. 4C. The split-screen interface 84 includes a split-screen window 14 of the video application B1 and a split-screen window 24 of the conversation application B2.

In the example shown in FIG. 4A to FIG. 4C, the electronic device 100 may simultaneously display windows of a plurality of applications (for example, a window of the video application B1 and a window of the conversation application B2), so that the user simultaneously uses the plurality of applications. However, in this example, when the user opens a new application window, the user needs to slide sideways to invoke the dock bar 86, and drag an application icon from the dock bar 86, resulting in complex operations. In addition, for people (for example, an elderly person) that are unfamiliar with the electronic device 100, an operation manner is hidden, and the user may not know the operation manner.

In some other examples, the user may alternatively invoke a floating window of the conversation application B2 by using the desktop multi-task interface 81 shown in FIG. 3B or the dock bar 86 shown in FIG. 4B. For example, refer to FIG. 3B. In the desktop multi-task interface 81, a floating control 221 is set above the task card 22 of the conversation application B2. After the user taps the floating control 221, as shown in FIG. 5A, the electronic device 100 may display a floating window 25 of the conversation application B2 on a desktop 82.

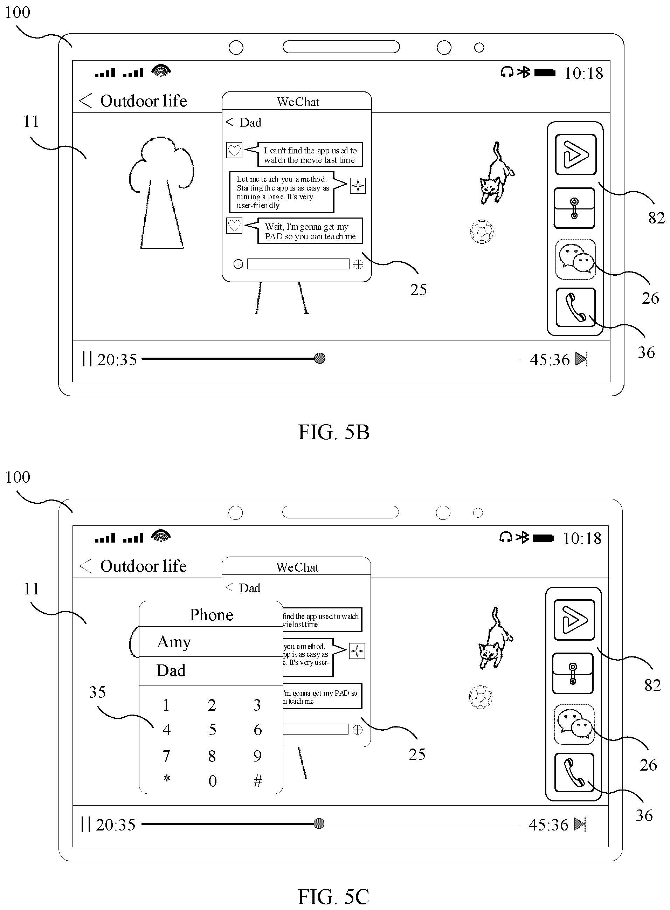

For another example, refer to FIG. 4B. After the user invokes the dock bar 86, if the user taps the application icon 26 of the application B2 (instead of dragging the application icon 26 to the window 11 of the application B1), with reference to FIG. 5B, the electronic device 100 generates the floating window 25 of the application B2 above the window 11 of the application B1.

In some embodiments, the electronic device 100 supports display of a plurality of floating windows. For example, refer to FIG. 5C. The dock bar 86 further includes an application icon 36 of an application B3 (for example, Phone). After the user taps the application icon 36, with reference to FIG. 5C, the electronic device 100 may generate a floating window 35 of the application B3.

In the manner shown in FIG. 5A to FIG. 5C, the user may invoke the floating window 25 of the conversation application B2, and the floating window 25 may coexist with a window (for example, the full-screen window 11 or the floating window 35) of another application, so that the user can use a plurality of applications at the same time. However, in this manner, the user still needs to invoke the floating window 25 of the conversation application B2 by using the desktop multi-task interface 81 or the dock bar 8682, and a problem of complex operations still exists.

Therefore, embodiments of this application provide an application display method, to facilitate application switching by a user. Specifically, in this application, the user may create a bookmark of an application. After the user creates a bookmark of an application (referred to as an "application B" below), the electronic device 100 "stacks" the bookmark on a display interface of the electronic device 100. Then, at any moment (for example, a moment when the user is using another application), the user can open a window of the application B provided that the user performs a tap operation (used as an example of an application open operation) on the bookmark, so that the application can be conveniently switched.

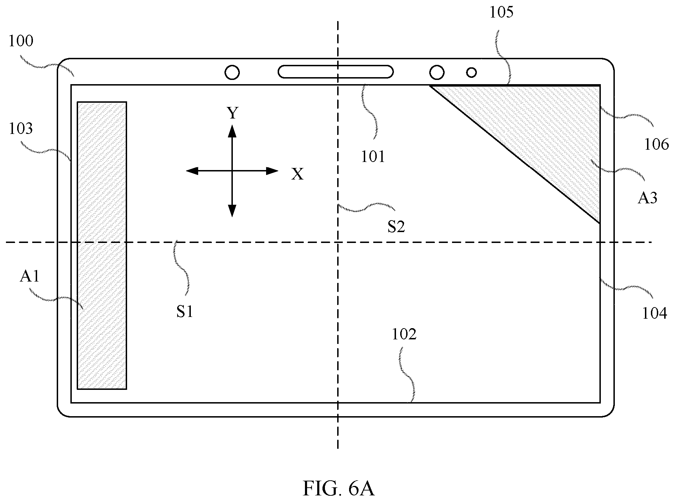

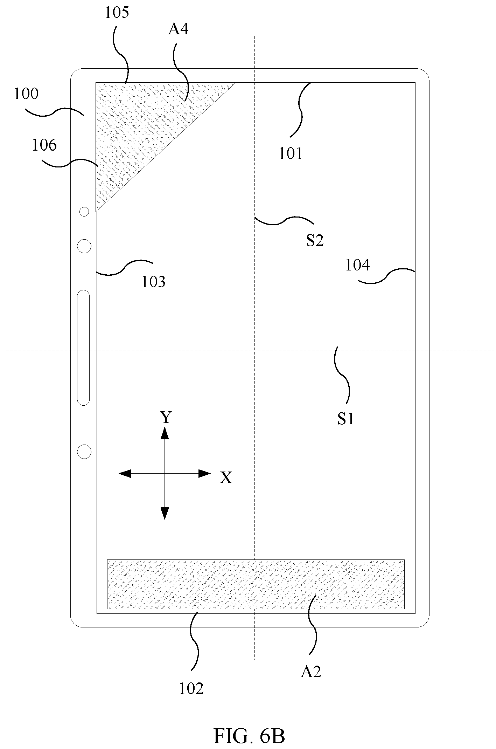

The following describes specific technical solutions in embodiments of this application. For ease of understanding, an example orientation of the electronic device 100 is first described with reference to FIG. 6.

FIG. 6A and FIG. 6B show two common states of the electronic device 100. FIG. 6A shows a landscape state, and FIG. 6B shows a portrait state. Refer to FIG. 6A. In the landscape state, a long edge of the electronic device 100 extends approximately in a horizontal direction, and a short edge extends approximately in a vertical direction. Refer to FIG. 6B. In the portrait state, a short edge of the electronic device 100 extends approximately in a horizontal direction, and a long edge extends approximately in a vertical direction.

Refer to FIG. 6A and FIG. 6B. The screen of the electronic device 100 includes four side edges. According to an orientation of each side edge relative to the user, the four side edges are respectively referred to as a top edge 101, a bottom edge 102, a left side edge 103, and a right side edge 104. The left side edge 103 and the right side edge 104 are disposed opposite to each other along a width direction (an X direction in the figures) of the screen, and the top edge 101 and the bottom edge 102 are disposed opposite to each other along a height direction (a Y direction in the figures) of the screen.

In addition, a direction from the left side edge 103 to the right side edge 104 is referred to as a display direction of the electronic device 100. Usually, when the user reads a text file on the electronic device 100, the display direction is a row direction of the text file; and when the user writes on the electronic device 100, the display direction is a writing direction of the user.

In addition, using a center line S1 of the screen in the height direction as a boundary, a part above the center line S1 is a top region of the screen, and a part below the center line S1 is a bottom region of the screen. Using a center line S2 of the screen in the width direction as a boundary, a part on the left of the center line S2 is a left region of the screen, and a part on the right of the center line S2 is a right region of the screen.

In this specification, a region that is located near a side edge of the screen and that extends along the side edge is referred to as a side region corresponding to the side edge. For example, a region A1 and a region A2 shown in the figure are both side regions, where the region A1 is a left side region (that is, the region A1 corresponds to the left side edge), and the region A2 is a bottom region (that is, the region A2 corresponds to the bottom edge). Usually, the side region is attached to the corresponding side edge, or a distance between the side region and the corresponding side edge is less than a preset value (for example, 5 pixels). In addition, a ratio of a length of the side region to a length of the corresponding side edge may be greater than a specified value (for example, 70%). In addition, a side that is of the side region and that is opposite to the side edge corresponding to the side region is an inner side of the side region (or a created bookmark in the region). For example, a right side of the region A1 is an inner side of the region.

A region that is set around a vertex of the screen is referred to as a vertex region corresponding to the vertex. For example, a region A3 and a region A4 shown in the figure are both vertex regions. The region A3 is an upper right vertex region (that is, the region A3 corresponds to an upper right vertex), and the region A4 is an upper left vertex region (that is, the region A4 corresponds to an upper left vertex). The vertex region may be a triangle or a sector. A dimension of the vertex region in the width direction may be less than 1/2 of a width of the screen, and a dimension of the vertex region in the height direction may be less than 1/2 of a height of the screen. For example, for visual aesthetics, the vertex region may include a side edge 105 that overlaps or is parallel to the top edge 101 of the screen, and a side edge 106 that overlaps or is parallel to the side edge (the left side edge 103 or the right side edge 104) of the screen. A length of the side edge 105 may be equal to a length of the side edge 106. In addition, a side that is of the vertex region and that is opposite to the corresponding vertex is an inner side of the vertex region (or a created bookmark in the region). For example, a lower left side of the region A3 is an inner side of the region.

The following describes specific technical solutions in embodiments of this application. The following first describes a bookmark creation method, and then describes a bookmark use method. In addition, in the following, iQIYI^{™}, WeChat^{™}, Phone, Alarm, Calculator, and Weather are respectively used as examples of applications B1 to B6. However, it may be understood that this is merely an example for description. The applications B1 to B6 may be any applications, for example, a system application such as Browser, Gallery, or Files, or a third-party application such as rednote^{™}, JD^{™}, or VooV Meeting^{™}.

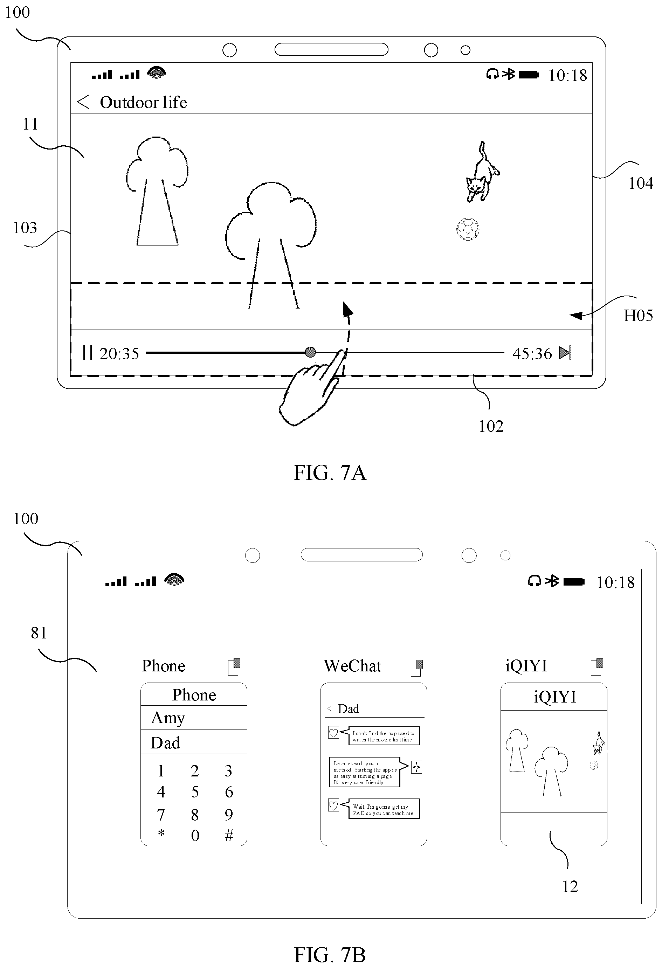

FIG. 7A to FIG. 7D show an example of a bookmark creation method. Specifically, refer to FIG. 7A. A display interface of the electronic device 100 includes a full-screen window 11 of the video application B1. The display interface includes a gesture hot zone H05 (a region enclosed by a dashed line in FIG. 7A, or referred to as a "first gesture hot zone"). When a user performs a gesture G1 (or a "first gesture") in the gesture hot zone H05, the full-screen window 11 of the application B1 may be switched to a movable window (that is, a window that can be dragged) of the application B1.

In this embodiment, the gesture hot zone H05 is located in the bottom region of the screen. For example, the gesture hot zone H05 crosses the screen of the electronic device 100 along the width direction, that is, a left side edge and a right side edge of the gesture hot zone H05 respectively overlap the left side edge 103 and the right side edge 104 of the screen. In addition, a bottom edge of the gesture hot zone H05 may overlap the bottom edge 102 of the screen, and the gesture hot zone H05 may have a specified height (for example, about 1/4 of the height of the screen). In another embodiment, the gesture hot zone H05 may alternatively be located in another position, for example, a middle region of the screen.

In this embodiment, the gesture G1 is a slide-up and pause gesture from the bottom edge of the gesture hot zone H05. For example, a finger of the user slides up from the bottom edge of the gesture hot zone H05 by a specific height (for example, about 1/5 of the height of the screen), and then pauses for more than preset duration (for example, 0.5s). In another embodiment, the gesture G1 may alternatively be another gesture, for example, an S-shaped drawing gesture.

After the user performs the slide-up and pause gesture (used as an example of the first gesture) in the gesture hot zone H05, as shown in FIG. 7B, a desktop multi-task interface 81 in FIG. 7B may be invoked, where the desktop multi-task interface 81 includes a task card 12 of the application B1. In other words, the full-screen window 11 of the application B1 may be switched to the task card 12 of the application B1 by performing the gesture G1 in the gesture hot zone H05. In another embodiment, the user may alternatively switch the full-screen window 11 of the application B1 to the task card 12 of the application B1 in another manner. For example, when the electronic device 100 has a physical or virtual home button, the user may invoke the desktop multi-task interface 81 by double-tapping the home button, to switch the full-screen window 11 of the application B1 to the task card 12 of the application B1 (used as an example of a movable window of the application B1).

In addition, refer to FIG. 7B. In addition to the task card 12 of the application B1, the desktop multi-task interface 81 may further include task cards of a plurality of other applications. Generally, the plurality of applications are applications that are in a background running state. In other words, the electronic device 100 may include, in the desktop multi-task interface 81, an application in the background running state. In the desktop multi-task interface 81, each task card is in a draggable state. For example, when the user drags a specified position (for example, a title bar) of the task card, the task card can be dragged.

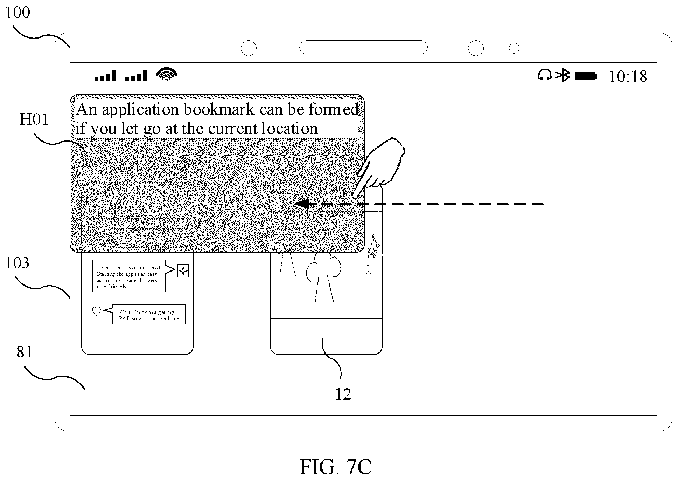

Refer to FIG. 7C. When the user drags the task card 12 of the application B1, the task card 12 may be dragged to a bookmark hot zone H01. For example, when the user drags the task card 12 to the bookmark hot zone H01, the electronic device 100 may indicate a position of the bookmark hot zone H01. In this embodiment, the electronic device 100 indicates the position of the bookmark hot zone H01 in a manner of a mask. In another embodiment, the electronic device 100 may alternatively indicate the position of the bookmark hot zone H01 in a form such as a dashed box, a text, or the like. In addition, after the user drags the task card to the bookmark hot zone H01, the electronic device 100 may further display a prompt text "An application bookmark can be formed if you let go at the current position", to assist the user in performing an operation.

In some embodiments, when a ratio of an area of a dragged object (for example, the task card 12) in the bookmark hot zone H01 to a total area of the dragged object exceeds a specified value (for example, 30%), it may be considered that the dragged object is dragged to the bookmark hot zone H01. In some other embodiments, when an action position of the user on the dragged object (for example, the task card 12) (for example, a position at which a finger of the user presses the task card 12) is in the bookmark hot zone H01, it may be considered that the dragged object is dragged to the bookmark hot zone H01.

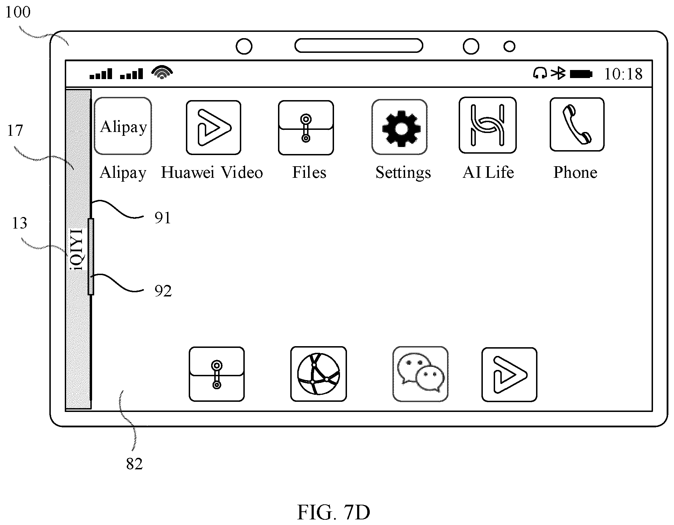

After the user drags the task card 12 to the bookmark hot zone H01, and releases (for example, lets go of) the task card 12 in the bookmark hot zone H01, as shown in FIG. 7D, the electronic device 100 may generate a bookmark 17 of the application B1. Then, the electronic device 100 may return from the desktop multi-task interface 81 to the desktop 82. In other words, through the operations shown in FIG. 7A to FIG. 7C, the electronic device 100 may switch the full-screen window 11 of the application B1 to the bookmark 17 of the application B1.

In the example shown in FIG. 7A to FIG. 7D, because the full-screen window is a window with a relatively fixed position, the full-screen window of the application is first switched to a movable window (for example, a task card of the application), and then the movable window is dragged to the bookmark hot zone H01 (which may be understood as indirectly dragging the full-screen window of the application to the bookmark hot zone H01), to form a bookmark of the application. In this example, the task card of the application is used as an example of the movable window of the application. In another example, the movable window of the application may alternatively be in another form, provided that the movable window is a window that can be dragged.

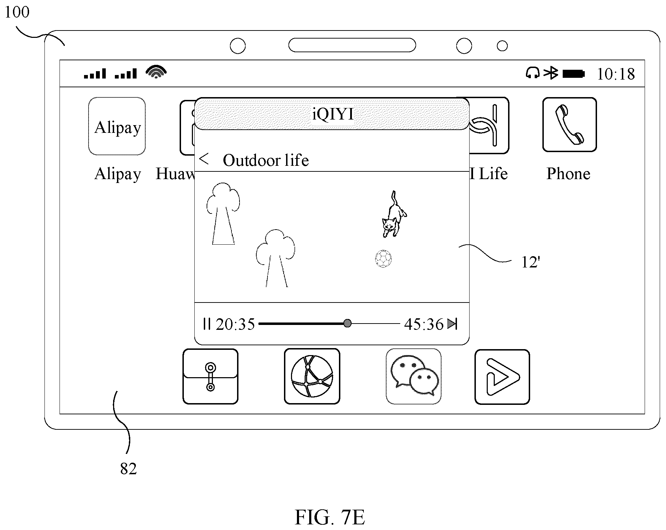

For example, in another embodiment, the movable window of the application is a floating window above another user interface. Specifically, refer to FIG. 7E. After the user performs the gesture G1 in the bookmark hot zone H01 shown in FIG. 7A, the electronic device may display a floating window 12' of the application B1. The floating window 12' is located above the desktop 82, and is a window that can be dragged. Then, after the user drags the floating window 12' to the bookmark hot zone H01 and releases the floating window 12' in the bookmark hot zone H01, the electronic device may form the bookmark 17 of the application B1 (as shown in FIG. 7D). For example, an area of the floating window 12' may be less than an area of the full-screen window 11 of the application B1. In some embodiments, the floating window 12' may be implemented as a floating window of the application B1 (for a meaning of the floating window, refer to the foregoing descriptions about FIG. 1C).

In the following descriptions, a task card of an application is used as an example of a movable window of the application. However, it may be understood that this application is not limited thereto.

In the example shown in FIG. 7A to FIG. 7E, before the bookmark 17 is created, no created bookmark exists on the electronic device 100. That is, the bookmark 17 of the application B1 is the 1^{st} bookmark created by the user. In another embodiment, the bookmark 17 may not be the 1^{st} bookmark.

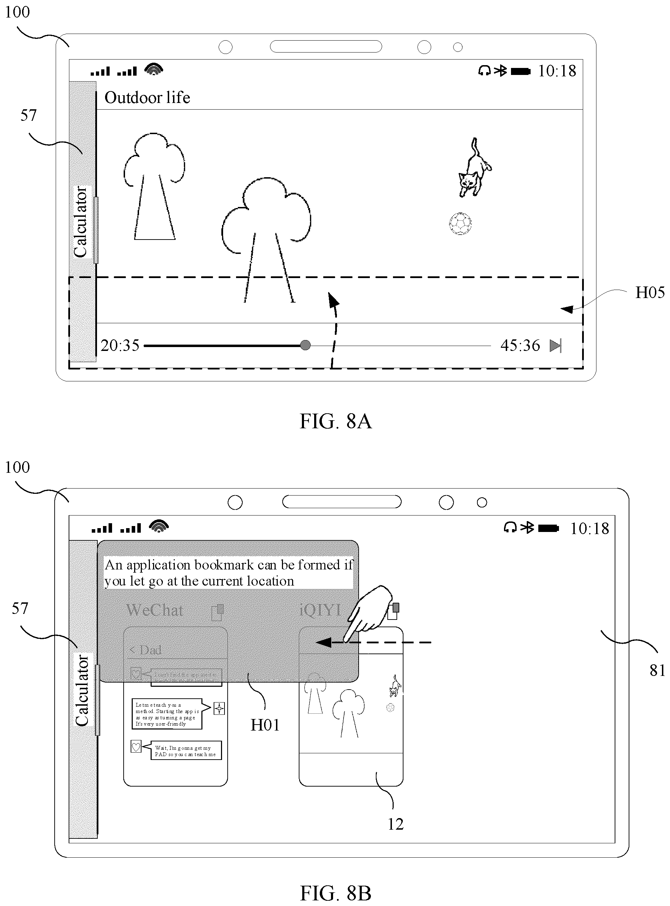

FIG. 8A to FIG. 8C show another example of a bookmark creation method. Specifically, refer to FIG. 8A. A display interface of the electronic device 100 includes a full-screen window 11 of the application B1 and a bookmark 57 of the application B5 (for example, Calculator). The bookmark 57 is a bookmark that has been created by the user, and a method for creating the bookmark 57 is substantially the same as a method for creating the bookmark 17, and details are not described again.

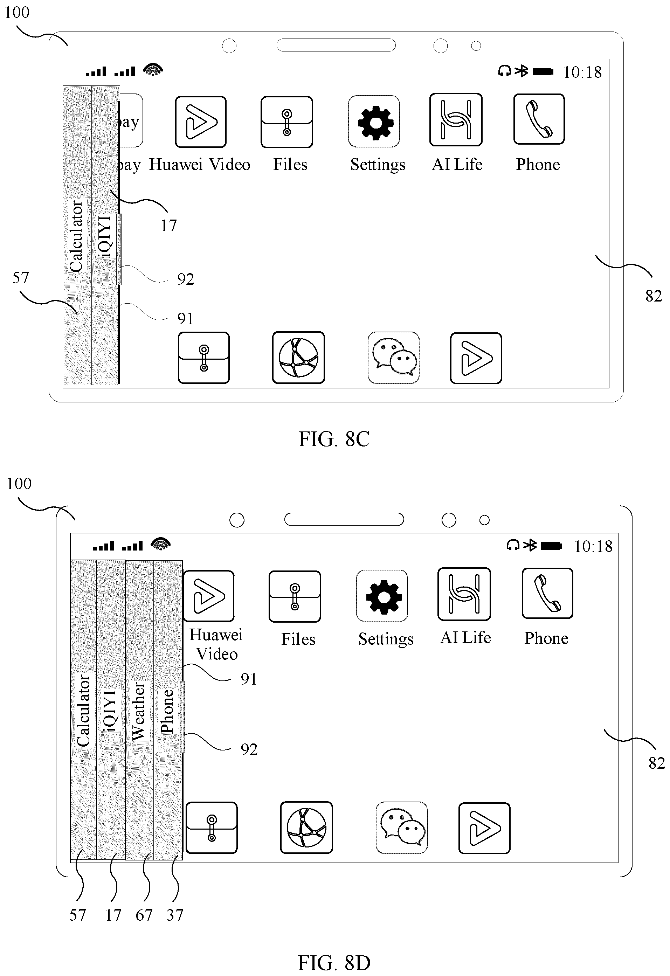

After creating the bookmark 57, the user may continue to create the bookmark 17 of the application B1. Specifically, refer to FIG. 8A. After the user performs a slide-up and pause gesture in a gesture hot zone H05, the full-screen window 11 of the application B1 may be switched to a task card 12 of the application B1 (refer to FIG. 8B). After the user drags the task card 12 (used as an example of a movable window of the application B1) to a bookmark hot zone H01, with reference to FIG. 8C, the electronic device 100 may form the bookmark 17 of the application B1.

It may be understood that, on the basis of FIG. 8C, the user may continue to create a bookmark of another application. For example, refer to FIG. 8D. The user may continue to create a bookmark 67 of the application B6 (for example, Weather^{™}), a bookmark 37 of the application B3 (for example, Phone), and the like.

In this embodiment, the electronic device 100 generates a bookmark of an application in a first region of the screen. In the example shown in FIG. 7A to FIG. 8D, the first region is a left side region of the screen. In another example, the first region may alternatively be a right side region of the screen. A reason is as follows: Considering that an upper side region and a lower side region usually have a relatively large quantity of function bars or system buttons (for example, a status bar, a drop-down menu bar, a virtual home button, and a return button), setting the bookmark in the left side region or the right side region can avoid interference with the function bar or the system button of the electronic device 100. In another embodiment, the first region may alternatively be an upper side region, a vertex region, or the like of the screen.

Further, the bookmark hot zone H01 does not overlap a created bookmark in the first region. For example, refer to FIG. 8B. The bookmark hot zone H01 does not overlap the created bookmark 57. On this basis, a position of the bookmark hot zone H01 is not limited in this application.

For example, the bookmark hot zone H01 is located on an inner side of the created bookmark in the first region. For example, refer to FIG. 7C and FIG. 8B. When the first region is a left side region, the bookmark hot zone H01 is located on a right side of the created bookmark in the first region. In another example, when the first region is an upper left vertex region, the bookmark hot zone H01 is located on a lower right side of the created bookmark in the first region. Through such a setting, the bookmark hot zone H01 may be located between the created bookmark in the first region and a to-be-dragged task card, so that the user can conveniently drag the task card to the hot zone H01. This also better conforms to an operation habit of the user.

Further, refer to FIG. 6C and FIG. 7A. The bookmark hot zone H01 may be set adjacent to the created bookmark in the first region, to further improve operation experience of the user. For example, refer to FIG. 8B. The bookmark hot zone H01 and the bookmark 57 are adjacently set (a distance between the two is less than a preset value (for example, 5 pixels)). In addition, when no created bookmark exists in the first region, the bookmark hot zone H01 may be set adjacent to a side edge/vertex corresponding to the first region. For example, refer to FIG. 7C. The bookmark hot zone H01 and the left side edge 103 of the screen are adjacently set (a distance between the two is less than a preset value (for example, 5 pixels)).

In this embodiment, the bookmark hot zone H01 may have a specified boundary. For example, refer to FIG. 7C and FIG. 8B. A left boundary of the bookmark hot zone H01 is a right boundary of the created bookmark in the first region (when no bookmark is created, the left boundary of the bookmark hot zone H01 is the left side edge 103 of the screen), a right boundary is the center line S2 of the screen in the width direction, an upper boundary is a bottom edge of a status bar, and a lower boundary is the center line S1 of the screen in the height direction. It may be understood that, in this embodiment, as a quantity of bookmarks increases, an area of the bookmark hot zone H01 decreases accordingly.

In another embodiment, the bookmark hot zone H01 may have a specified size instead of a specified boundary. For example, in some embodiments, the left boundary of the bookmark hot zone H01 is still the right boundary of the created bookmark in the first region, but a width of the bookmark hot zone H01 is a specified value (for example, 1/4 of the screen width). In this embodiment, the right boundary of the bookmark hot zone H01 moves rightward as a quantity of bookmarks increases.

Refer to FIG. 8D. In this embodiment, a plurality of bookmarks (bookmarks 57, 17, 67, 47, and 37) are arranged in a grid manner. Specifically, the plurality of bookmarks are sequentially arranged along the width direction of the screen, the bookmarks do not overlap each other, and a distance between adjacent bookmarks may be less than a preset value (for example, 2 pixels). In addition, each bookmark may be in a long strip shape extending along the left side edge. In this embodiment, the bookmarks have a same width.

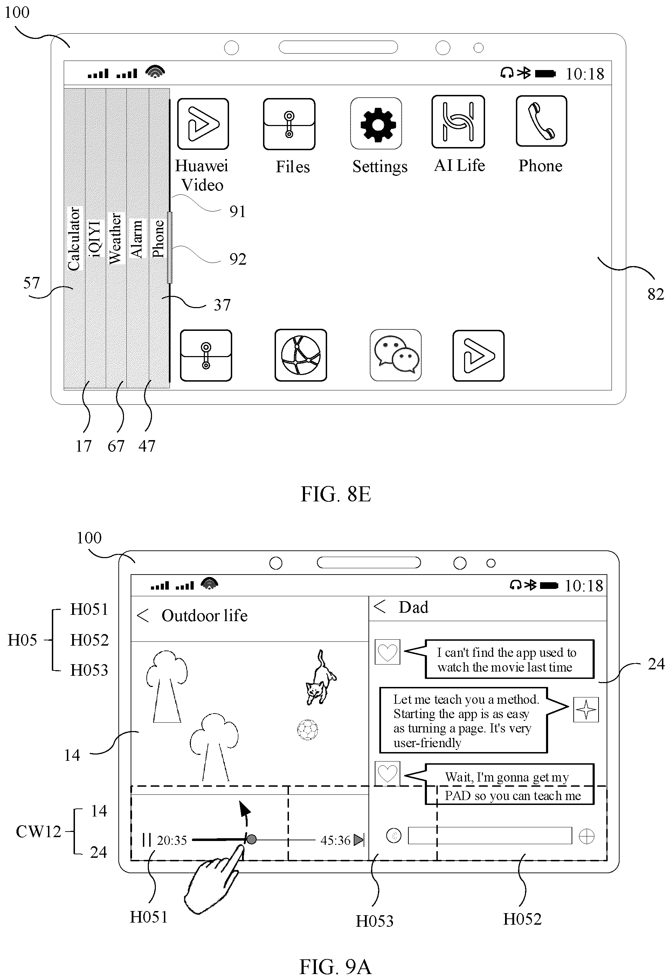

In some other embodiments, refer to FIG. 8E. The bookmarks may have different widths. For example, a middle bookmark has a relatively large width, and bookmarks on two sides have relatively small widths. In this way, the bookmarks may be similar to books arranged on a rotary bookshelf (a rotating shaft is parallel to the height direction of the screen) (in this embodiment, the bookmarks 57, 17, 67, 47, and 37 are all located on a front side of the rotary bookshelf), to have better visual effect. In addition, in another embodiment, the plurality of bookmarks may be alternatively arranged along the height direction of the screen, or arranged in a manner of a two-dimensional matrix. This is not limited in this application.

In some other embodiments, a display interface of the electronic device may display some bookmarks in created bookmarks, and the user may switch the displayed bookmarks. For example, the bookmarks may be similar to books arranged on a rotary bookshelf (a rotating shaft is parallel to the height direction of the screen), and are 360° arranged around the rotating shaft. In this embodiment, the electronic device may display only a bookmark located on a front side of the bookshelf, but not display a bookmark located on a rear side of the bookshelf. When the user drags a bookmark, all bookmarks move along a dragging direction (to form rotation effect of the bookshelf), to switch the bookmark on the rear side of the bookshelf to the front side of the bookshelf, thereby switching the displayed bookmark. In this embodiment, a quantity of bookmarks displayed in the display interface may be reduced, to reduce blocking of the bookmarks on another user interface.

In addition, refer to FIG. 7D and FIG. 8C to FIG. 8E. The electronic device 100 may further add a screen splitting line 91 on an inner side of the created bookmark, to distinguish a bookmark region from another display region. In addition, the screen splitting line 91 may further include a drag bar 92. Subsequently, when the bookmark is collapsed to a collapsed state because no operation is performed for a long time, the user may switch the bookmark to an expanded state by dragging the drag bar 92 (which is specifically described below). For example, the drag bar 92 is located in the middle of the screen splitting line 91. In another embodiment, the electronic device 100 may alternatively add only the drag bar 92 and not add the screen splitting line 91.

Further, the bookmark may include an application identifier of the application, so that the user identifies the bookmark. For example, refer to FIG. 7D. The bookmark 17 includes an application identifier 13 of the application B1. In this embodiment, the application identifier on the bookmark is an application name. The application identifier on the bookmark may alternatively be in another form, for example, an application icon or a thumbnail of an application user interface.

Further, the bookmark may further display prompt information of the application. For example, when a conversation application receives a new message, when specified time of an alarm clock application arrives, or when a resource file in a browser application is downloaded, a bookmark of the corresponding application may display prompt information of the application. For example, the bookmark may display the prompt information of the application in a manner such as enlarging an application icon, deepening a display color, improving display luminance, or blinking a breathing light.

In the example shown in FIG. 7A to FIG. 8D, an example manner of creating a bookmark from a full-screen window of an application is described. In another example, the user may alternatively create a bookmark of an application from a split-screen window of the application. The following provides specific descriptions.

FIG. 9A to FIG. 9F show an example manner of creating a bookmark from a split-screen window of an application. Specifically, refer to FIG. 9A. A display interface of the electronic device 100 includes a plurality of split-screen windows, which are specifically a split-screen window 14 of the application B1 and a split-screen window 24 of the application B2.

As described above, when the electronic device 100 is in the full-screen display mode, the user may switch the task card of the application by performing the gesture G1 in the gesture hot zone H05. Differently, when the electronic device 100 is in a split-screen display mode, the gesture hot zone H05 is divided into a plurality of sub-hot zones, and different sub-hot zones correspond to different split-screen windows. When the user performs the gesture G1 in different sub-hot zones, corresponding split-screen windows may be switched to task cards.

As shown in FIG. 9A, the gesture hot zone H05 is divided into three sub-hot zones, which are respectively sub-hot zones H051, H052, and H053. For ease of understanding, FIG. 9A shows a position of each sub-hot zone by using a dashed box. The sub-hot zone H051 is located at the bottom of the split-screen window 14, the sub-hot zone H052 is located at the bottom of the split-screen window 24, and the sub-hot zone H053 is located between the sub-hot zones H051 and H052 and crosses the split-screen window 14 and the split-screen window 15. For example, the bookmark hot zones H051, H052, and H053 have a same width. In this example, the sub-hot zone H051 corresponds to the split-screen window 14, the sub-hot zone H052 corresponds to the split-screen window 24, and the sub-hot zone H053 corresponds to a combined split-screen window CW12 of the split-screen window 14 and the split-screen window 24. In this example, a sub-hot zone is located in a split-screen window corresponding to the sub-hot zone, and does not overlap another split-screen window, so that the user can identify a sub-hot zone corresponding to each split-screen window. In another embodiment, a sub-hot zone may not be located in a split-screen window corresponding to the sub-hot zone.

When the user performs a slide-up and pause gesture (used as an example of the gesture G1) in the sub-hot zone, the corresponding split-screen window may be switched to a task card of an application (used as an example of a movable window of the application). A bookmark of the application may be generated by dragging the task card to the bookmark hot zone H01. It may be understood that, in another embodiment, when the user performs the gesture G1 in the sub-hot zone, the corresponding split-screen window may be switched to a movable window in another form, for example, a floating window of the application (for a manner of setting the floating window, refer to the foregoing descriptions about FIG. 7E).

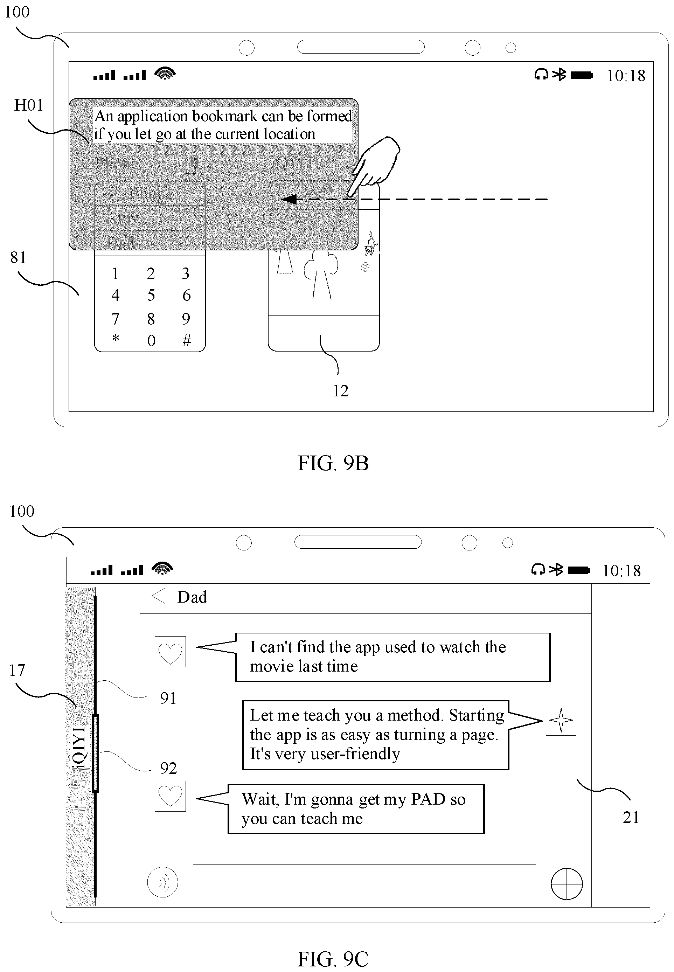

For example, refer to FIG. 9A. When the user performs a slide-up and pause gesture in the bookmark hot zone H051, the application B1 may be included in the desktop multi-task interface 81, to switch the split-screen window 14 of the application B1 to a task card 12 of the application B1 (as shown in FIG. 9B). Then, the user may drag the task card 12 of the application B1 to the bookmark hot zone H01, and release the task card 12 in the bookmark hot zone H01. In this case, refer to FIG. 9C. The electronic device 100 may generate a bookmark 17 of the application B1. In addition, because the application B2 is not included in the desktop multi-task interface 81, the electronic device 100 returns to a full-screen window 21 of the application B2. It may be understood that, in another embodiment, when the user performs a slide-up and pause gesture in the bookmark hot zone H052, the split-screen window 24 of the application B2 may be switched to a task card 22 of the application B2.

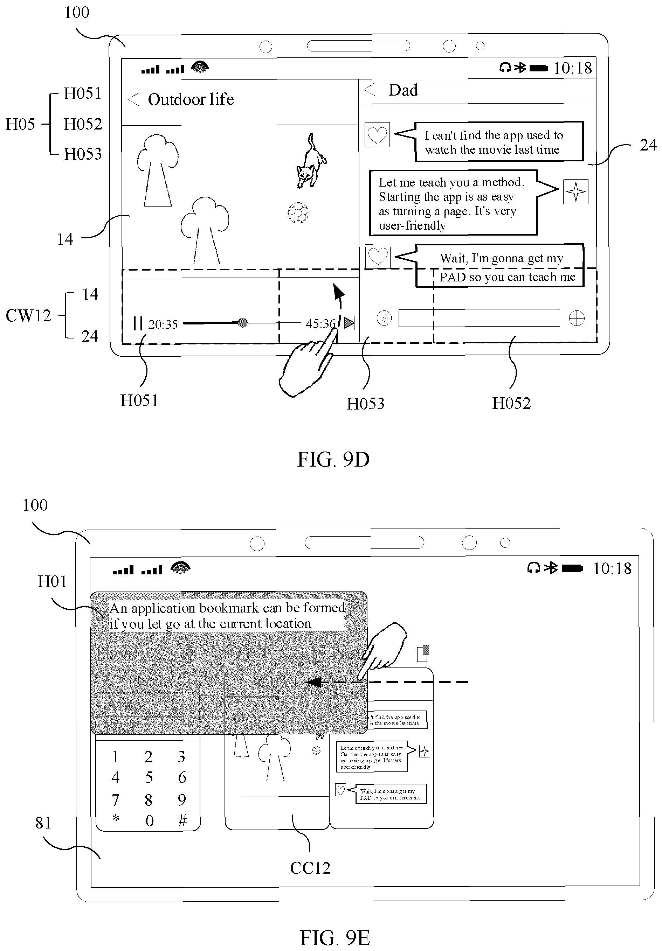

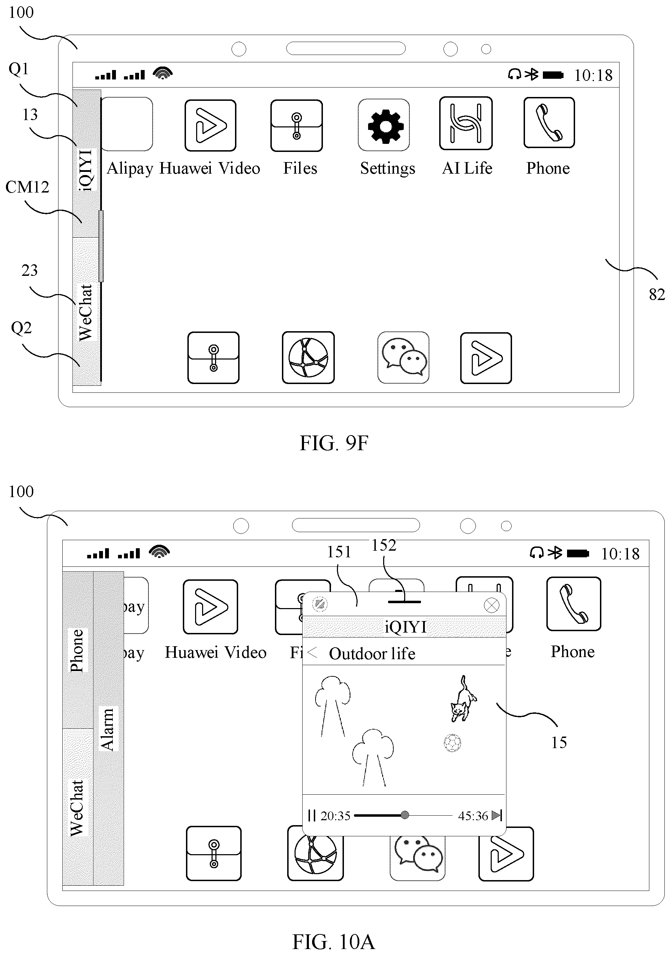

For another example, refer to FIG. 9D. When the user performs a slide-up and pause gesture in the bookmark hot zone H053, the application B1 and the application B2 may be simultaneously included in the desktop multi-task interface 81, to switch the combined split-screen window CW12 of the application B1 and the application B2 to a combined task card CC12 (used as an example of a combined movable window) of the application B1 and the application B2 (as shown in FIG. 9E). Then, the user may drag the combined task card CC12 to the bookmark hot zone H01, and release the task card CC12 in the bookmark hot zone H01. In this case, refer to FIG. 9F. The electronic device 100 may generate a combined bookmark CM12 of the application B1 and the application B2. In addition, because both the application B1 and the application B2 are included in the desktop multi-task interface 81, the electronic device 100 returns to the desktop 82.

In the foregoing example, the gesture G1 is performed in different sub-hot zones, to switch different split-screen windows to task cards. In another embodiment, a binding operation (referred to as a "first binding operation" below) may be first performed on a plurality of split-screen windows, to bind the plurality of split-screen windows into a combined split-screen window. Then, the gesture G1 is performed in the gesture hot zone H05, that is, the combined split-screen window may be switched to a corresponding combined movable window. A specific manner of the first binding operation is not limited in this embodiment. For example, the first binding operation may be a knuckle operation of sequentially tapping a plurality of bound split-screen windows, a drawing operation that runs through a plurality of bound windows, or the like. When a display interface is a multi-split-screen interface (an interface with three or more split screens), in this embodiment, a bound split-screen window may be flexibly selected, so that an application bookmark may be flexibly formed.

In the foregoing descriptions, some bookmarks correspond to one application. For example, the bookmark 17 in FIG. 7D corresponds to the application B1, and the bookmark 57 shown in FIG. 8C corresponds to the application B5. In this specification, a bookmark corresponding to one application is referred to as a "single bookmark". In addition, some bookmarks correspond to a plurality of applications. For example, the bookmark CM12 shown in FIG. 9F corresponds to the application B1 and the application B2. In this specification, a bookmark corresponding to a plurality of applications is referred to as a "combined bookmark".

The combined bookmark may include application identifiers of the plurality of applications corresponding to the combined bookmark. For example, refer to FIG. 9F. The bookmark CM12 includes an application identifier 13 of the application B1 and an application identifier 23 of the application B2. In addition, the combined bookmark may be further divided into a plurality of sub-regions, and the plurality of sub-regions one-to-one correspond to the plurality of applications corresponding to the combined bookmark. For example, refer to FIG. 9F. The combined bookmark CM12 is divided into two sub-regions: a sub-region Q1 and a sub-region Q2. The sub-region Q1 corresponds to the application B1 (the identifier 13 of the application B1 is located in the sub-region Q1), and the sub-region Q2 corresponds to the application B2 (the identifier 23 of the application B2 is located in the sub-region Q2). In addition, different sub-regions may have different appearances (for example, colors). For example, the sub-region Q1 is yellow, and the sub-region Q2 is gray.

The foregoing describes an example manner of creating a bookmark from a fixed window (for example, a full-screen window or a split-screen window) of an application. Because a position of the fixed window cannot be freely changed, when the bookmark is created by using the fixed window, the fixed window of the application is first switched to a movable window (for example, a task card or a floating window) of the application, and then the movable window of the application is moved to the bookmark hot zone H01, to create the bookmark of the application.

The following describes a manner of creating a bookmark from a floating window of an application. Because the floating window is a movable window, a user may directly drag the floating window of the application to the bookmark hot zone H01, to create the bookmark of the application.

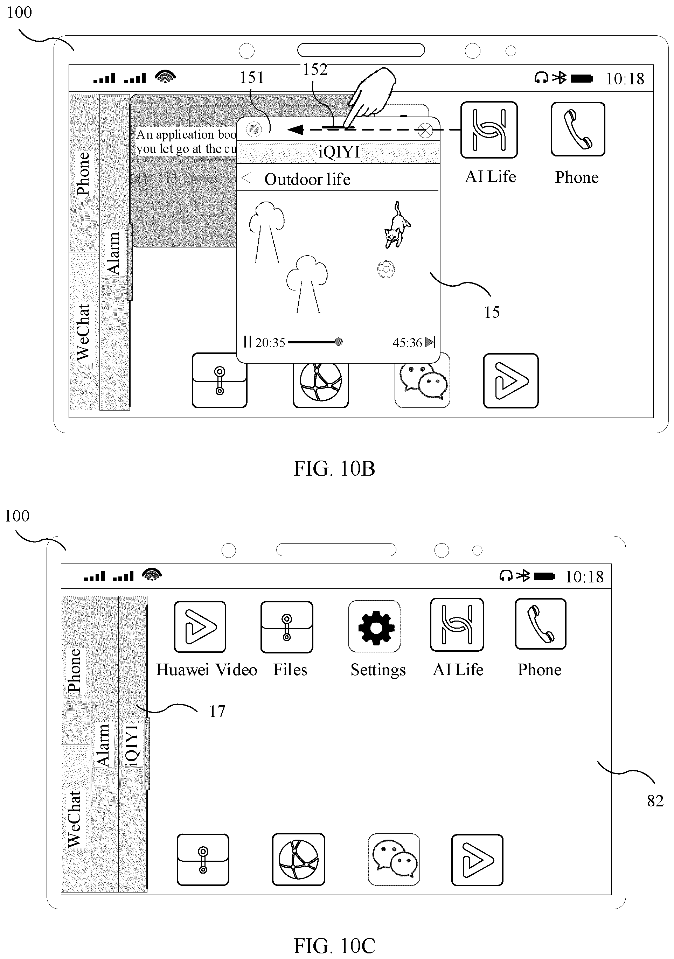

FIG. 10A to FIG. 10C show an example manner of creating a bookmark from a floating window of an application. Specifically, refer to FIG. 10A. A display interface of the electronic device 100 includes a floating window 15 of the application B1. Refer to FIG. 10B. The user may directly drag the floating window 15 to drag the floating window 15 to the bookmark hot zone H01. When the user releases the floating window 15 in the bookmark hot zone H01 (for example, lets go), the electronic device 100 may generate a bookmark 17 of the application B1 (as shown in FIG. 10C). For example, the user may drag the floating window 15 by dragging a specified position (for example, a title bar 151 or a drag control 152) of the floating window 15.

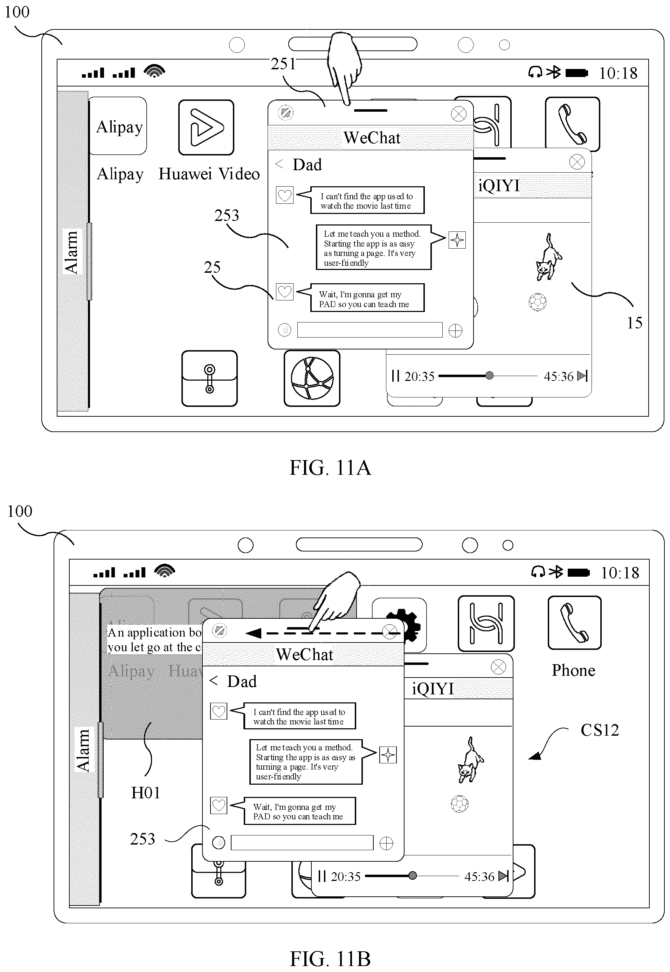

FIG. 11A to FIG. 11C show another example manner of creating a bookmark from a floating window of an application. Specifically, refer to FIG. 11A. A display interface of the electronic device 100 includes a floating window 15 of the application B1 and a floating window 25 of the application B2. The floating window 15 and the floating window 25 overlap each other, and a ratio of an area of an overlapping region to an area of a single floating window (for example, the floating window 15) exceeds a specified value (for example, 30%). In this case, the user may bind the floating window 15 and the floating window 25 into a combined floating window CS12 by using a binding operation (referred to as a "second binding operation"). A specific manner of the second binding operation is not limited in this application. For example, in some embodiments, refer to FIG. 11A. The second binding operation is a touch and hold operation on a specified region (for example, a title bar 251) of an upper-layer floating window (that is, the floating window 25). However, this application is not limited thereto. For example, in some other embodiments, the second binding operation is a slide gesture operation across the floating window 15 and the floating window 25.

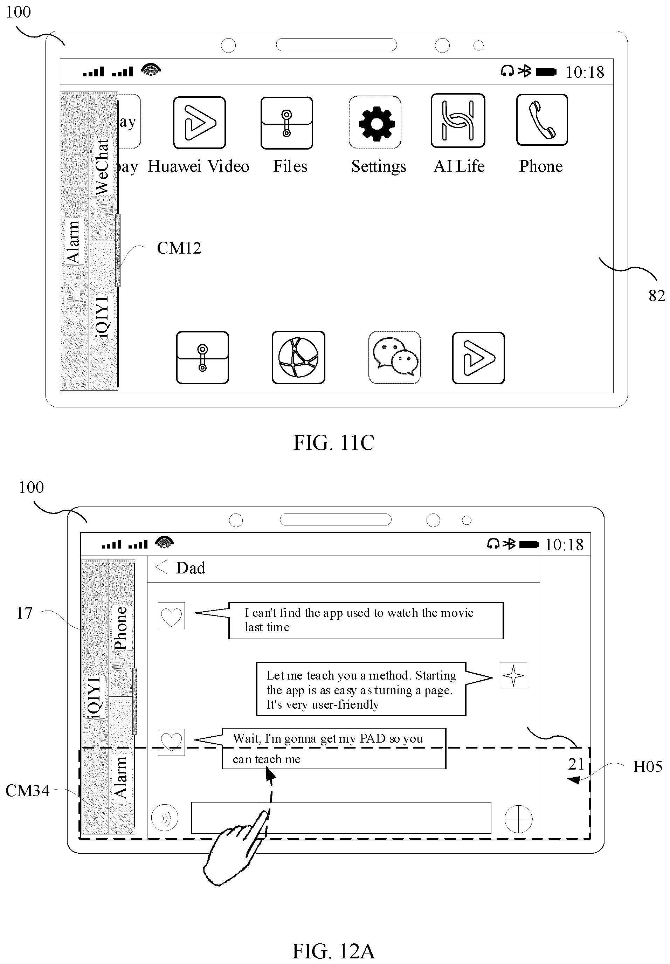

After the floating window 15 and the floating window 25 are bound into the combined floating window CS12, with reference to FIG. 11B, the user may drag the combined floating window CS12 to the bookmark hot zone H01, and release the combined floating window CS12 in the bookmark hot zone H01. In this case, refer to FIG. 11C. The electronic device 100 may generate a combined bookmark CM12 of the application B1 and the application B2.

In some embodiments, in a process of dragging the combined floating window CS12, if the user wants to unbind the floating window 15 from the floating window 25, the user may further perform an unbinding operation on the floating window 15 and the floating window 25. A specific manner of the unbinding operation is not limited in this embodiment. For example, in some embodiments, the unbinding operation is a tap operation on a specified region (for example, a content bar 253) of the upper-layer floating window (that is, the floating window 25). After performing the unbinding operation, the user may unbind the floating window 15 from the floating window 25. In this case, the user may drag a single floating window (for example, the floating window 25) to the bookmark hot zone H01, to generate a bookmark of the application B2.

In some embodiments, when a ratio of an area of a dragged object (for example, the floating window 15 or the combined floating window CS12) in the bookmark hot zone H01 to a total area of the dragged object exceeds a specified value (for example, 30%), it may be considered that the dragged object is dragged to the bookmark hot zone H01. In some other embodiments, when an action position of the user on the dragged object (for example, a position at which a finger of the user presses the floating window 15 or the combined floating window CS12) is in the bookmark hot zone H01, it may be considered that the dragged object is dragged to the bookmark hot zone H01.

In the foregoing example, the user may create a bookmark of an application by dragging an application window to the bookmark hot zone H01. When the window of the application is a fixed window (for example, a full-screen window or a split-screen window), the application window may be indirectly dragged to the bookmark hot zone H01 (for example, the application window is first switched to a movable window (for example, a task card or a floating window), and then the movable window is dragged to the bookmark hot zone H01). When the window of the application is a floating window, the application window may be directly dragged to the bookmark hot zone H01. As described above, the bookmark hot zone H01 is a region that does not overlap a created bookmark.

In some other embodiments of this application, the user may further drag a window of an application to a created bookmark, to form a combined bookmark of the application and another application. The following provides specific descriptions.

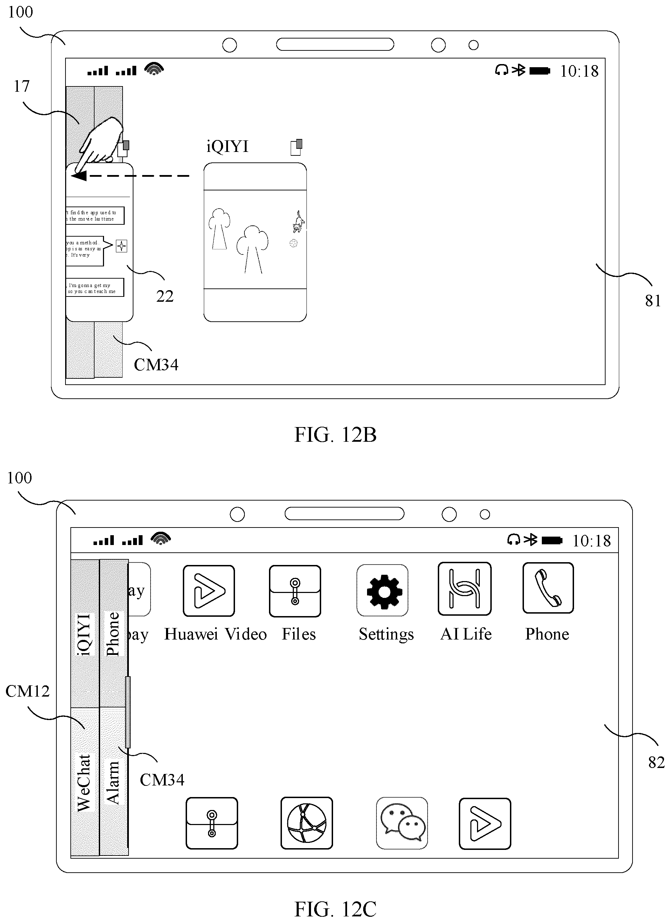

In some embodiments, refer to FIG. 12A. A display interface of the electronic device 100 includes a bookmark 17 of the application B1 and a full-screen window 21 of the application B2. Same as the foregoing example, when the user performs a slide-up and pause gesture (used as an example of the gesture G1) in the gesture hot zone H05, with reference to FIG. 12B, the full-screen window 21 of the application B2 may be switched to a task card 22 of the application B2 (used as an example of a movable window of the application B2). Different from the foregoing example, in the desktop multi-task interface 81, the user does not drag the task card 22 to the bookmark hot zone H01, but drags the task card 22 to the bookmark 17. When the user drags the task card 22 to the bookmark 17 and releases the task card 22 (for example, lets go), as shown in FIG. 12C, the electronic device 100 may generate a combined bookmark CM12 of the application B1 and the application B2. For example, when an action position of the user on the task card 22 (for example, a position at which a finger of the user presses the task card 22) is at a position of the bookmark 17, it may be considered that the user drags the task card 12 to the bookmark 17. It may be understood that, in another embodiment, the movable window of the application B2 may alternatively be a floating window of the application B2.

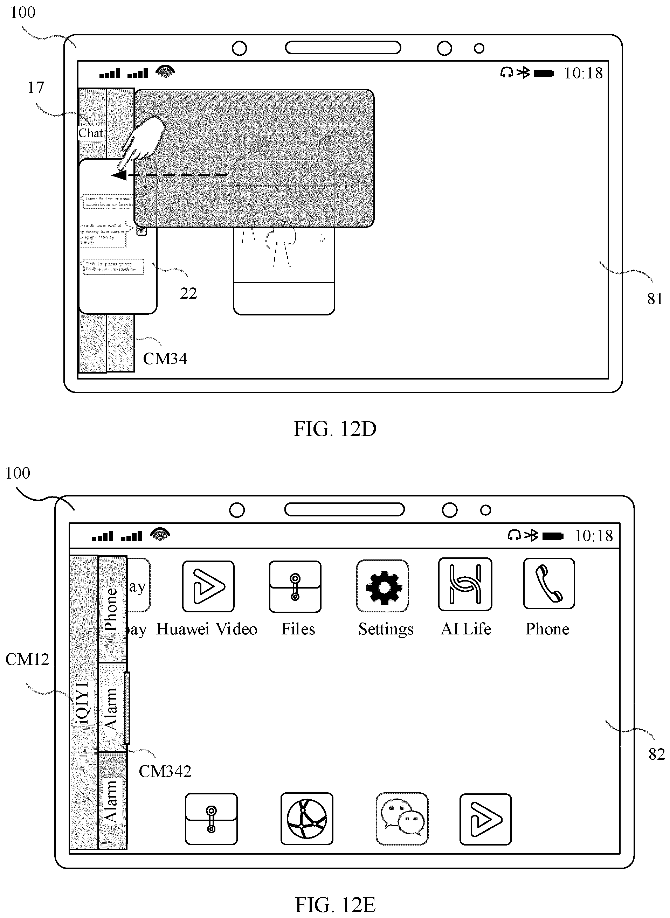

In some other embodiments, refer to FIG. 12A. A display interface of the electronic device 100 includes a combined bookmark CM34 of the application B3 (for example, Phone) and the application B4 (for example, Alarm). The combined bookmark CM34 may be created based on a combined split-screen window of the application B3 and the application B4 (for a creation manner, refer to the foregoing descriptions about FIG. 9E and FIG. 9F), or may be created based on a combined floating window of the application B3 and the application B4 (for a creation manner, refer to the foregoing descriptions about FIG. 12B and FIG. 12C). Refer to FIG. 12D. When the user drags the task card 22 of the application B2 to the combined bookmark CM34 and lets go, the electronic device 100 may generate a combined bookmark CM342 of the application B3, the application B4, and the application B2 (as shown in FIG. 12E).

In the example shown in FIG. 12A to FIG. 12E, the user forms, based on a full-screen window of an application, a combined bookmark of the application and another application (an application corresponding to a created bookmark). However, it may be understood that this application is not limited thereto. In another embodiment, the user may alternatively form, based on a split-screen window or a floating window of an application, a combined bookmark of the application and another application. For example, the user may switch out the task card 22 of the application B2 based on a split-screen window of the application B2 (for a specific operation method, refer to the foregoing descriptions about FIG. 9A and FIG. 9B). The combined bookmark CM12 of the application B1 and the application B2 may be formed by dragging the task card 22 to the bookmark 17. For another example, the user may drag the floating window 25 of the application B2 to the bookmark 17, to form the combined bookmark CM12 of the application B1 and the application B2.

In some other embodiments, the user may drag (which may be directly dragging or indirectly dragging) a combined window (for example, a combined split-screen window or a combined floating window) to a created bookmark, to form a combined bookmark.

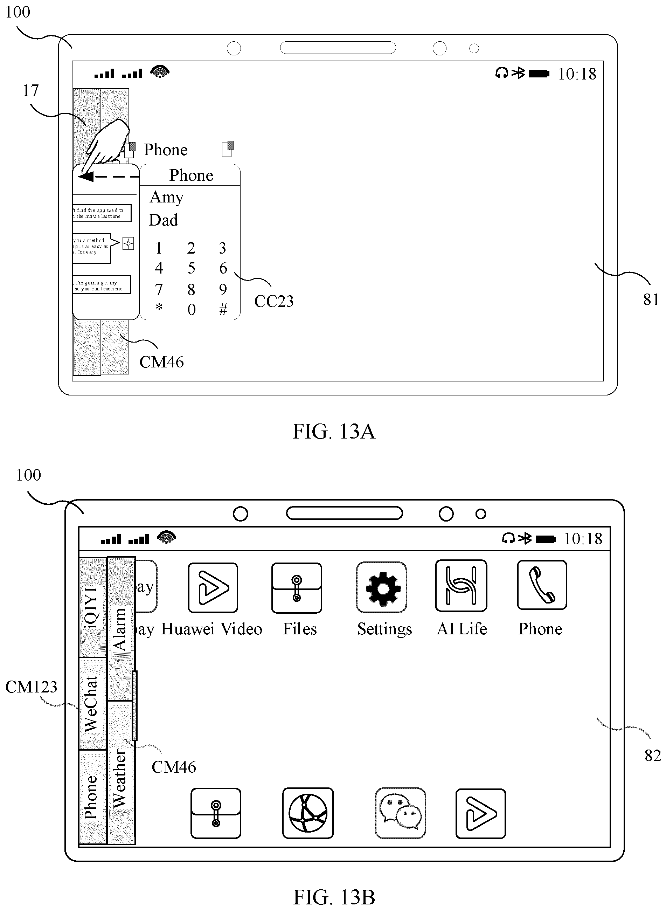

For example, refer to FIG. 13A. The user may switch out a combined task card CC23 of the application B2 and the application B3 based on a combined split-screen window of the application B2 and the application B3 (for a manner of switching out the combined task card CC23, refer to the foregoing descriptions about FIG. 9D and FIG. 9E). Then, when the user drags the combined task card CC23 to the bookmark 17 and lets go, the electronic device 100 may form a combined bookmark CM123 of the application B1, the application B2, and the application B3 (refer to FIG. 13B). In addition, it may be understood that when the user drags the combined task card CC23 to a combined bookmark CM46 of the application B4 (for example, Alarm) and the application B6 (for example, Weather), a combined bookmark CM4623 of the application B4, the application B6, the application B2, and the application B3 may be formed (that is, the bookmark CM4623 corresponds to four applications).

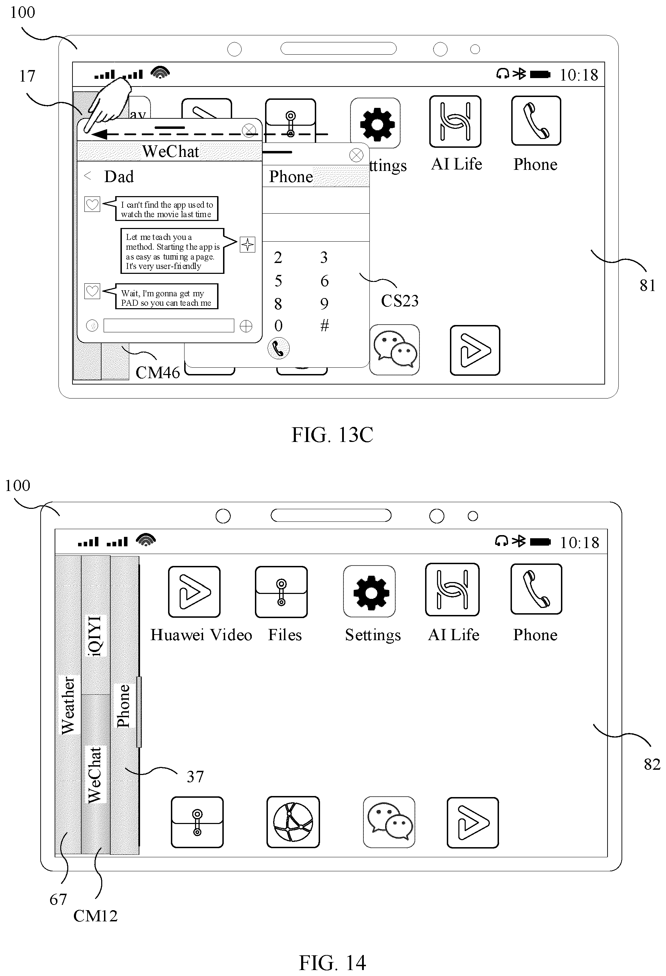

For another example, refer to FIG. 13C. When the user drags a combined floating window CS23 of the application B2 and the application B3 (for a manner of forming the combined floating window CS23, refer to the foregoing descriptions about FIG. 11A and FIG. 11B) to the bookmark 17 and lets go, the combined bookmark CM123 of the application B1, the application B2, and the application B3 may also be formed (refer to FIG. 13B).

The foregoing describes an example manner of creating a bookmark, and the following describes an example manner of using a bookmark. The following uses a bookmark shown in FIG. 14 as an example for description. Refer to FIG. 14. A user creates a plurality of bookmarks in a first region, which are respectively a bookmark 37 of the application B3, a combined bookmark CM12 of the application B1 and the application B2, and a bookmark 67 of the application B6. A manner of creating a bookmark is not limited in this application. For example, the bookmark 37 may be a bookmark created based on a full-screen window of the application B3, or may be a bookmark created based on a split-screen window or a floating window of the application B3. The combined bookmark CM12 may be a bookmark created based on a combined split-screen window of the applications B1 and B2, or may be a bookmark created based on a combined floating window of the applications B1 and B2, or may be a bookmark created by dragging a window of the application B2 to a bookmark 17 of the application B1.

In this embodiment, operations on the bookmark may include the following.

### (1) Application open operation (or referred to as a "sixth operation")

The application open operation is used to open an application corresponding to the bookmark. That is, when the user performs the application open operation on the bookmark, the bookmark may be restored to a window of the application. In this embodiment, a bookmark in the first region is used to be restored to a fixed window of an application. In another embodiment, a bookmark in the first region may be alternatively restored to a floating window of an application. In addition, in this embodiment, a bookmark open operation is a tap operation on the bookmark. This application is not limited thereto. In another embodiment, a bookmark open operation may alternatively be another operation, for example, a knuckle operation on the bookmark.

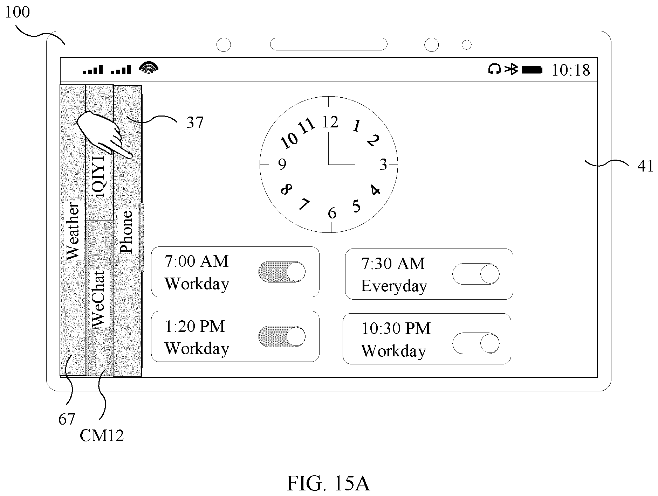

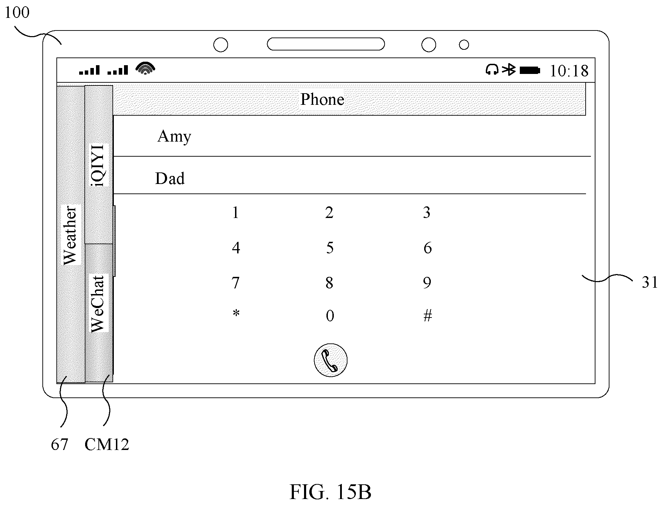

When the bookmark open operation is performed on a single bookmark, a full-screen window of an application corresponding to the bookmark is opened. For example, refer to FIG. 15A. An application currently used by the user is the application B4 (for example, a display interface of the electronic device 100 includes a full-screen window 41 of the application B1). When the user taps the bookmark 37 (used as an example of the single bookmark), with reference to FIG. 15B, the electronic device 100 switches the full-screen window 41 of the application B4 to a full-screen window 31 of the application B3 (the application B4 may be exited and run in the background). In other words, in this embodiment, the user only needs to perform an operation on the bookmark 37, to switch the currently used application from the application B4 to the application B3. Compared with the manner shown in FIG. 3 A to FIG. 5C, an application switching operation is significantly simplified.

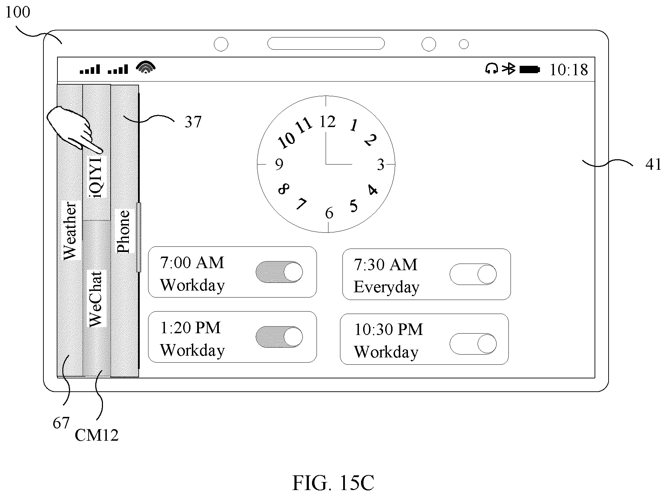

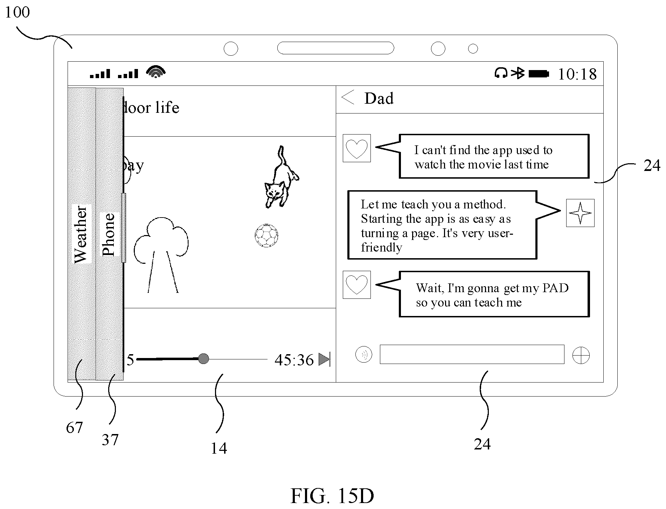

When the application open operation is performed on a combined bookmark, split-screen windows of a plurality of applications corresponding to the bookmark are opened. For another example, refer to FIG. 15C. An application currently used by the user is the application B4. When the user taps the combined bookmark CM12, with reference to FIG. 15D, the electronic device 100 switches the full-screen window 41 of the application B4 to the split-screen window 14 of the application B1 and the split-screen window 24 of the application B2. In this embodiment, the split-screen windows are arranged in the width direction of the electronic device 100. In another embodiment, the split-screen windows may be alternatively arranged in the height direction of the electronic device 100. In addition, it may be understood that, in another embodiment, when the combined bookmark tapped by the user corresponds to three or more applications, the electronic device 100 may display a three-split-screen window or a multi-split-screen (more than three split screens) window.

It may be understood that, in another embodiment, there may be no application currently used by the user on the electronic device 100. In this case, a bookmark may be located on a desktop of the electronic device 100 (for example, in a state shown in FIG. 14). In this embodiment, after tapping the bookmark, the user may open an application corresponding to the bookmark. In this embodiment, the user may open an application by tapping a bookmark, and does not need to open the application by using a desktop icon of the application, thereby reducing work of searching for the desktop icon.

### (2) Application preview operation (or referred to as a "seventh operation")

When the user performs the application preview operation on a bookmark, the electronic device 100 may display a thumbnail of a user interface of an application corresponding to the bookmark. In this embodiment, the application preview operation is a touch and hold operation on the bookmark. In another embodiment, the application preview operation may alternatively be another operation, for example, a double-tap operation on the bookmark.

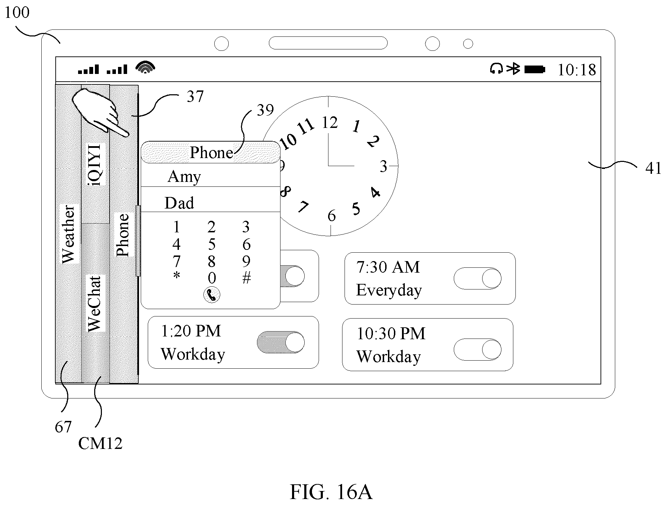

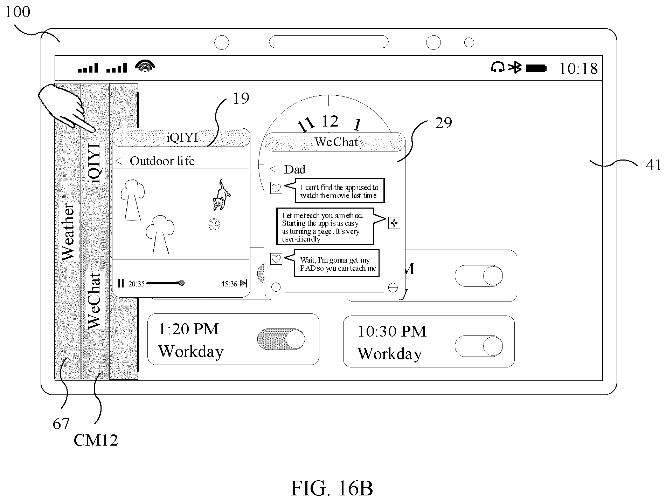

For example, refer to FIG. 16A. When the user performs a touch and hold operation on the bookmark 37, the electronic device 100 may display a thumbnail 39 of a user interface of the application B3. For another example, refer to FIG. 16B. When the user performs a touch and hold operation on the combined bookmark CM12, the electronic device 100 may display a thumbnail 19 of a user interface of the application B1 and a thumbnail 29 of a user interface of the application B2. For example, a thumbnail may be located near a corresponding bookmark. For example, in FIG. 16A, the thumbnail 39 is located near the bookmark 37.

In addition, in this embodiment, when the user releases the touch and hold operation on the bookmark, the thumbnail corresponding to the bookmark also disappears accordingly. For example, in FIG. 16A, when the user lets go, the thumbnail 38 disappears accordingly. In another embodiment, the thumbnail may alternatively automatically disappear after being displayed for specified duration (for example, 5s).

In this embodiment of this application, when the user performs the application preview operation on a bookmark, the electronic device 100 may display a thumbnail of an application corresponding to the bookmark, so that the user can quickly learn of an application status.

### (3) Focus bookmark designation operation

The focus bookmark designation operation is used to designate a focus bookmark in created bookmarks. In this embodiment, a function of the focus bookmark is as follows: When the user opens an application (referred to as a "target application" below) in a manner other than operating a bookmark, the electronic device 100 displays, in a split-screen display mode, windows of the target application and an application corresponding to the focus bookmark (referred to as a "focus application" below). A manner of opening the target application may be tapping a desktop icon, an FA card, a dock bar icon, or the like of the target application. This is not limited in this application.

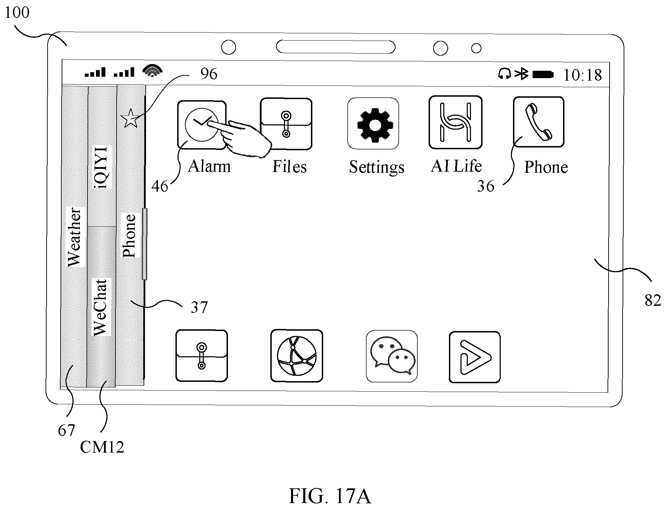

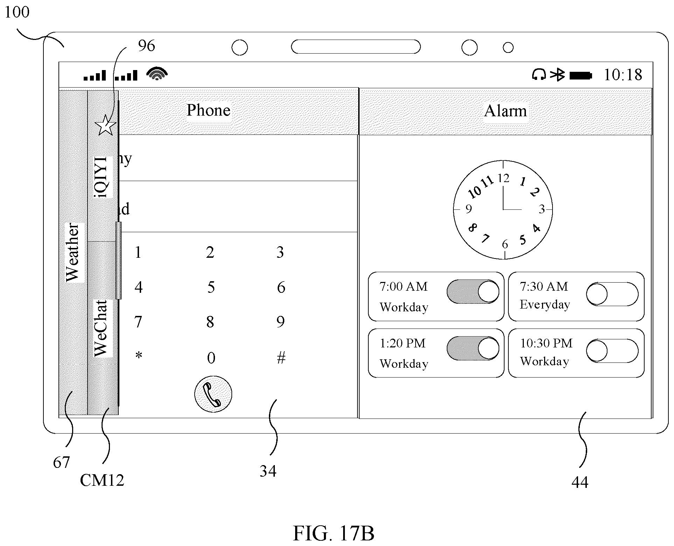

For example, refer to FIG. 17A. The bookmark 37 is a focus bookmark (for ease of identification by the user, a focus mark 96 may be set on the focus bookmark). When the user opens the application B4 by tapping a desktop icon 46 of the application B4, as shown in FIG. 17B, the electronic device 100 displays windows of the application B3 and the application B4 in the split-screen display mode (that is, displays a split-screen window 34 of the application B3 and a split-screen window 44 of the application B4). For example, after the bookmark 37 is restored to the split-screen window 34 of the application B3, the combined bookmark CM12 becomes a new focus bookmark.

In this embodiment, the focus bookmark is set, so that the electronic device 100 may simultaneously display a plurality of applications, to facilitate the user to simultaneously use the plurality of applications.

In addition, in some other embodiments, the target application may be an application corresponding to the focus bookmark. For example, refer to FIG. 17A. The target application is the application B3 (that is, an application corresponding to the focus bookmark 37). It may be understood that the user may open the application B3 by tapping a desktop icon 36. In this embodiment of this application, when the user opens the application B3 in a manner other than operating the bookmark 37 (for example, a manner of tapping the desktop icon 36), the electronic device displays a full-screen window of the application B3, and the bookmark 37 may disappear.

In some other embodiments, although the target application is not an application corresponding to the focus bookmark, the target application may be an application corresponding to another created bookmark. Still refer to FIG. 17A. The target application is the application B6 (an application corresponding to the bookmark 67). When the user opens the application B6 in a manner other than operating the bookmark 67 (for example, a manner of tapping a desktop icon of the application B3), the electronic device displays a split-screen window of the application B3 (that is, an application corresponding to the focus bookmark) and a split-screen window of the application B6 (that is, the target application). At the same time, the bookmark 67 may disappear.

In some other embodiments, the target application is one of applications corresponding to a combined bookmark. For example, refer to FIG. 17A. The target application is the application B1 (one of applications corresponding to the combined bookmark CM12). In this embodiment, when the user opens the application B1 in a manner other than operating the bookmark CM12 (for example, a manner of tapping an FA card of the application B1), the electronic device displays a split-screen window of the application B3 (that is, an application corresponding to the focus bookmark) and a split-screen window of the application B1 (that is, the target application). In addition, the bookmark CM12 is switched to a single bookmark of the application B2.

The following describes a focus bookmark determining manner.

In this embodiment, when the user does not designate the focus bookmark, the electronic device 100 uses an innermost bookmark (for example, the bookmark 37 in FIG. 17A or the bookmark CM12 in FIG. 17B) as the focus bookmark by default. When the user wants to change the focus bookmark, the user may further perform the focus bookmark designation operation on a specific bookmark to designate the bookmark as a focus bookmark.

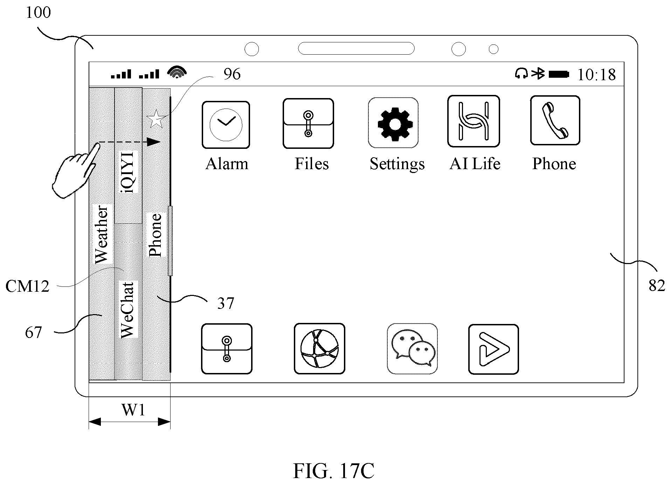

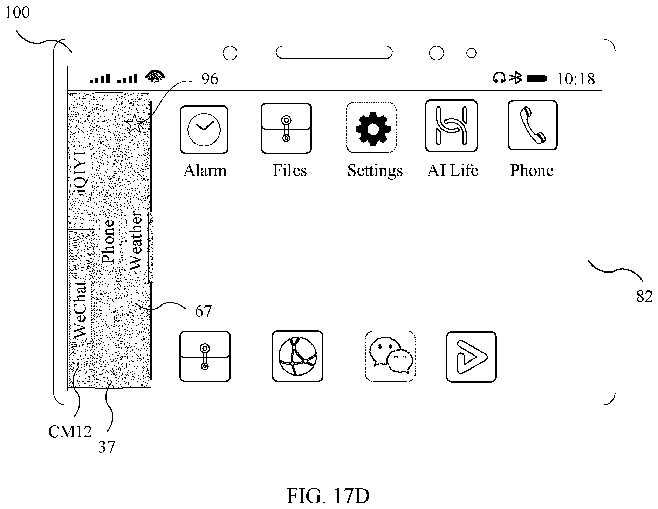

In this embodiment, when moving a bookmark to an innermost side of a created bookmark in the first region, the user may designate the bookmark as a focus bookmark. A specific manner of moving a bookmark is not limited in this application. For example, refer to FIG. 17C. When the user wants to designate the bookmark 67 as a focus bookmark, the user may drag the bookmark 67 rightward, so that bookmarks sequentially move rightward in a head to tail manner, until the bookmark 67 is dragged to the innermost side of the created bookmark (as shown in FIG. 17D). In this case, after the user lets go, the bookmark 67 may be designated as a focus bookmark. In this embodiment, when the user drags the bookmark 67, the bookmarks sequentially move rightward in a head to tail manner, to form effect that the bookmarks rotate around a rotating shaft, so as to improve visual effect. In another embodiment, the bookmark may be alternatively moved in another manner. For example, the bookmark 67 is directly dragged across the bookmark CM12 and the bookmark 37 to the innermost side.

In another embodiment, the user may alternatively designate the focus bookmark in another manner. For example, when the user double-taps a bookmark, the bookmark may be designated as the focus bookmark. In another embodiment, the focus bookmark may be alternatively located at another position, for example, a leftmost position of a created bookmark.

### (4) Bookmark expanding operation

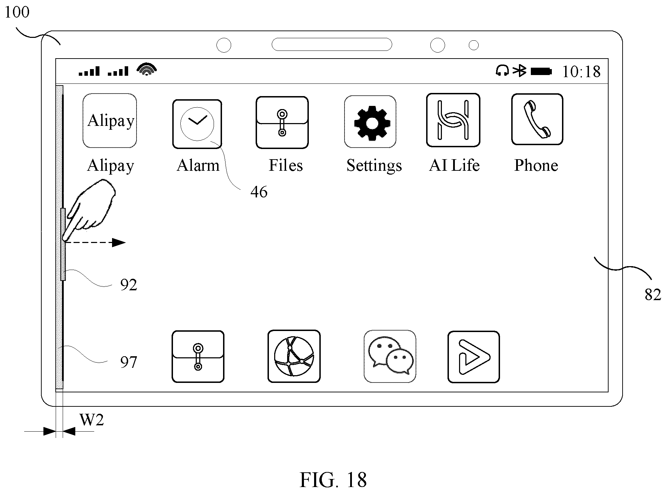

In some embodiments, when the user does not perform an operation on a bookmark in the first region for a long time, the bookmark may be switched from an expanded state to a collapsed state, to reduce an area occupied by the bookmark on the screen. For example, when the user does not perform, within specified duration (for example, within 1 min), an operation (including the tap operation, the touch and hold operation, the drag operation, or the like described above) on bookmarks (including the bookmarks 37, 67, and CM12) shown in FIG. 17C, the bookmarks may be switched from an expanded state shown in FIG. 17C to a collapsed state shown in FIG. 18. For example, in the collapsed state, the bookmarks are collapsed into a narrow bar 97 (a width W2 of the narrow bar 97 is less than a total width W1 of the bookmarks). In the narrow bar 97, a boundary line between different bookmarks disappears, and a plurality of bookmarks are integrated into a whole in appearance.

When the bookmarks are in the collapsed state, the bookmarks are in a "sleep" state, and functions of the bookmarks are unavailable temporarily. For example, the user cannot open, by tapping a bookmark, an application corresponding to the bookmark. For another example, when the bookmark is in the collapsed state, and the user taps the desktop icon 46 of the application B4, the electronic device 100 opens a full-screen window of the application B4, and no longer opens a window of the focus application.

When the user wants to restore a function of the bookmark, the user may perform the bookmark expanding operation, to switch the bookmark from the collapsed state to the expanded state. In this embodiment, the bookmark expanding operation is an operation of dragging a drag bar 92 along a first direction, where the first direction may be toward an inner side of the first region (for example, a direction shown by a dashed arrow in FIG. 18), and a drag distance may be a preset distance (for example, 100 pixels). In another embodiment, the expanding operation may alternatively be another operation, for example, a knuckle operation on the narrow bar. After the user performs the expanding operation on the narrow bar 97, the bookmark is restored to the expanded state (the same state as that in FIG. 17C). After the bookmark is restored to the expanded state, a normal function of the bookmark is restored (for example, the functions described in (1) to (3) above).

In some embodiments, the user may alternatively perform a bookmark collapsing operation, to actively switch the bookmark from the expanded state to the collapsed state. For example, the bookmark collapsing operation is dragging the drag bar 92 along a second direction, where the second direction is a direction opposite to the first direction, and a drag distance may be a preset distance (for example, 50 pixels, or 0.8 times a width of a single bookmark).

In addition, for some Android devices, a region in which the drag bar 92 is located may also be a hot zone of another gesture operation, for example, a hot zone of a side-slide and pause gesture used to invoke the dock bar 86. In this embodiment, a priority of a drag operation on the drag bar 92 may be higher than a priority of another gesture operation in the region in which the drag bar 92 is located, to ensure that the user can switch the bookmark from the collapsed state to the expanded state.

In the foregoing example, the user may create a bookmark of an application in the first region (for example, a left side region) of the screen. In another example, the user may not only create a bookmark in the first region of the screen, but also create a bookmark in a second region of the screen. The first region and the second region do not overlap each other.

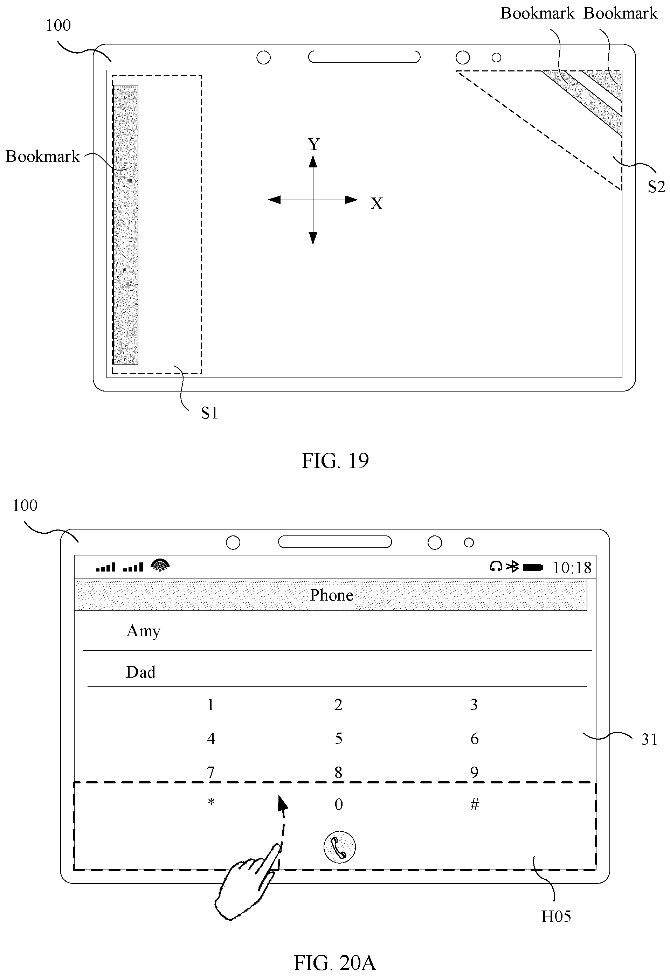

FIG. 19 shows an example setting manner of a first region S1 and a second region S2. The first region S1 may include one or more bookmarks, and the second region S2 may also include one or more bookmarks. For ease of description, in this specification, a bookmark in the first region S1 is referred to as a first-type bookmark, and a bookmark in the second region S2 is referred to as a second-type bookmark.

Along the width direction, the first region S1 and the second region S2 are located on two opposite sides of the screen. For example, refer to FIG. 19. When the first region S1 is located in a left region of the screen, the second region S2 is located in a right region of the screen. In some other embodiments, when the first region S1 is located in a right region of the screen, the second region S2 is located in a left region of the screen. In this embodiment, the first region S1 and the second region S2 are located on two opposite sides of the screen, so that the user can distinguish between the two types of bookmarks.

Further, the first region S1 and the second region S2 correspond to different geometric elements of the screen, to further improve a degree of distinguishing between the two types of bookmarks. For example, when the first region S1 is a side region of the screen, the second region S2 is a vertex region of the screen; or when the first region S1 is a vertex region of the screen, the second region S2 is a side region of the screen.

In this embodiment, a left side region is used as an example of the first region S1, and an upper right vertex region is used as an example of the second region S2. In another embodiment, the first region S1 and the second region S2 may alternatively be other regions, provided that the two regions are different regions.

For a method for creating a bookmark in the first region, refer to the foregoing descriptions. The following describes a method for creating a bookmark in the second region.

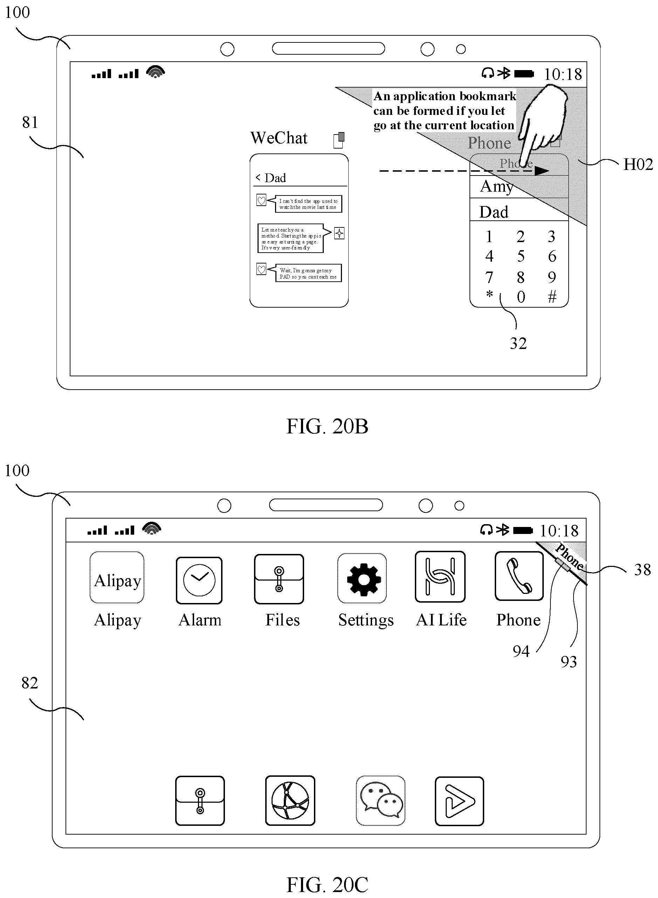

FIG. 20A to FIG. 20C show an example manner of creating a bookmark (that is, creating a second-type bookmark) in the second region. Refer to FIG. 20A. A display interface of the electronic device 100 includes a full-screen window 31 of the application B3. As described above, when the user performs a slide-up and pause gesture (used as an example of the gesture G1) in the gesture hot zone H05, the full-screen window of the application B3 may be switched to a task card 32 of the application B3 (used as an example of a movable window of the application B3) (refer to FIG. 20B). In this case, after the user drags the task card 32 to the bookmark hot zone H02, and releases the task card 32 in the bookmark hot zone H02, the electronic device 100 may generate a bookmark 38 of the third application B3 in the second region (as shown in FIG. 20C). It may be understood that, in another embodiment, the movable window of the application B3 may alternatively be a window in another form, for example, a floating window of the application B3.

In addition, when the user drags the task card 32 to the bookmark hot zone H02, the electronic device 100 may display a position of the bookmark hot zone H02. A prompt manner for the bookmark hot zone H02 is substantially the same as the foregoing prompt manner for the bookmark hot zone H01 (for example, the position of the bookmark hot zone H02 is indicated in a form of a mask). Therefore, reference may be made to the foregoing descriptions, and details are not described again.

In some embodiments, when a ratio of an area of a dragged object (for example, the task card 32) in the bookmark hot zone H02 to a total area of the dragged object exceeds a specified value (for example, 30%), it may be considered that the dragged object is dragged to the bookmark hot zone H02. In some other embodiments, when an action position of the user on the dragged object (for example, the task card 32) (for example, a position at which a finger of the user presses the task card 12) is in the bookmark hot zone H02, it may be considered that the dragged object is dragged to the bookmark hot zone H02.

In the example shown in FIG. 20A to FIG. 20C, the bookmark 37 of the application B3 is the 1^{st} bookmark created by the user in the second region (that is, before the bookmark 38, no created bookmark exists in the second region). In another embodiment, the bookmark 38 may not be the 1^{st} bookmark in the second region.

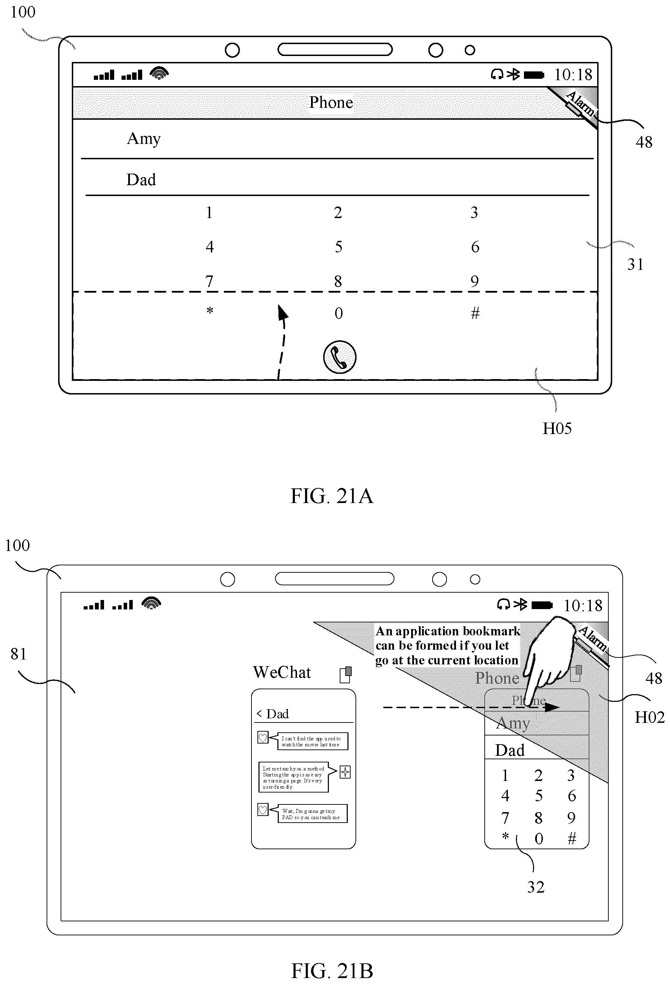

FIG. 21A to FIG. 21C show another example of a bookmark creation method. Specifically, refer to FIG. 21A. The electronic device 100 displays a full-screen window of the application B3 and a bookmark 48 (located in the second region) of the application B4 (for example, Alarm). The bookmark 48 is a bookmark that has been created by the user, and a method for creating the bookmark 48 is substantially the same as a method for creating the bookmark 38 in the example shown in FIG. 20A to FIG. 20C, and details are not described again.

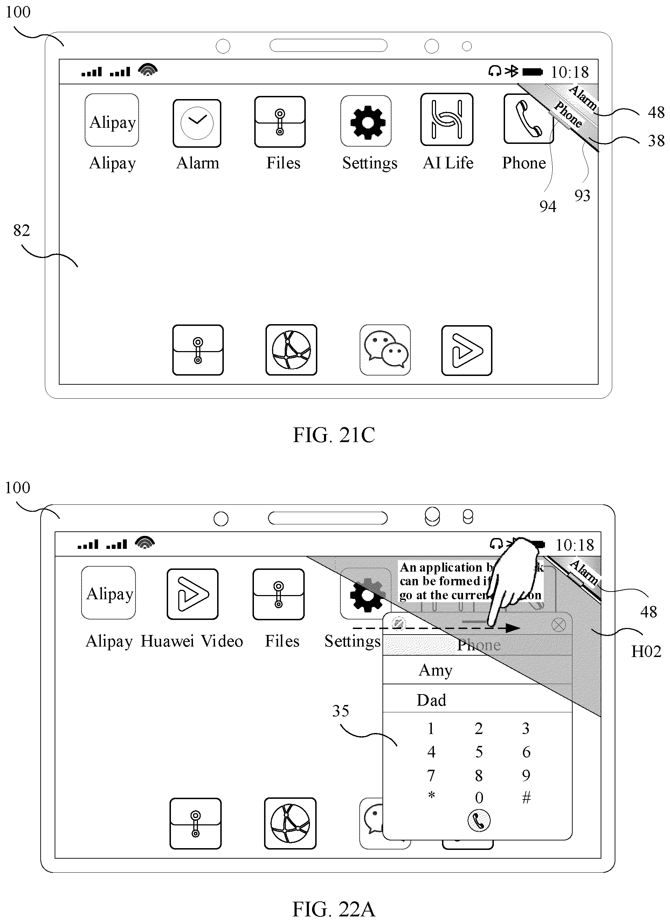

After creating the bookmark 48, the user may continue to create the bookmark 38 of the application B3 in the second region. Specifically, refer to FIG. 21A. After the user performs a slide-up and pause gesture in a gesture hot zone H05, the full-screen window 31 of the application B3 may be switched to a task card 32 of the application B3 (refer to FIG. 21B). After the user drags the task card 32 to the bookmark hot zone H02, with reference to FIG. 21C, the electronic device 100 may form the bookmark 37 of the application B3.

It may be understood that, on the basis of FIG. 21C, the user may continue to create another bookmark in the second region. Details are not described one by one.

Similar to the setting manner of the bookmark hot zone H01, the bookmark hot zone H02 does not overlap a created bookmark in the second region. For example, refer to FIG. 21B. The bookmark hot zone H02 does not overlap the created bookmark 48. On this basis, a position of the bookmark hot zone H02 is not limited in this application, and the bookmark hot zone H02 may be any region different from the bookmark hot zone H01.

For example, the bookmark hot zone H02 is located on an inner side of the created bookmark in the second region. For example, refer to FIG. 20B and FIG. 8B. When the first region is an upper right vertex region, the bookmark hot zone H02 is located on a lower left side of the created bookmark in the second region. Through such a setting, the bookmark hot zone H02 may be located between the created bookmark in the second region and a to-be-dragged task card, so that the user can conveniently drag the task card to the hot zone H02. This also better conforms to an operation habit of the user.

Further, refer to FIG. 20B and FIG. 21B. The bookmark hot zone H02 may be set adjacent to the created bookmark in the first region, to further improve operation experience of the user. For example, refer to FIG. 21B. The bookmark hot zone H02 and the bookmark 48 are adjacently set (a distance between the two is less than a preset value (for example, 5 pixels)). In addition, when no created bookmark exists in the second region, the bookmark hot zone H02 may be set adjacent to a side edge/vertex corresponding to the second region. For example, refer to FIG. 20B. An upper right vertex of the bookmark hot zone H02 is set adjacent to an upper right vertex of the screen (a distance between the two is less than a preset value (for example, 5 pixels)).

In this embodiment, the bookmark hot zone H01 may have a specified boundary. For example, refer to FIG. 20B and FIG. 21B. An upper right boundary of the bookmark hot zone H02 is a lower left boundary of the created bookmark in the first region (when no bookmark is created, the upper right vertex of the bookmark hot zone H02 is the upper right vertex of the screen), a right boundary is the right side edge of the screen, and an upper boundary is a bottom edge of a status bar. It may be understood that, in this embodiment, as a quantity of bookmarks increases, an area of the bookmark hot zone H02 decreases accordingly. In another embodiment, the bookmark hot zone H02 may alternatively have a fixed size.

In addition, refer to FIG. 21C. A plurality of bookmarks in the second region may be arranged in a grid manner. For example, the plurality of bookmarks are sequentially arranged along a diagonal direction of the screen, the bookmarks do not overlap each other, and a distance between adjacent bookmarks may be less than a preset value (for example, 2 pixels).

In addition, similar to the first-type bookmark, refer to FIG. 20C and FIG. 21C. The electronic device 100 may further add a screen splitting line 93 on an inner side of the created bookmark in the second region, to distinguish a bookmark region from another display region. In addition, the screen splitting line 93 may further include a drag bar 94. Subsequently, when the bookmark in the second region is collapsed to a collapsed state because no operation is performed for a long time, the user may switch the bookmark to an expanded state by dragging the drag bar 94.

Further, the second-type bookmark may also include an application identifier (for example, an application name) of an application corresponding to the bookmark. A manner of setting the application identifier on the second-type bookmark is substantially the same as a manner of setting the application identifier information on the first-type bookmark. Therefore, reference may be made to the foregoing descriptions, and details are not described again. For example, prompt information of an application may also be displayed on the second-type bookmark, and a display manner of the prompt information is substantially the same as that of the first-type bookmark. Therefore, reference may also be made to the foregoing descriptions, and details are not described again.

It can be learned that a main difference between creating the first-type bookmark and creating the second-type bookmark lies in that hot zones for triggering generation of the two types of bookmarks are different. For example, the bookmark hot zone H01 is used to trigger creation of the first-type bookmark, and the bookmark hot zone H02 is used to trigger creation of the second-type bookmark. In addition, other details of creating the first-type bookmark and creating the second-type bookmark are substantially the same, and therefore, reference may be made to each other. For example, the user may alternatively create a second-type bookmark based on a split-screen window of an application. Specifically, the user may switch out a movable window of the application based on the split-screen window of the application, then drag the movable window to the bookmark hot zone H02, and release the movable window in the bookmark hot zone H02, to form the second-type bookmark of the application.

Similarly, the user may alternatively create a second-type bookmark of an application based on a floating window of the application. The following provides example descriptions with reference to the accompanying drawings.

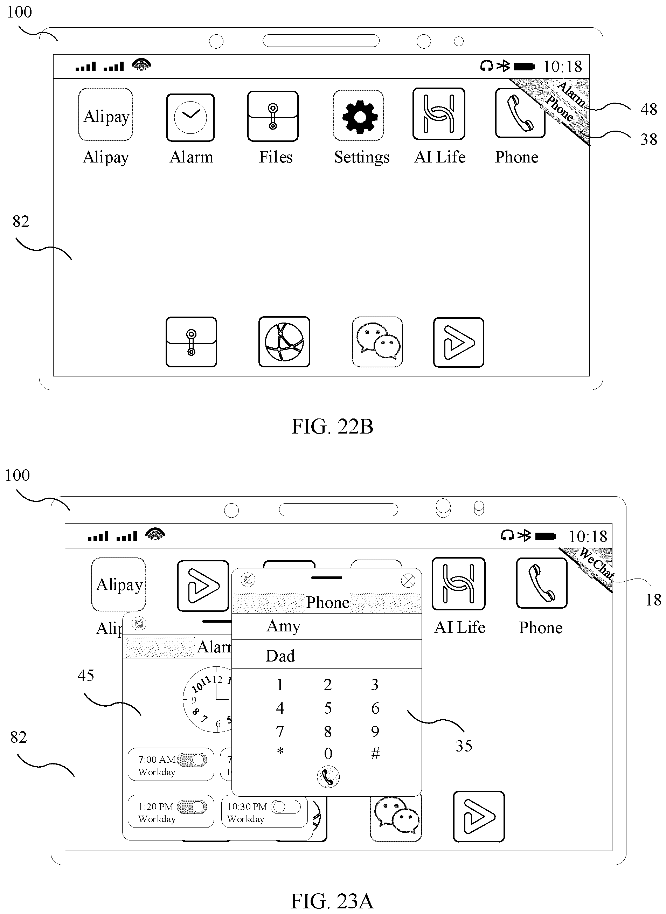

FIG. 22A and FIG. 22B show an example manner of creating a second-type bookmark by using a floating window of an application. Refer to FIG. 23A. A display interface of the electronic device 100 includes a floating window 35 of the application B3. When the user drags the floating window 35 of the application B3 to the bookmark hot zone H02, and releases the floating window 35 in the bookmark hot zone H02, the electronic device 100 may generate a bookmark 38 of the application B3 in the second region (refer to FIG. 22B).

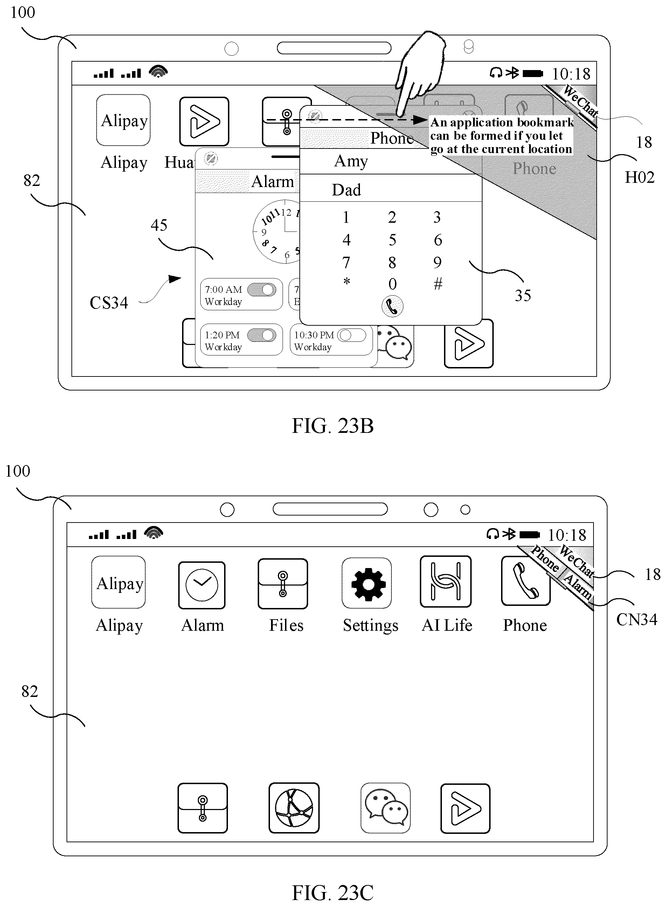

FIG. 23A to FIG. 23C show another example of creating a second-type bookmark by using a floating window of an application. Refer to FIG. 23A. A display interface of the electronic device 100 includes a floating window 35 of the application B3 and a floating window 45 of the application B4. The floating window 35 and the floating window 45 overlap each other, and a ratio of an area of an overlapping region to an area of a single floating window (for example, the floating window 35) exceeds a specified value (for example, 30%). In this case, refer to FIG. 23B. The user may bind the floating window 35 and the floating window 45 into a combined floating window CS34 by using a second binding operation. For a specific manner of the second binding operation, refer to the foregoing descriptions (for example, the foregoing descriptions about FIG. 11A and FIG. 11B). Details are not described again. Then, when the user drags the combined floating window CS34 to the bookmark hot zone H02, and releases the combined floating window CS34 in the bookmark hot zone H02, with reference to FIG. 23C, the electronic device 100 may generate a combined bookmark CN34 of the application B3 and the application B4 in the second region.

In addition, similar to the first-type bookmark, when a window of an application is dragged to the second-type bookmark, a combined bookmark may also be formed.

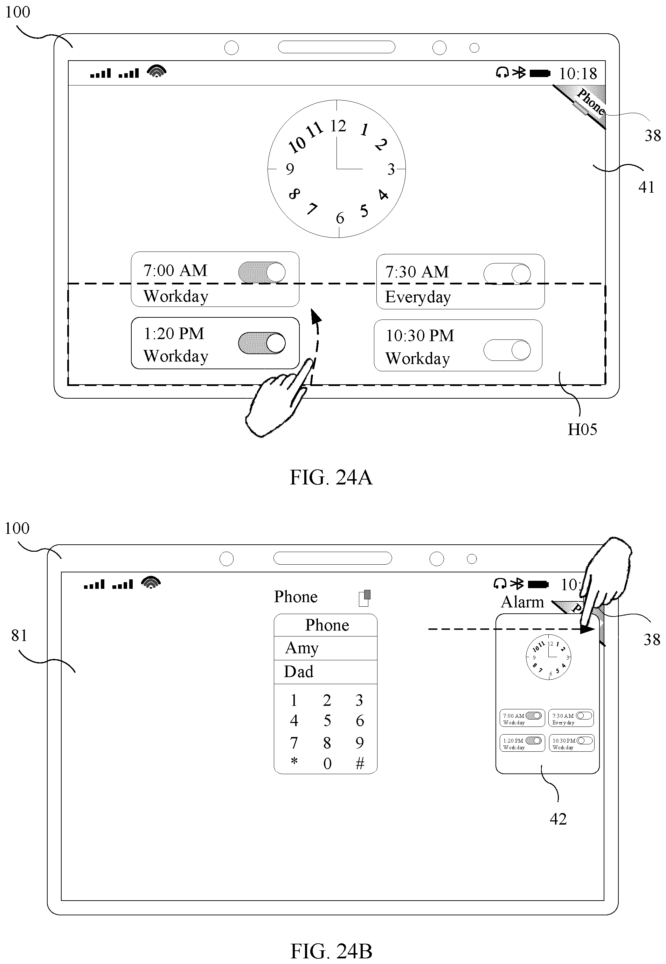

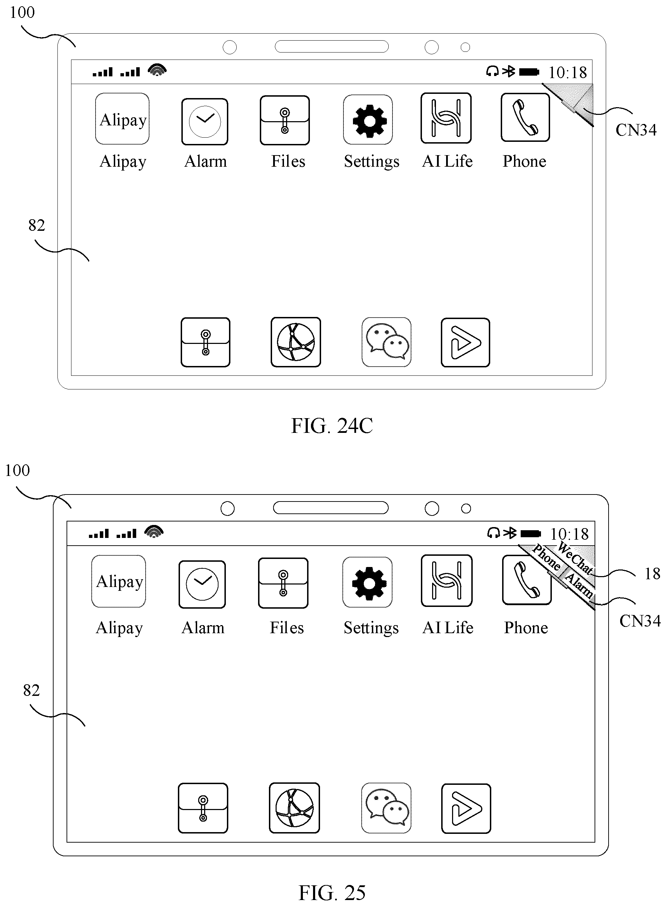

For example, refer to FIG. 24A. A display interface of the electronic device 100 includes a bookmark 38 of the application B3 and a full-screen window 41 of the application B4. As described above, when the user performs a slide-up and pause gesture (used as an example of the gesture G1) in the gesture hot zone H05, the full-screen window 41 of the application B4 may be switched to a task card 42 of the application B4 (used as an example of a movable window of the application B4) (refer to FIG. 24B). When the user drags the task card 42 to the bookmark 38 and releases the task card 42, the electronic device 100 may generate a combined bookmark CN34 of the application B3 and the application B4 (refer to FIG. 24C). For example, when an action position of the user on the task card 42 (for example, a position at which a finger of the user presses the task card 42) is at a position of the bookmark 38, it may be considered that the user drags the task card 42 to the bookmark 38.

It may be understood that the user may alternatively drag a split-screen window, a floating window, a combined split-screen window, or a combined floating window onto the second-type bookmark, to form a combined bookmark in the second region. A manner of dragging the application window is substantially the same as a manner of dragging the application window when the first-type bookmark is created. Therefore, reference may be made to the foregoing descriptions, and details are not described one by one.

The following describes a use manner for a second-type bookmark provided in this embodiment. The following uses a bookmark shown in FIG. 25 as an example for description. Refer to FIG. 25. The second region includes a bookmark 18 of the application B1 and a combined bookmark CN34 of the application B3 and the application B4. A manner of creating a bookmark is not limited in this application. For example, the bookmark 18 may be a bookmark created based on a full-screen window of the application B1, or may be a bookmark created based on a split-screen window or a floating window of the application B1. The combined bookmark CM34 may be a bookmark created based on a combined split-screen window of the applications B3 and B4, or may be a bookmark created based on a combined floating window of the applications B3 and B4, or may be a bookmark created by dragging a window of the application B4 to a bookmark 38 of the application B3.

Similar to those on the first-type bookmark, operations on the second-type bookmark may also include the following operations.

### (1) Application open operation (or referred to as a "sixth operation")

As described above, when a first-type bookmark is tapped (used as an example of the application open operation), a fixed window of an application is opened. Differently, when a second-type bookmark is tapped (used as an example of the application open operation), a floating window of an application is opened.

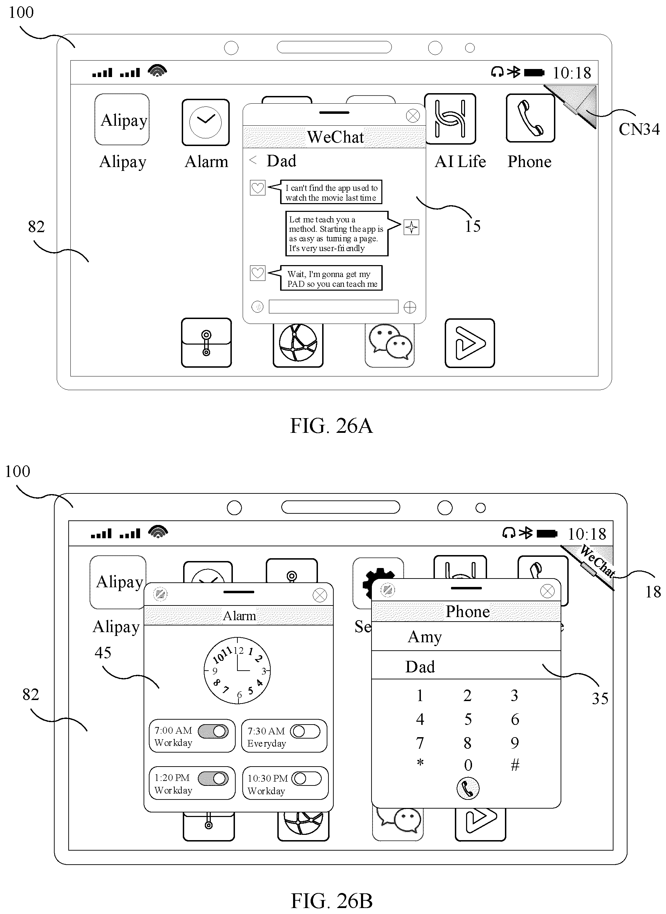

Specifically, when a single bookmark in the second-type bookmark is tapped, a floating window of an application corresponding to the bookmark is opened. For example, refer to FIG. 26A. When the user taps a bookmark 18, the electronic device 100 may open a floating window 15 of the application B1.

When a combined bookmark in the second-type bookmark is tapped, a floating window of each application in a plurality of applications corresponding to the combined bookmark is opened. For example, when the user taps the combined bookmark CN34 of the applications B3 and B4, with reference to FIG. 26B, the electronic device 100 opens the floating window 35 of the application B3 and the floating window 45 of the application B4.

In some embodiments, as shown in FIG. 26A and FIG. 26B, the electronic device 100 may open, at a specified position (for example, a screen center position), a floating window of an application corresponding to the second-type bookmark. In some other embodiments, when the second-type bookmark is created based on a floating window of the application, the floating window may be opened at a historical position of the floating window. The historical position of the floating window is a position of the floating window before the second-type bookmark is created. For example, when the bookmark CN34 is created in the manner shown in FIG. 23A and FIG. 23B, a historical position of the floating window 35 is a position of the floating window 35 in FIG. 23A, and a historical position of the floating window 45 is a position of the floating window 45 in FIG. 23A.

In this embodiment, when receiving a tap operation on a second-type bookmark, the electronic device 100 may restore the second-type bookmark to a floating window of a corresponding application. Because the floating window may coexist with a window of another application (for example, a full-screen window of a currently used application), it is convenient for the user to use a plurality of applications at the same time.

### (2) Application preview operation

Similar to the first-type bookmark, when the second-type bookmark is touched and held (used as an example of the application preview operation), a thumbnail of a user interface of an application corresponding to the bookmark may be displayed. For example, the thumbnail may be located near the second-type bookmark. Other details of the application preview operation performed on the second-type bookmark are substantially the same as those of the first-type bookmark (for example, all operation manners are a touch and hold operation on the bookmark). Therefore, reference may be made to the foregoing descriptions about the first-type bookmark, and details are not described again.

### (3) Bookmark expanding operation

Similar to the first-type bookmark, when the user does not perform an operation on the second-type bookmark for a long time, the second-type bookmark may also be switched from an expanded state to a collapsed state, to reduce an area occupied by the bookmark on the screen.

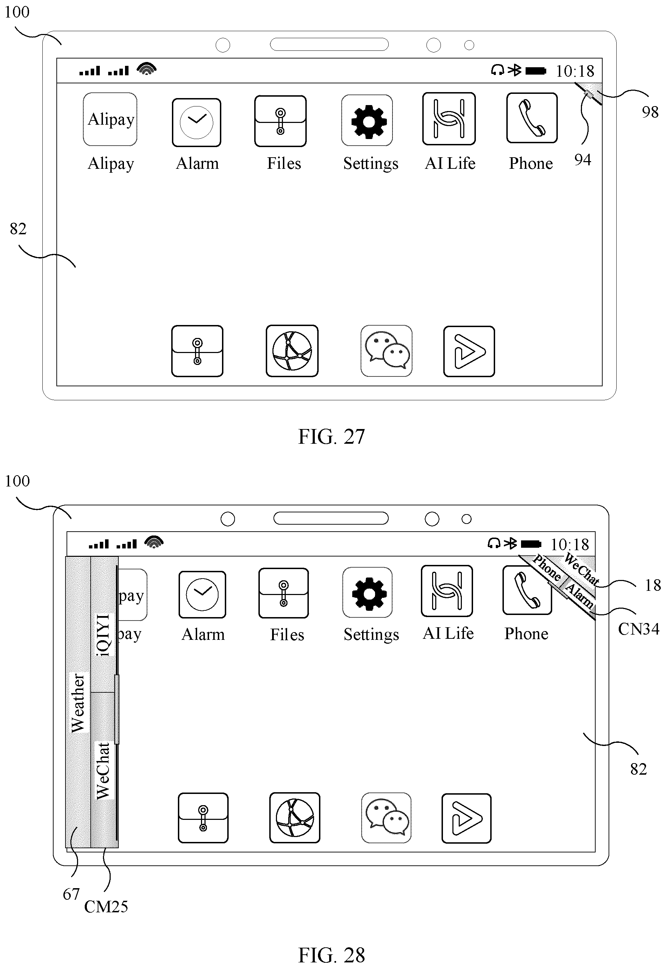

For example, when the user does not perform, within specified duration (for example, within 1 min), an operation on bookmarks (including the bookmarks 18 and CN34) shown in FIG. 25, the bookmarks may be switched from an expanded state shown in FIG. 25 to a collapsed state shown in FIG. 27. For example, in the collapsed state, the bookmarks are collapsed into a narrow bar 98, to reduce an area occupied by the bookmarks on the screen. In the narrow bar 98, a boundary line between different bookmarks disappears, and a plurality of bookmarks are integrated into a whole in appearance.

When the bookmarks are in the collapsed state, the bookmarks are in a "sleep" state, and functions of the bookmarks are unavailable temporarily. When the user wants to restore a function of the bookmark, the user may perform an expanding operation on the narrow bar 98, for example, drag the drag bar 94, to switch the bookmark from the collapsed state to the expanded state. After the user performs the expanding operation on the narrow bar 98, the bookmark is restored to the expanded state (the same state as that in FIG. 25). After the bookmark is restored to the expanded state, a normal function of the bookmark is restored.

The foregoing describes an example of a creation manner and a use manner for a second-type bookmark. Other details of the second-type bookmark that are not described are substantially the same as those of the first-type bookmark. Therefore, reference may be made to the descriptions of the first-type bookmark (for example, the descriptions about FIG. 7A to FIG. 18), and details are not described again.

In addition, in this embodiment of this application, refer to FIG. 28. The user may create one or more bookmarks in the first region, for example, a bookmark 67 of the application B6 and a combined bookmark CM25 of the application B2 and the application B5, or may create one or more bookmarks in the second region, for example, a bookmark 18 of the application B1 and a combined bookmark CN34 of the application B3 and the application B4. A creation sequence of the bookmarks is not limited in this application. For example, the user may first create a bookmark in the first region, and then create a bookmark in the second region; or may first create a bookmark in the second region, and then create a bookmark in the first region; or may create bookmarks in the first region and the second region alternately.

It may be understood that this embodiment is an example for description of the technical solutions of this application, and a person skilled in the art may make other variations.

For example, in this embodiment, the bookmark in the first region is used to be restored to a fixed window (for example, when receiving a tap operation on the bookmark in the first region, the electronic device 100 restores the tapped bookmark to a fixed window or a split-screen window), and the bookmark in the second region is used to be restored to a floating window (when receiving a tap operation on the bookmark in the second region, the electronic device 100 restores the tapped bookmark to a floating window). In another embodiment, the first-type bookmark may be used to be restored to a floating window, and the second-type bookmark may be used to be restored to a fixed window.

For another example, in this embodiment, a window of an application is dragged (including direct dragging or indirect dragging) to a bookmark hot zone (for example, the bookmark hot zone H01 or the bookmark hot zone H02), to generate a bookmark of the application. In another embodiment, the user may alternatively create a bookmark of an application in another manner, for example, create the bookmark of the application by tapping a specified control on an application window.

For another example, in this embodiment, the bookmark is located above another user interface. In another embodiment, the bookmark and another user interface (for example, a desktop, or a full-screen window/split-screen window of another application) may alternatively be set side by side, for example, set side by side along the width direction of the electronic device 100. In this embodiment, blocking of the bookmark on the another user interface may be reduced.

For another example, in this embodiment, the user may bind a plurality of windows of a same type into a combined window through a binding operation. For example, a plurality of split-screen windows are bound into a combined split-screen window by using the first binding operation, and a plurality of floating windows are bound into a combined floating window by using the second binding operation. In another embodiment, the user may perform a binding operation (referred to as a third binding operation below, for example, a binding operation on a floating window and a split-screen window, or a binding operation on a floating window and a full-screen window) on different types of windows, to form a combined window. Then, the combined window is dragged to the bookmark hot zone H01/H02 to form a combined bookmark in the first region/second region. A manner of the third binding operation is not limited in this application. For example, the third binding operation may be a drawing operation that runs through the bound window. A manner of dragging the combined window is not limited in this application. For example, the user may perform the gesture G1 in a specified gesture hot zone, to switch the combined window to a corresponding movable window, and then drag the movable window to the bookmark hot zone H01/H02.

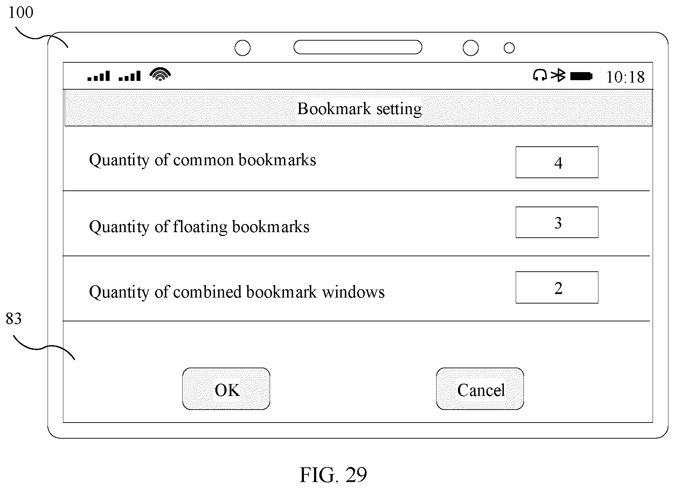

For another example, in this embodiment, a maximum quantity of bookmarks is not limited. In some embodiments, to limit an area occupied by the bookmarks on the screen, the maximum quantity of bookmarks may be limited. For example, the user may set the maximum quantity of bookmarks. FIG. 29 shows an example manner of setting a maximum quantity of bookmarks. Refer to FIG. 29. A setting application includes a bookmark setting interface 83, and the bookmark setting interface 83 includes three items: "quantity of common bookmarks", "quantity of floating bookmarks", and "quantity of combined bookmark windows". As shown in FIG. 29, when the user sets quantities in the foregoing three items to 4, 3, and 2 respectively, a maximum quantity of first-type bookmarks may be set to 4, a maximum quantity of second-type bookmarks may be set to 3, and a maximum quantity of applications corresponding to a single combined bookmark may be set to 2. It may be understood that, when a quantity of bookmarks of a specific type (first-type bookmarks or second-type bookmarks) reaches a maximum quantity set by the user, the electronic device 100 does not form a new bookmark of the type. When a quantity of applications corresponding to a single combined bookmark exceeds the maximum quantity of applications set by the user, the electronic device 100 does not form the combined bookmark.

The following describes an application display method provided in embodiments of this application. The following method may be performed by the electronic device 100 provided in embodiments of this application.

### [Embodiment 1]

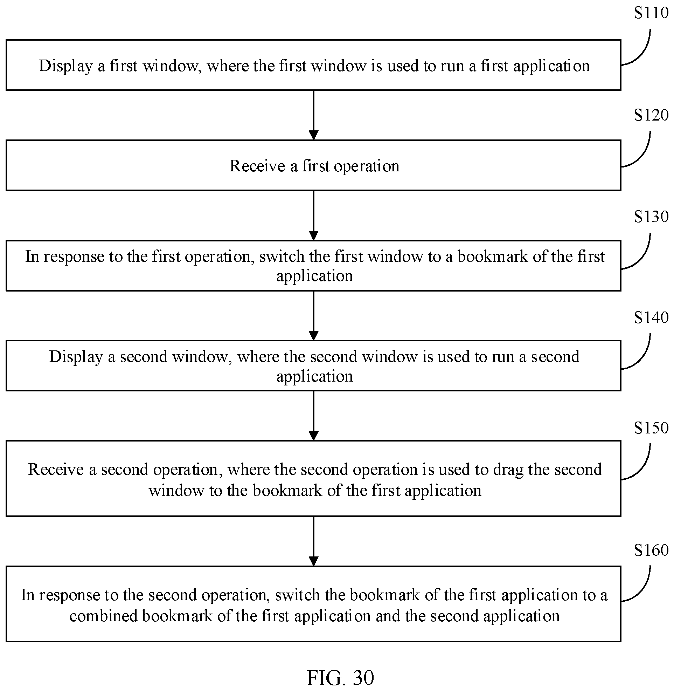

Specifically, refer to FIG. 30. An application display method provided in this embodiment includes the following steps.

S110: Display a first window, where the first window is used to run a first application. The first window may be a full-screen window, a split-screen window, a floating window, or the like of the first application.

For example, refer to FIG. 7A. The electronic device 100 displays the window 11 (used as the first window), and the window 11 is a full-screen window of the application B1 (used as the first application).

For another example, refer to FIG. 9A. The electronic device 100 displays the window 14 (used as the first window), and the window 14 is a split-screen window of the application B1 (used as the first application).

For another example, refer to FIG. 10A. The electronic device 100 displays the window 15 (used as the first window), and the window 15 is a full-screen window of the application B1 (used as the first application).

For example, a user may open a window of the application B1 in a manner such as tapping a desktop icon, an FA card, an icon of the dock bar 86, or a task card of the application B1. This is not specifically limited in this application.

### S120: Receive a first operation.

In this embodiment, the first operation is used to drag the first window to a first bookmark hot zone. When the first window is a fixed window (for example, a full-screen window or a split-screen window), because a position of the first window is relatively fixed, the first window is first switched to a movable window of the first application, and then the movable window is dragged to the first bookmark hot zone (that is, the first window is indirectly dragged to the first bookmark hot zone). When the first window is a floating window, because a position of the first window may be changed, the first window may be directly dragged to the first bookmark hot zone.

Specifically, when the first window is a fixed window, step S120 may include the following substeps.

S121: Receive a third operation, where the third operation is used to switch the first window to a movable window of the first application.

In some embodiments, refer to FIG. 7A. The window 11 (used as the first window) is a full-screen window. A display interface of the electronic device 100 includes the gesture hot zone H05 (also referred to as a "first gesture hot zone"). The third operation is the gesture G1 (also referred to as a "first gesture", for example, a slide-up and pause gesture) acting on the gesture hot zone H05.

Refer to FIG. 7B. After the third operation is performed on the window 11, the electronic device 100 may display the task card 12 of the application B1 (used as an example of a movable window of the application B1). In other words, the third operation may switch the full-screen window 11 of the application B1 to the task card 12 of the application B1.

In some other embodiments, refer to FIG. 9A. The window 14 (used as the first window) is a split-screen window. In addition, the window 14 is one of a plurality of split-screen windows displayed on the electronic device 100. A display interface of the electronic device 100 includes the gesture hot zone H05 (also referred to as a "first gesture hot zone"), the gesture hot zone H05 includes a plurality of sub-hot zones (for example, the hot zone H051, the hot zone H052, and the hot zone H052), and the sub-hot zones correspond to different split-screen windows (for example, the sub-hot zone H051 corresponds to the split-screen window 14).

The third operation is the gesture G1 (for example, a slide-up and pause gesture) acting on the sub-hot zone (that is, the sub-hot zone H051) corresponding to the window 14. After the third operation is performed, with reference to FIG. 9B, the electronic device 100 may display the task card 12 of the application B1 (used as the first application). In other words, the third operation may switch the split-screen window 14 of the application B1 to the task card 12 of the application B1 (used as an example of a movable window of the application B1).

For a manner of setting the gesture hot zone H05, the sub-hot zones of the gesture hot zone H05, the gesture G1, and the like, refer to the foregoing descriptions. Details are not described again. In addition, in another embodiment, the third operation may alternatively be another operation, for example, a double-tap operation on a home button of the electronic device 100.

S122: Receive a fourth operation, where the fourth operation is used to drag the movable window of the first application to the first bookmark hot zone.

For example, refer to FIG. 7C. The user may drag the task card 12 of the application B1 (used as the first application) (used as an example of the fourth operation), to drag the task card 12 (used as an example of a movable window of the application B1) to the bookmark hot zone H01 (or referred to as a "first bookmark hot zone").

For another example, refer to FIG. 9B. The user may drag the task card 12 of the application B1 (used as the first application) (used as an example of the fourth operation), to drag the task card 12 (used as an example of a movable window of the application B1) to the bookmark hot zone H01.

The foregoing step S121 and step S122 describe a manner of dragging a fixed window to the hot zone H01. When the first window is a floating window of the first application, step S120 may include: receiving a fifth operation, where the fifth operation is used to drag the first window to a first bookmark hot zone.

For example, refer to FIG. 10B. The user may drag the floating window 15 (used as the first window) of the application B1 (used as the first application), to drag the floating window 15 to the bookmark hot zone H01.

For a manner of setting the bookmark hot zone H01, refer to the foregoing descriptions. Details are not described again. In this embodiment, the first operation is used to drag the first window to the bookmark hot zone H01, to trigger generation of a bookmark of the first application. However, this application is not limited thereto. In another embodiment, the first operation may alternatively be another operation that triggers generation of a bookmark, for example, a tap operation on a specified control in the first window.

S130: In response to the first operation, switch the first window to a bookmark of the first application.

For example, refer to FIG. 7D. After the user drags the task card 12 (used as an example of a movable window of the application B1) of the application B1 (used as the first application) to the bookmark hot zone H01 and lets go (that is, after the first operation is completed), the electronic device 100 generates the bookmark 17 of the application B1. In this example, the bookmark 17 of the application B1 is formed based on the full-screen window 11 of the application B1.

For another example, refer to FIG. 9C. After the user drags the task card 12 (used as an example of a movable window of the application B1) of the application B1 (used as the first application) to the bookmark hot zone H01 and lets go (that is, after the first operation is completed), the electronic device 100 generates the bookmark 17 of the application B1. In this example, the bookmark 17 of the application B1 is formed based on the split-screen window 14 of the application B1.

For another example, refer to FIG. 10C. After the user drags the floating window 15 of the application B1 (used as the first application) to the bookmark hot zone H01 and lets go (that is, after the first operation is completed), the electronic device 100 generates the bookmark 17 of the application B1. In this example, the bookmark 17 of the application B1 is formed based on the floating window 15 of the application B1.

In this embodiment, the bookmark of the first application is located in a first region of a screen of the electronic device 100. For example, the first region is a left side region or a right side region of the screen. In another embodiment, the first region may alternatively be another region of the screen, for example, a vertex region. For a manner of setting the first region, refer to the foregoing descriptions. Details are not described again.

S140: Display a second window, where the second window is used to run a second application.

In this embodiment, refer to FIG. 12A. The electronic device 100 may display the window 21 (used as the second window), and the window 21 is a full-screen window 21 of the application B2 (used as the second application). In another embodiment, the second window may alternatively be a split-screen window or a floating window of the second application.

S150: Receive a second operation, where the second operation is used to drag the second window to the bookmark of the first application.

A difference between the second operation and the first operation lies in that target positions for dragging the windows are different. The first operation is used to drag the window of the application to the first bookmark hot zone, and the second operation is used to drag the window of the application to a created bookmark. In addition to this, other details of the second operation and the first operation are substantially the same. For example, when the second window is a fixed window, the second window may be first switched to a movable window of the second application, and then the movable window is dragged to the created bookmark (that is, the second window is indirectly dragged to the created bookmark). When the second window is a floating window, the second window may be directly dragged to the created bookmark.

For example, refer to FIG. 12A and FIG. 12B. The window 21 (used as the second window) is a full-screen window of the application B2 (used as the second application). The user may perform the gesture G1 (for example, a slide-up and pause gesture) in the gesture hot zone H05, to switch the window 21 to the task card 22 of the application B2 (used as an example of a movable window of the application B2). Then, the user may drag the task card 22 to the bookmark 17 (used as the bookmark of the first application), to complete the second operation.

In some other embodiments, when the second window is a split-screen window of the application B2, the user may switch the split-screen window of the application B2 to a task card of the application B2 (used as an example of a movable window of the application B2), and then drag the task card of the application B2 to the bookmark 17, to complete the second operation. In some other embodiments, when the second window is a floating window of the application B2, the user may directly drag the floating window of the application B2 to the bookmark 17, to complete the second operation.

S 160: In response to the second operation, switch the bookmark of the first application to a combined bookmark of the first application and the second application.

For example, refer to FIG. 12C. After the user drags the task card 22 (used as an example of a movable window of the application B2) of the application B2 (used as the second application) to the bookmark 17 and lets go (that is, after the user completes the second operation), the electronic device 100 switches the bookmark 17 to the combined bookmark CM12 of the application B1 and the application B2 (used as the combined bookmark of the first application and the second application).

It may be understood that, in another embodiment, after the user drags a split-screen window or a floating window of the application B2 to the bookmark 17 and lets go (that is, after the user completes the second operation), the electronic device 100 may also switch the bookmark 17 to the combined bookmark CM12 of the application B1 and the application B2.

The foregoing steps S110 to S160 describe a bookmark creation method provided in this embodiment. After a bookmark of an application is created, the user may further perform an operation on the bookmark.

For example, refer to FIG. 15C. After the combined bookmark CM12 of the application B1 (used as the first application) and the application B2 (used as the second application) is created, the electronic device 100 restores the combined bookmark CM to the split-screen window 14 of the application B1 and the split-screen window 24 of the application B2 after receiving an application open operation (or referred to as a "sixth operation", for example, a tap operation) on the combined bookmark CM12. In another embodiment, after receiving an application open operation on the combined bookmark CM12, the electronic device 100 may alternatively restore the combined bookmark CM to a floating window of the application B1 and a floating window of the application B2.

In this embodiment, the application open operation is performed on a bookmark, that is, the bookmark may be restored to a window of a corresponding application, so that it can be convenient for the user to switch the application.

For another example, refer to FIG. 16B. After the combined bookmark CM12 of the application B1 (used as the first application) and the application B2 (used as the second application) is created, the electronic device 100 displays the thumbnail 19 of the user interface of the application B1 and the thumbnail 29 of the user interface of the application B2 after receiving an application preview operation (or referred to as a "seventh operation", for example, a touch and hold operation) on the combined bookmark CM12.

In this embodiment, the application preview operation is performed on a bookmark, that is, a thumbnail of an application corresponding to the bookmark may be displayed, thereby helping the user quickly learn of an application status.

For other operation details and technical effects of the bookmark provided in this embodiment, refer to the foregoing descriptions of the operation manner for the first-type bookmark (for example, the descriptions of FIG. 15A to FIG. 18). Details are not described again.

### [Embodiment 2]

This embodiment is based on Embodiment 1. A difference between this embodiment and Embodiment 1 lies in that in Embodiment 1, a bookmark is created in the first region of the screen of the electronic device 100; and in this embodiment, a bookmark is created in a second region of the screen of the electronic device 100.

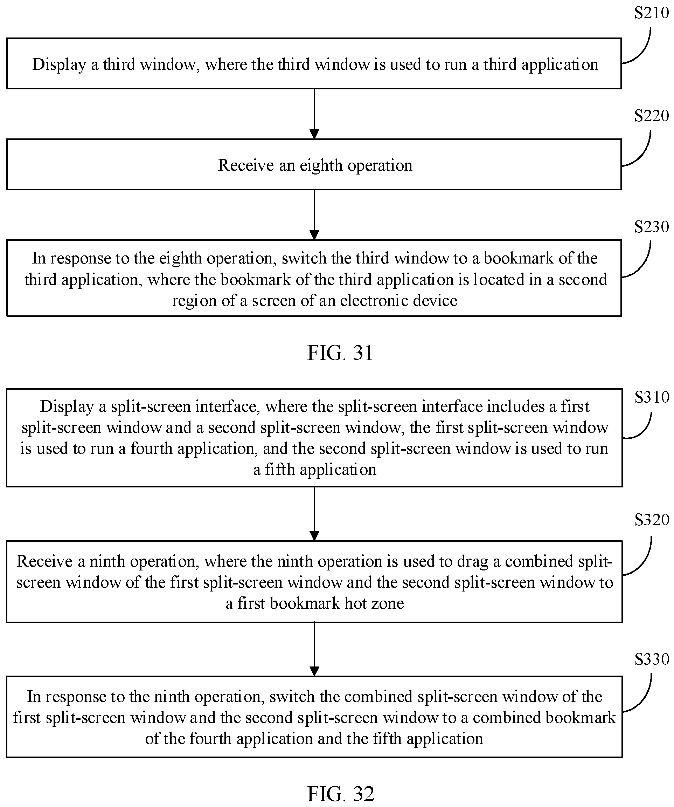

Specifically, refer to FIG. 31. An application display method provided in this embodiment includes the following steps.

S210: Display a third window, where the third window is used to run a third application.

For example, refer to FIG. 20A. The electronic device 100 displays the window 31 (used as the third window), and the window 31 is a full-screen window of the application B3 (used as the third application).

For another example, refer to FIG. 22A. The electronic device 100 displays the window 35 (used as the third window), and the window 35 is a floating window of the application B3 (used as the third application).

It may be understood that, in another embodiment, the electronic device 100 may alternatively display a split-screen window of the application B3. For example, a user may open a window of the application B3 in a manner such as tapping a desktop icon, an FA card, an icon of the dock bar 86, or a task card of the application B3. This is not specifically limited in this application.

S220: Receive an eighth operation.

In this embodiment, the eighth operation is used to drag the third window to a second bookmark hot zone. A difference between the eighth operation and the first operation lies in that target positions for dragging the windows are different. The first operation is used to drag the window of the application to the first bookmark hot zone, and the second operation is used to drag the window of the application to the second bookmark hot zone. In addition to this, other details of the eighth operation and the first operation are substantially the same. For example, when the third window is a fixed window, the third window may be first switched to a movable window of the third application, and then the movable window is dragged to the second bookmark hot zone (that is, the third window is indirectly dragged to the second bookmark hot zone). When the third window is a floating window, the third window may be directly dragged to the third bookmark hot zone.

For example, refer to FIG. 20A and FIG. 20B. The window 31 (used as the third window) is a full-screen window of the application B3 (used as the third application). The user may perform the gesture G1 (for example, a slide-up and pause gesture) in the gesture hot zone H05, to switch the window 21 to the task card 32 of the application B3 (used as an example of a movable window of the application B3). Then, the user may drag the task card 32 to the bookmark hot zone H02 (or referred to as the "second bookmark hot zone"), to complete the eighth operation. In some other embodiments, when the third window is a split-screen window of the application B3, the user may switch the split-screen window of the application B3 to a task card of the application B3 (used as an example of a movable window of the application B3), and then drag the task card of the application B3 to the bookmark hot zone H02, to complete the second operation.

For another example, refer to FIG. 22A and FIG. 22B. The window 35 (used as the third window) is a floating window of the application B3 (used as the third application). The user may directly drag the window 35 to the bookmark hot zone H02, to complete the eighth operation.

For a manner of setting the bookmark hot zone H02, refer to the foregoing descriptions. Details are not described again. In addition, in another embodiment, the eighth operation may alternatively be another operation, for example, a tap operation on a specified control in the third window.

S230: In response to the eighth operation, switch the third window to a bookmark of the third application, where the bookmark of the third application is located in the second region of the screen of the electronic device 100.

For example, refer to FIG. 20C. After the user drags the task card 32 of the application B3 (used as the third application) to the bookmark hot zone H02 and lets go (that is, after the eighth operation is completed), the electronic device 100 generates the bookmark 38 of the application B3. In this example, the bookmark 38 of the application B3 is formed based on the full-screen window 31 of the application B3. It may be understood that, in another embodiment, the bookmark 38 of the application B3 may alternatively be formed based on a split-screen window of the application B3.

For another example, refer to FIG. 22B. After the user drags the floating window 35 of the application B3 (used as the third application) to the bookmark hot zone H02 and lets go (that is, after the eighth operation is completed), the electronic device 100 generates the bookmark 38 of the application B3. In this example, the bookmark 38 of the application B3 is formed based on the floating window 35 of the application B3.

In some embodiments, in a display direction of the electronic device 100, the first region and the second region are located on two opposite sides of the screen of the electronic device 100. In some embodiments, one of the first region and the second region is a side region of the screen of the electronic device 100, and the other is a vertex region of the screen of the electronic device 100. For other setting details of the first region and the second region, refer to the foregoing descriptions. Details are not described again.

Similar to that in Embodiment 1, after a bookmark of an application is created, the user may further perform an operation on the bookmark. In this embodiment, after the user performs an application open operation on a bookmark in the second region, the electronic device 100 restores the operated bookmark to a floating window of an application.

For example, refer to FIG. 25 and FIG. 26A. After the combined bookmark 18 of the application B1 (used as the third application) is created, the electronic device 100 restores the combined bookmark 18 to the floating window 15 of the application B1 after receiving an application open operation (or referred to as a "sixth operation", for example, a tap operation) on the bookmark 18.

In this embodiment, the application open operation is performed on a bookmark, that is, the bookmark may be restored to a floating window of a corresponding application, so that it can be convenient for the user to use a plurality of applications at the same time.

For other operation details and technical effects of the bookmark provided in this embodiment, refer to the foregoing descriptions of the operation manner for the second-type bookmark (for example, the descriptions of FIG. 25 to FIG. 27). Details are not described again.

It should be noted that this embodiment is merely an example for description of the technical solutions of this application, and a person skilled in the art may make other variations. For example, in this embodiment, a bookmark in the first region is used to be restored to a fixed window of an application, and a bookmark in the second region is used to be restored to a floating window of an application. In another embodiment, a bookmark in the first region is used to be restored to a floating window of an application, and a bookmark in the second region is used to be restored to a fixed window of an application.

In addition, it should be noted that steps S210 to S230 provided in this embodiment may be performed after steps S110 to S160 in Embodiment 1, or may be performed before steps S110 to S160, or may be performed alternatively with steps S110 to S160.

### [Embodiment 3]

This embodiment is based on Embodiment 1. A difference between this embodiment and Embodiment 1 lies in that in Embodiment 1, a drag operation is performed on a single application window; and in this embodiment, a drag operation is performed on a combined split-screen window, to form a combined bookmark.

Specifically, refer to FIG. 32. An application display method provided in this embodiment includes the following steps.

S310: Display a split-screen interface, where the split-screen interface includes a first split-screen window and a second split-screen window, the first split-screen window is used to run a fourth application, and the second split-screen window is used to run a fifth application.

For example, refer to FIG. 9A. The electronic device 100 displays a split-screen interface. The split-screen interface includes the window 14 (used as the first split-screen window) and the window 24 (used as the second split-screen window), the window 14 is a split-screen window of the application B1 (used as the fourth application), and the window 24 is a split-screen window of the application B2 (used as the fifth application).

S320: Receive a ninth operation, where the ninth operation is used to drag a combined split-screen window of the first split-screen window and the second split-screen window to a first bookmark hot zone.

In this embodiment, step S320 may include the following substeps.

S321: Receive a third operation, where the third operation is a first gesture operation acting on a first sub-hot zone, and the third operation is used to switch the combined split-screen window to a combined movable window of the fourth application and the fifth application.

For example, refer to FIG. 9D. A display interface of the electronic device 100 includes the gesture hot zone H05 (or referred to as a "first gesture hot zone"), the gesture hot zone H05 includes a plurality of sub-hot zones (for example, the hot zone H051, the hot zone H052, and the hot zone H052), and the sub-hot zones correspond to different split-screen windows (for example, the sub-hot zone H053 corresponds to the combined split-screen window CW12 of the split-screen window 14 and the split-screen window 15).

The third operation is the gesture G1 (for example, a slide-up and pause gesture) acting on a sub-hot zone (that is, the sub-hot zone H051, used as the first sub-hot zone) corresponding to the combined split-screen window CW12. After the eighth operation is performed, with reference to FIG. 9E, the electronic device 100 may display a combined task card CC12 (used as an example of the combined movable window) of the application B1 (used as the fourth application) and the application B2 (used as the fifth application). That is, the third operation may switch the combined split-screen window CW12 to the combined task card CC12 of the application B1 and the application B2.

For a manner of setting the gesture hot zone H05, the sub-hot zones of the gesture hot zone H05, the gesture G1, and the like, refer to the foregoing descriptions. Details are not described again. In addition, in another embodiment, the eighth operation may alternatively be another operation, for example, a double-tap operation on a home button of the electronic device 100.

S322: Receive a fourth operation, where the fourth operation is used to drag the combined movable window to the first bookmark hot zone.

For example, refer to FIG. 9E. A user may drag the combined task card CC12 of the application B1 and the application B2 (used as an example of the fourth operation), to drag the combined task card CC12 to the bookmark hot zone H01.

S330: In response to the ninth operation, switch the combined split-screen window of the first split-screen window and the second split-screen window to a combined bookmark of the fourth application and the fifth application.

For example, refer to FIG. 9F. After the user drags the combined task card CC12 to the bookmark hot zone H01 and lets go (that is, after the ninth operation is completed), the electronic device 100 generates the combined bookmark CM12 of the application B1 and the application B2.

Similar to that in Embodiment 1, after a bookmark is created, an operation may be performed on the bookmark. For an operation manner and technical effects of the combined bookmark provided in this embodiment, refer to the foregoing descriptions of the operation manner for the combined bookmark (which may be a combined bookmark in the first-type bookmark, or may be a combined bookmark in the second-type bookmark), for example, the foregoing descriptions of FIG. 15C and FIG. 15D, FIG. 16B, and FIG. 26B. Details are not described again.

### [Embodiment 4]

This embodiment is based on Embodiment 1. A difference between this embodiment and Embodiment 1 lies in that in Embodiment 1, a drag operation is performed on a single application window; and in this embodiment, a drag operation is performed on a combined floating window, to form a combined bookmark.

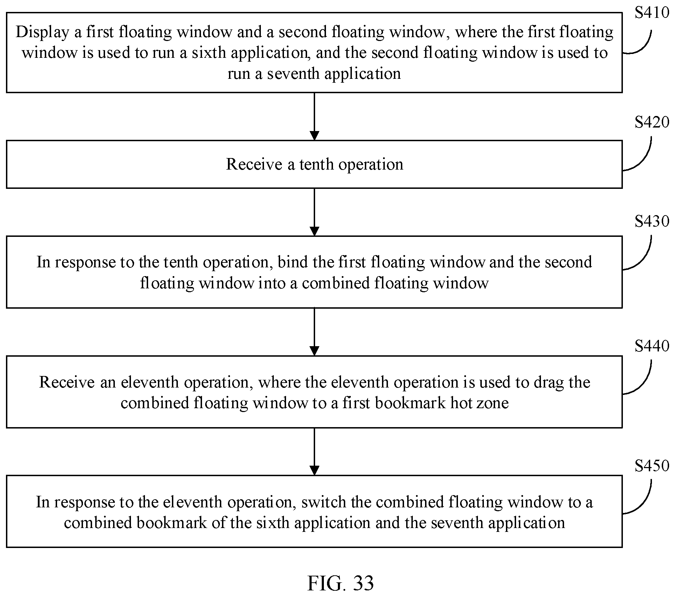

Specifically, refer to FIG. 33. An application display method provided in this embodiment includes the following steps.

S410: Display a first floating window and a second floating window, where the first floating window is used to run a sixth application, the second floating window is used to run a seventh application, the first floating window and the second floating window overlap each other, and a ratio of an area of an overlapping region of the first floating window and the second floating window to an area of the first floating window exceeds a first threshold.

For example, refer to FIG. 11A. The electronic device 100 displays the window 15 (used as the first floating window) and the window 25 (used as the second floating window), the window 15 is a floating window of the application B1 (used as the sixth application), and the window 25 is a floating window of the application B2 (used as the seventh application).

The floating window 15 and the floating window 25 overlap each other, and a ratio of an area of an overlapping region to an area of a single floating window (for example, the floating window 15) exceeds a specified value (used as the first threshold, for example, 30%).

S420: Receive a tenth operation (or referred to as a "second binding operation").

For example, refer to FIG. 11A. The second binding operation is a touch and hold operation on a specified region (for example, the title bar 251) of an upper-layer floating window (that is, the floating window 25). However, this application is not limited thereto. For example, in some other embodiments, the second binding operation is a slide gesture operation across the floating window 15 and the floating window 25.

S430: In response to the tenth operation, bind the first floating window and the second floating window into a combined floating window.

For example, refer to FIG. 11B. After the user performs the second binding operation, the electronic device 100 binds the floating window 15 and the floating window 25 into the combined floating window CS12.

S440: Receive an eleventh operation, where the eleventh operation is used to drag the combined floating window to a first bookmark hot zone.

For example, refer to FIG. 11B. After the floating window 15 and the floating window 25 are bound into the combined floating window CS12, the user may drag the combined floating window CS12 to the bookmark hot zone H01 (used as an example of the eleventh operation).

S450: In response to the eleventh operation, switch the combined floating window to a combined bookmark of the sixth application and the seventh application.

For example, refer to FIG. 11C. After the user drags the combined floating window CS12 to the bookmark hot zone H01, and releases the combined floating window CS12 in the bookmark hot zone H01 (that is, after the eleventh operation is completed), the electronic device 100 may generate the combined bookmark CM12 of the application B1 and the application B2.

Similar to that in Embodiment 1, after a bookmark is created, an operation may be performed on the bookmark. For an operation manner and technical effects of the combined bookmark provided in this embodiment, refer to the foregoing descriptions of the operation manner for the combined bookmark (which may be a combined bookmark in the first-type bookmark, or may be a combined bookmark in the second-type bookmark), for example, the foregoing descriptions of FIG. 15C and FIG. 15D, FIG. 16B, and FIG. 26B. Details are not described again.

The following describes a software architecture of the electronic device 100 provided in this embodiment. A software system of the electronic device 100 may use a layered architecture, an event-driven architecture, a microkernel architecture, a micro-service architecture, or a cloud architecture. In embodiments of the present invention, an Android system with a layered architecture is used as an example to illustrate the software structure of the electronic device 100.

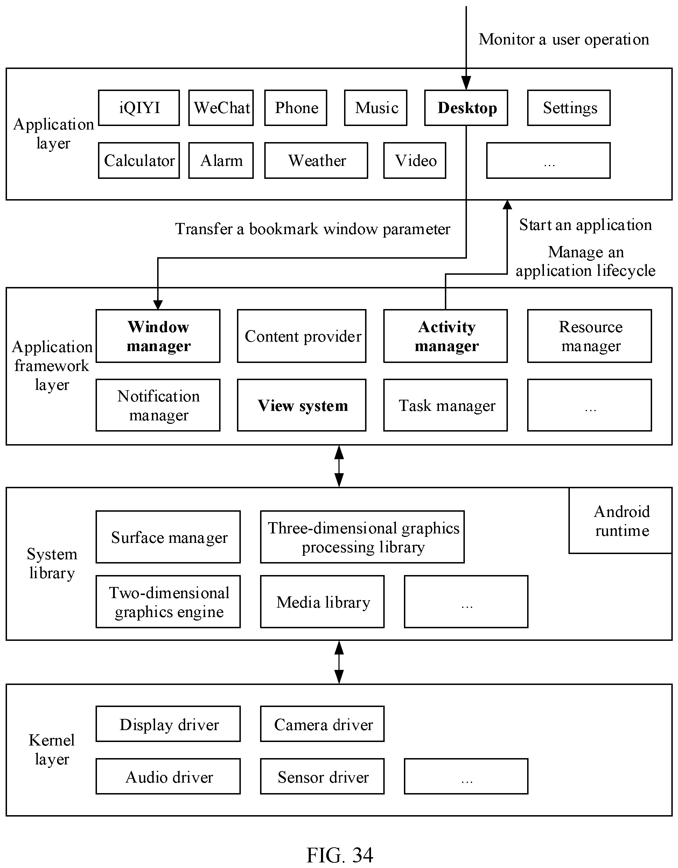

FIG. 34 is a block diagram of a software structure of an electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer (briefly referred to as a "framework layer"), an Android runtime (Android runtime) and system library, and a kernel layer from top to bottom.

The application layer may include a series of application packages.

As shown in FIG. 34, the application packages may include applications such as iQIYI, WeChat, Phone, Alarm, Calculator, Weather, Desktop (or referred to as "Launcher"), Camera, Gallery, Calendar, Call, Map, Navigation, WLAN, Bluetooth, Music, Video, and Messages.

The Launcher application may monitor a touch operation of a user on a screen of the electronic device, for example, a slide-up and pause gesture, a drag operation on a task card, or a drag operation on a floating window.

The Launcher application may further determine a bookmark type and a creation position of a target bookmark (a bookmark to be created) based on the user operation. For example, when the user drags a task card of the application B1 to the bookmark hot zone H01 and lets go, the Launcher application determines to create a single bookmark in a first region.

The Launcher application may further transfer a bookmark window parameter (for example, the bookmark type and a target position of the target bookmark) to the application framework layer (for example, to a window manager). For example, the Launcher application may transfer the bookmark window parameter to the framework layer through Bundle (which is a communication interface provided by the Android system).

The application framework layer provides an application programming interface (application programming interface, API) and a programming framework for applications at the application layer. The application framework layer includes some predefined functions.

As shown in FIG. 34, the application framework layer may include a window manager (Window Manager Service, WMS), a content provider, a view system (View), a phone manager, a resource manager, a notification manager, an activity manager (Activity Manager Service, AMS), and the like.

The window manager is configured to manage window programs. The window manager may obtain a display size, determine whether there is a status bar, lock a screen, take a screenshot, and the like.

The window manager may further complete a switching animation between a task card/floating window and a bookmark, a movement animation of the bookmark, a scaling animation of the bookmark, and a scaling animation of an application window, so that the electronic device 100 displays a smooth window animation.

The activity manager is configured to start an application. For example, when the user taps a desktop icon of the application B1, the activity manager may start a full-screen window of the application B 1. The activity manager may further manage a lifecycle of an application. For example, the activity manager sets a lifecycle of an application corresponding to each bookmark to resume (an active state). For another example, when a display interface of the electronic device is switched from an application window (for example, a full-screen window or a split-screen window) to a desktop, the activity manager may switch a lifecycle of the Launcher application from stop (a stopped state) to resume.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view. The view system may further obtain a screenshot (or referred to as a "snapshot (SnapShot)") of a user interface of an application, and send the screenshot to the window manager, so that the window manager generates a thumbnail of the user interface of the application.

The phone manager is configured to provide a communication function of the electronic device 100, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an application display method provided in embodiments with reference to the software structure shown in FIG. 34.

### [Embodiment 5]

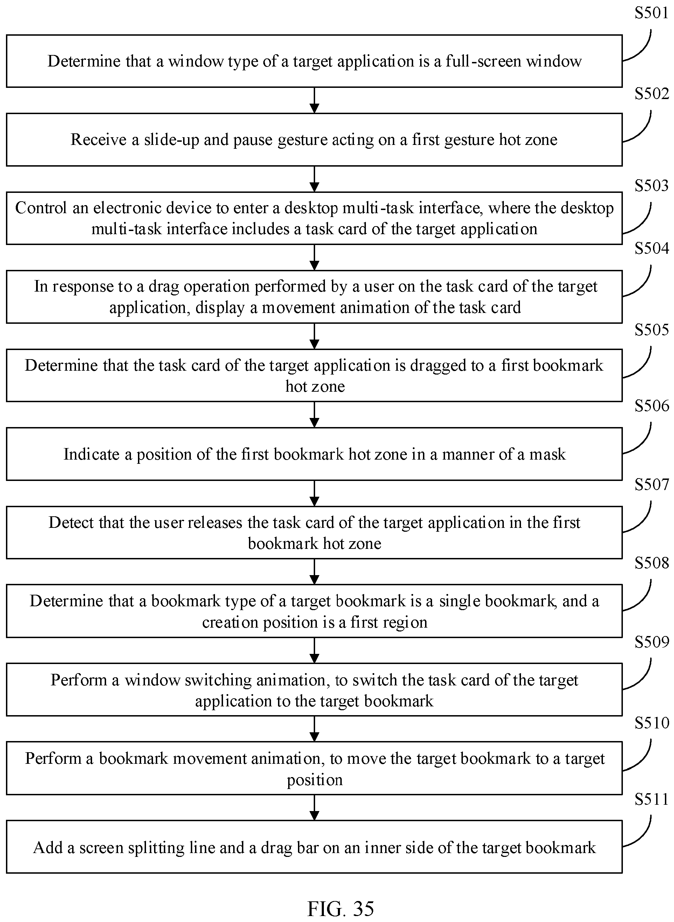

This embodiment is used to create a bookmark in a first region based on a full-screen window of an application. Refer to FIG. 35. An application display method provided in this embodiment may include the following steps (the following steps may be performed by the electronic device 100).

S501: Determine that a window type of a target application is a full-screen window.

For example, in the electronic device 100, a full-screen window, a split-screen window, and a floating window have different window type identifiers (or referred to as "windowMode"). For example, a window type identifier of the full-screen window is T100, a window type identifier of the split-screen window is T101, and a window type identifier of the floating window is T102.

When the electronic device 100 starts a window of an application, the Launcher application may obtain (for example, obtain from the WMS at the framework layer) a window type identifier of the started window.

For example, refer to FIG. 7A. When the electronic device 100 starts the full-screen window 11 of the application B1 (used as an example of the target application), the Launcher application may obtain the type identifier "T100" of the window 11. The Launcher application may determine, based on the type identifier, that a window type of the window 11 is a full-screen window.

S502: Receive a slide-up and pause gesture acting on a first gesture hot zone (or referred to as the "gesture hot zone H05").

The Launcher application may monitor a touch operation performed by a user on a screen of the electronic device 100. Refer to FIG. 7A. When the user performs a slide-up and pause gesture on the gesture hot zone H05, the Launcher application may receive the gesture operation of the user. For example, the gesture hot zone H05 is located in a bottom region of the screen of the electronic device 100, and in a width direction, the gesture hot zone H05 crosses the screen of the electronic device 100.

S503: Control the electronic device 100 to enter a desktop multi-task interface, where the desktop multi-task interface includes a task card of the target application.

For example, refer to FIG. 7B. When a slide-up and pause gesture is completed (ACTION DOWN), the Launcher application controls the electronic device 100 to enter the desktop multi-task interface 81, where the desktop multi-task interface 81 includes the task card 12 of the application B1.

S504: In response to a drag operation performed by a user on the task card of the target application, display a movement animation of the task card.

For example, refer to FIG. 7B and FIG. 7C. In the desktop multi-task interface 81, the user may drag the task card 12. When the user drags the task card 12, the Launcher application performs a movement animation (RecentsAnimation) of the task card 12, to display a drag position of the task card 12 in real time.

S505: Determine that the task card of the target application is dragged to a first bookmark hot zone.

For example, refer to FIG. 7C. The Launcher application may monitor the drag position of the task card 12. For example, when a position at which the user presses the task card 12 is in the bookmark hot zone H01 (or referred to as the "first bookmark hot zone"), the Launcher application determines that the task card 12 is dragged to the bookmark hot zone H01. Alternatively, when a ratio of an area of the task card 12 in the bookmark hot zone H01 to a total area of the task card 12 exceeds a specified value (for example, 30%), the Launcher application determines that the task card 12 is dragged to the bookmark hot zone H01. In addition, for a manner of setting the bookmark hot zone H01, refer to the foregoing descriptions. Details are not described again.

S506: Indicate a position of the first bookmark hot zone in a manner of a mask.

For example, refer to FIG. 7C. When the task card 12 is dragged to the bookmark hot zone H01, the Launcher application displays a mask to indicate a position of the bookmark hot zone H01. In another embodiment, the Launcher application may alternatively indicate the position of the bookmark hot zone H01 in a manner such as a dashed box or a text.

S507: Detect that the user releases the task card of the target application in the first bookmark hot zone.

For example, refer to FIG. 7C. When the user drags the task card 12 to the bookmark hot zone H01 and lets go, the Launcher application detects that the user releases the task card 12 in the bookmark hot zone H01.

S508: Determine that a bookmark type of a target bookmark (a bookmark of the target application) is a single bookmark, and a creation position of the target bookmark is a first region.

In response to detecting that the user releases the task card 12 in the bookmark hot zone H01, the Launcher application determines to create a bookmark (that is, the target bookmark) of the application B1 in the first region of the screen, and a bookmark type is a single bookmark. For example, a bookmark type identifier (windowMode) of the single bookmark in the first region is T201. For a manner of setting the first region, refer to the foregoing descriptions. Details are not described again.

In addition, the Launcher application may further determine boundary information (bounds) and position information (position) of the target bookmark based on information (for example, a quantity and a position) about a created bookmark in the first region.

After determining the bookmark type of the target bookmark, the Launcher application may send a bookmark creation request to the framework layer. The bookmark creation request may include a task identifier (taskId), windowMode (for example, T201), bounds, a position, a scaling ratio (scale), and the like of the target bookmark. For example, for the single bookmark in the first region, scale may be 1 (that is, there is no scaling). In addition, the Launcher application may send the bookmark creation request to the framework layer through Bundle.

S509: Perform a window switching animation, to switch the task card of the target application to the target bookmark.

After receiving the bookmark creation request from the Launcher application, the framework layer performs the window switching animation, to switch the task card of the application B1 to the bookmark 17 of the application B1. For example, refer to FIG. 7C. The bookmark 17 of the application B1 is formed at a position of the task card 12 by performing the window switching animation.

S510: Perform a bookmark movement animation, to move the target bookmark to a target position.

After the window switching animation is performed, the framework layer continues to perform the bookmark movement animation. Refer to FIG. 7C and FIG. 7D. The bookmark 17 of the application B1 may be moved from the position of the task card 12 to a position shown in FIG. 7D (that is, the target position of the target bookmark) by performing the bookmark movement animation.

In addition, the framework layer may perform the window switching animation and the bookmark movement animation by using an onConfigurationChanged procedure of a Task submodule.

S511: Add a screen splitting line and a drag bar on an inner side of the target bookmark. For example, refer to FIG. 7D. The framework layer may add the screen splitting line 91 and the drag bar 92 on an inner side of the bookmark 17.

In addition, in some embodiments, after receiving the bookmark creation request, the framework layer may further determine whether a quantity of bookmarks in the first region reaches a maximum quantity of bookmarks. When the quantity of bookmarks in the first region reaches the maximum quantity of bookmarks, the framework layer does not respond to the bookmark creation request (that is, does not create a new bookmark). In addition, the framework layer may further control the electronic device 100 to pop up a toast, to prompt the user that the quantity of bookmarks in the first region has reached the maximum quantity. For example, the user may set the maximum quantity of bookmarks in the first region according to the method shown in FIG. 29.

### [Embodiment 6]

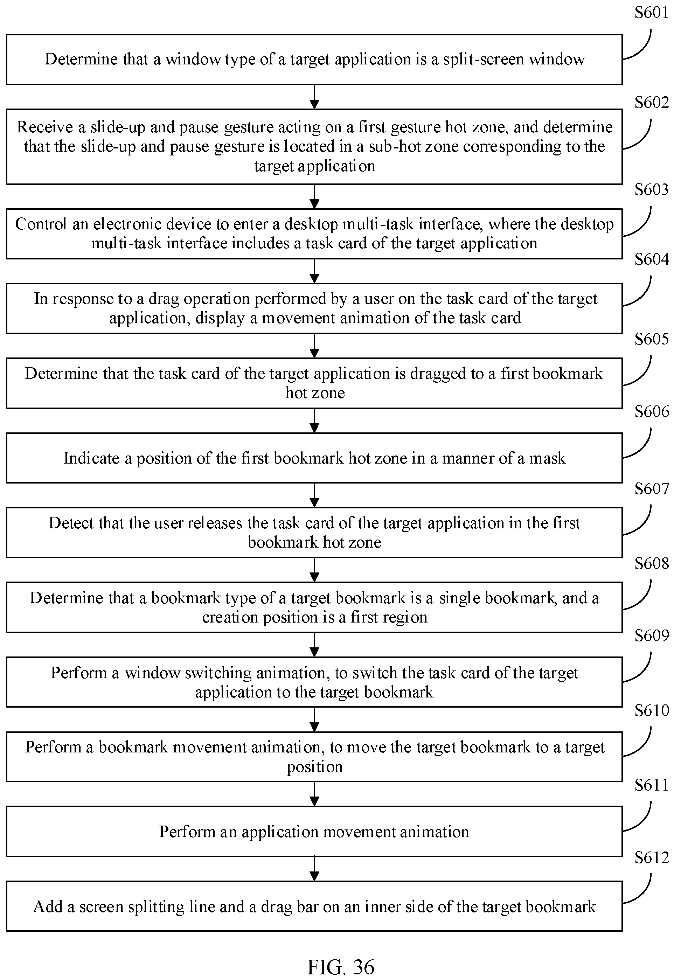

This embodiment is used to create a bookmark in a first region based on a split-screen window of an application. Refer to FIG. 36. An application display method provided in this embodiment may include the following steps (the steps in this embodiment may be performed by the electronic device 100).

S601: Determine that a window type of a target application is a split-screen window.

For example, refer to FIG. 9A. When the electronic device 100 starts the split-screen window 14 of the application B1 (used as an example of the target application), the Launcher application may obtain the type identifier "T101" of the window 14. The Launcher application may determine, based on the type identifier, that a window type of the window 14 is a split-screen window.

S602: Receive a slide-up and pause gesture acting on a first gesture hot zone, and determine that the slide-up and pause gesture is located in a sub-hot zone corresponding to the target application.

For example, refer to FIG. 9A. When the user performs a slide-up and pause gesture on the gesture hot zone H05, the Launcher application may receive the gesture operation of the user. Further, the Launcher application determines, based on an action position of the slide-up and pause gesture, that the gesture is located in the sub-hot zone H051 of the gesture hot zone H05 (that is, in a sub-hot zone corresponding to the application B1).

S603: Control the electronic device 100 to enter a desktop multi-task interface, where the desktop multi-task interface includes a task card of the target application.

For example, refer to FIG. 9B. When a slide-up and pause gesture is completed (ACTION DOWN), the Launcher application controls the electronic device 100 to enter the desktop multi-task interface 81, where the desktop multi-task interface 81 includes the task card 12 of the application B1.

S604: In response to a drag operation performed by a user on the task card of the target application, display a movement animation of the task card.

S605: Determine that the task card of the target application is dragged to a first bookmark hot zone.

S606: Indicate a position of the first bookmark hot zone in a manner of a mask.

S607: Detect that the user releases the task card of the target application in the first bookmark hot zone.

S608: Determine that a bookmark type of a target bookmark (a bookmark of the target application) is a single bookmark, and a creation position of the target bookmark is a first region.

Steps S604 to S608 are substantially the same as steps S504 to S508 in Embodiment 5 respectively. Therefore, reference may be made to the descriptions in Embodiment 5. Details are not described again.

S609: The framework layer performs a window switching animation, to switch the task card of the target application to the target bookmark.

For example, refer to FIG. 9B. The bookmark 17 of the application B1 is formed at a position of the task card 12 by performing the window switching animation.

S610: The framework layer performs a bookmark movement animation, to move the target bookmark to a target position.

After the window switching animation is performed, the framework layer continues to perform the bookmark movement animation. Refer to FIG. 9B and FIG. 9C. The bookmark 17 of the application B1 may be moved from the position of the task card 12 to a position shown in FIG. 9C (that is, the target position of the target bookmark) by performing the bookmark movement animation.

In addition, the framework layer may perform the window switching animation and the bookmark movement animation by using an onConfigurationChanged procedure of a Task submodule.

S611: The framework layer performs an application movement animation.

For example, refer to FIG. 9C. The split-screen window 24 of the application B2 (an application that is not switched to a bookmark) may be switched to the full-screen window 21 by performing the application movement animation.

S612: The framework layer adds a screen splitting line and a drag bar on an inner side of the target bookmark. For example, refer to FIG. 9C. The framework layer may add the screen splitting line 91 and the drag bar 92 on an inner side of the bookmark 17.

Other details that are not described in Embodiment 6 are substantially the same as those in Embodiment 5. Therefore, reference may be made to the descriptions in Embodiment 5. Details are not described again.

### [Embodiment 7]

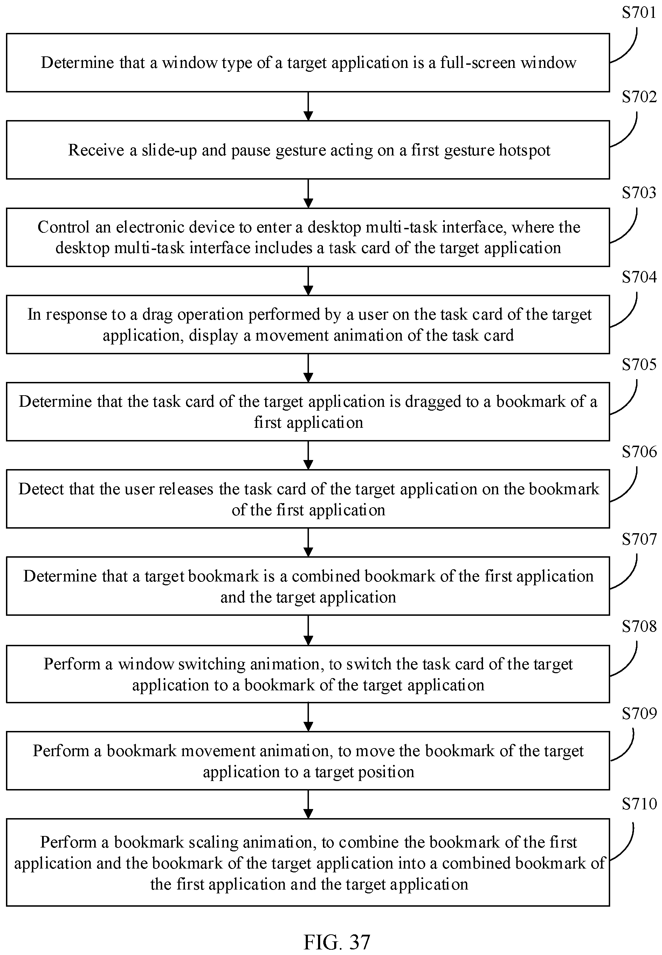

In this embodiment, a window of a second application (or referred to as a "target application") may be dragged to a bookmark of a first application, to form a combined bookmark of the first application and the second application. Refer to FIG. 37. An application display method provided in this embodiment may include the following steps (the steps in this embodiment may be performed by the electronic device 100).

S701: Determine that a window type of a target application is a full-screen window.

For example, refer to FIG. 12A. When the electronic device 100 starts the full-screen window 21 of the application B2 (used as an example of the target application), the Launcher application may obtain the type identifier "T100" of the window 21. The Launcher application may determine, based on the type identifier, that a window type of the window 21 is a full-screen window.

S702: Receive a slide-up and pause gesture acting on a first gesture hot zone.

For example, refer to FIG. 12A. When the user performs a slide-up and pause gesture on the gesture hot zone H05, the Launcher application may receive the gesture operation of the user.

S703: Control the electronic device 100 to enter a desktop multi-task interface, where the desktop multi-task interface includes a task card of the target application.

For example, refer to FIG. 12B. When a slide-up and pause gesture is completed (ACTION DOWN), the Launcher application controls the electronic device 100 to enter the desktop multi-task interface 81, where the desktop multi-task interface 81 includes the task card 22 of the application B2.

S704: In response to a drag operation performed by a user on the task card of the target application, display a movement animation of the task card.

For example, refer to FIG. 12B. When the user drags the task card 22, the Launcher application performs a movement animation (RecentsAnimation) of the task card 22, to display a drag position of the task card 22 in real time.

S705: Determine that the task card of the target application is dragged to a bookmark of a first application.

For example, refer to FIG. 12B. The Launcher application may monitor the drag position of the task card 12. For example, when a position at which the user presses the task card 22 is on the bookmark 17 of the application B1 (used as the first application), the Launcher application determines that the task card 22 is dragged to the bookmark 17.

S706: Detect that the user releases the task card of the target application on the bookmark of the first application.

For example, refer to FIG. 12B. When the user drags the task card 12 to the bookmark 17 and lets go, the Launcher application detects that the user releases the task card 22 on the bookmark 17.

S707: Determine that a target bookmark is a combined bookmark of the first application and the target application.

In response to detecting that the user releases the task card 12 on the bookmark 17, the Launcher application determines to create a combined bookmark of the application B1 and the application B2 (that is, the target bookmark). For example, a bookmark type identifier (windowMode) of the combined bookmark in a first region is T202.

In addition, the Launcher application may further determine bounds (for example, the same as bounds of the bookmark 17) and a position (for example, the same as a position of the bookmark 17) of the target bookmark.

After determining the bookmark type of the target bookmark, the Launcher application may send a bookmark creation request to the framework layer. The bookmark creation request may include a task identifier (taskId), windowMode (for example, T202), bounds, a position, a scaling ratio (scale), and the like of the target bookmark. For example, when the combined bookmark corresponds to two applications, scale may be 0.5 (that is, halved). In addition, the Launcher application may send the bookmark creation request to the framework layer through Bundle.

S708: Perform a window switching animation, to switch the task card of the target application to a bookmark of the target application.

For example, refer to FIG. 12B. The bookmark of the application B2 is formed at a position of the task card 22 by performing the window switching animation.

S709: Perform a bookmark movement animation, to move the bookmark of the target application to a target position.

After the window switching animation is performed, the framework layer continues to perform the bookmark movement animation. Refer to FIG. 12B and FIG. 12C. The bookmark of the application B2 may be moved from the position of the task card 22 to a position of the bookmark 17 by performing the bookmark movement animation.

S710: Perform a bookmark scaling animation, to combine the bookmark of the first application and the bookmark of the target application into a combined bookmark of the first application and the target application (that is, the target bookmark).

For example, refer to FIG. 12C. The framework layer halves the bookmark of the application B1 and moves the bookmark to an upper half part of the screen, and halves the bookmark of the application B2 and moves the bookmark to a lower half part of the screen, to form the combined bookmark CM12 of the application B1 and the application B2.

In addition, the framework layer may perform the window switching animation, the bookmark movement animation, and the bookmark scaling animation by using an onConfigurationChanged procedure of a Task submodule.

In addition, in some embodiments, after receiving the bookmark creation request, the framework layer may further determine whether a quantity of applications corresponding to the target bookmark is greater than a maximum quantity of applications. When the quantity of applications corresponding to the target bookmark is greater than the maximum quantity of applications, the framework layer does not respond to the bookmark creation request (that is, the target bookmark is not formed). In addition, the framework layer may further control the electronic device 100 to pop up a toast, to prompt the user that the quantity of applications corresponding to the combined bookmark exceeds the maximum quantity. For example, the user may set, according to the method shown in FIG. 29, the maximum quantity of applications corresponding to the combined bookmark.

### [Embodiment 8]

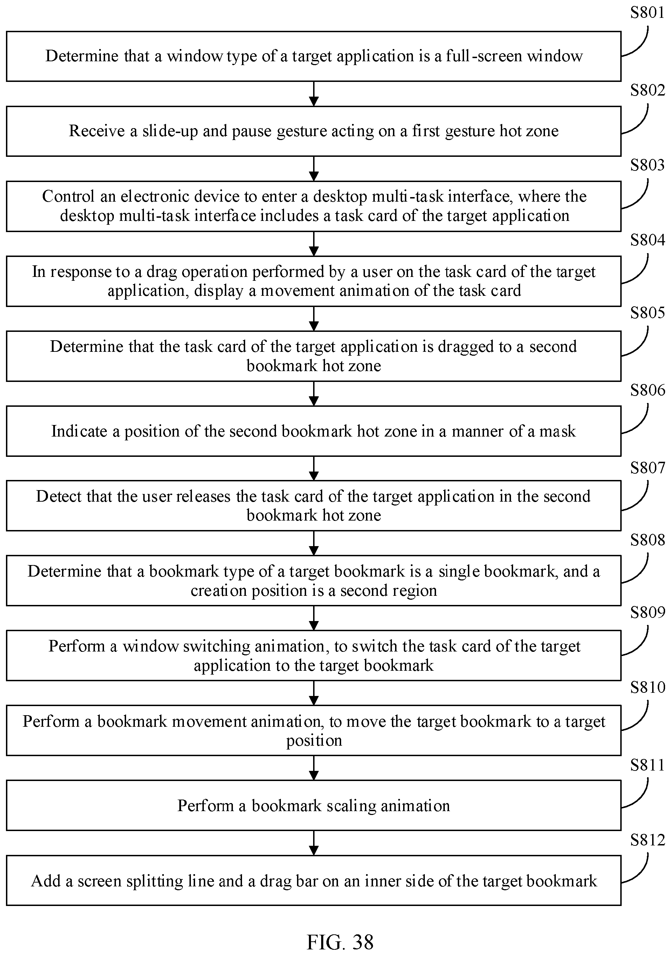

This embodiment is used to create a bookmark in a second region based on a full-screen window of an application. Refer to FIG. 38. An application display method provided in this embodiment may include the following steps (the steps in this embodiment may be performed by the electronic device 100).

S801: Determine that a window type of a target application is a full-screen window.

For example, refer to FIG. 20A. When the electronic device 100 starts the full-screen window 31 of the application B3 (used as an example of the target application), the Launcher application may obtain the type identifier "T100" of the window 31. The Launcher application may determine, based on the type identifier, that a window type of the window 31 is a full-screen window.

S802: Receive a slide-up and pause gesture acting on a first gesture hot zone.

For example, refer to FIG. 20A. When the user performs a slide-up and pause gesture on the gesture hot zone H05, the Launcher application may receive the gesture operation of the user.

S803: Control the electronic device 100 to enter a desktop multi-task interface, where the desktop multi-task interface includes a task card of the target application.

For example, refer to FIG. 20B. When a slide-up and pause gesture is completed (ACTION DOWN), the Launcher application controls the electronic device 100 to enter the desktop multi-task interface 81, where the desktop multi-task interface 81 includes the task card 32 of the application B3.

S804: In response to a drag operation performed by a user on the task card of the target application, display a movement animation of the task card.

For example, refer to FIG. 20B. In the desktop multi-task interface 81, the user may drag the task card 32. When the user drags the task card 32, the Launcher application performs a movement animation (RecentsAnimation) of the task card 32, to display a drag position of the task card 32 in real time.

S805. Determine that the task card of the target application is dragged to a second bookmark hot zone.

For example, refer to FIG. 20B. The Launcher application may monitor the drag position of the task card 32. For example, when a position at which the user presses the task card 32 is in the bookmark hot zone H02 (or referred to as the "second bookmark hot zone"), the Launcher application determines that the task card 32 is dragged to the bookmark hot zone H02. Alternatively, when a ratio of an area of the task card 32 in the bookmark hot zone H02 to a total area of the task card 32 exceeds a specified value (for example, 30%), the Launcher application determines that the task card 32 is dragged to the bookmark hot zone H02. In addition, for a manner of setting the bookmark hot zone H02, refer to the foregoing descriptions. Details are not described again.

S806: Indicate a position of the second bookmark hot zone in a manner of a mask.

For example, refer to FIG. 20B. When the task card 32 is dragged to the bookmark hot zone H02, the Launcher application displays a mask to indicate a position of the bookmark hot zone H02. In another embodiment, the Launcher application may alternatively indicate the position of the bookmark hot zone H02 in a manner such as a dashed box or a text.

S807: Detect that the user releases the task card of the target application in the second bookmark hot zone.

For example, refer to FIG. 20B. When the user drags the task card 32 to the bookmark hot zone H02 and lets go, the Launcher application detects that the user releases the task card 32 in the bookmark hot zone H02.

S808: Determine that a bookmark type of a target bookmark (a bookmark of the target application) is a single bookmark, and a creation position of the target bookmark is a second region.

In response to detecting that the user releases the task card 32 in the bookmark hot zone H02, the Launcher application determines to create a bookmark (that is, the target bookmark) of the application B3 in the second region of the screen, and a bookmark type is a single bookmark. For example, a bookmark type identifier (windowMode) of the single bookmark in the second region is T203. For a manner of setting the second region, refer to the foregoing descriptions. Details are not described again.

In addition, the Launcher application may further determine boundary information (bounds) and position information (position) of the target bookmark based on information (for example, a quantity and a position) about a created bookmark in the second region.

After determining the bookmark type of the target bookmark, the Launcher application may send a bookmark creation request to the framework layer. The bookmark creation request may include a task identifier (taskId), windowMode (for example, T203), bounds, a position, a scaling ratio (scale), and the like of the target bookmark. For example, when the second region is in a vertex region of the screen, scale may be determined based on a target position of the target bookmark. It may be understood that a closer target position to a vertex indicates a smaller scaling ratio (that is, a higher scaling-down degree). In addition, the Launcher application may send the bookmark creation request to the framework layer through Bundle.

S809: Perform a window switching animation, to switch the task card of the target application to the target bookmark.

After receiving the bookmark creation request from the Launcher application, the framework layer performs the window switching animation, to switch the task card of the application B3 to the bookmark of the application B3. For example, refer to FIG. 20B. The bookmark 38 of the application B3 is formed at a position of the task card 32 by performing the window switching animation. In addition, an initial length of the bookmark 38 may be a preset value, for example, 0.5 times a screen height.

S810: Perform a bookmark movement animation, to move the target bookmark to a target position.

After the window switching animation is performed, the framework layer continues to perform the bookmark movement animation. Refer to FIG. 20B and FIG. 20C. The bookmark 38 of the application B3 may be moved from the position of the task card 32 to a position of an upper right vertex of the screen (that is, the target position of the target bookmark) by performing the bookmark movement animation.

S811: Perform a bookmark scaling animation.

For example, a length of the bookmark 38 may be shortened from the initial length to a final length (for example, a length shown in FIG. 20C) by performing the bookmark scaling animation.

In addition, the framework layer may perform the window switching animation, the bookmark movement animation, and the bookmark scaling animation by using an onConfigurationChanged procedure of a Task submodule.

S812: Add a screen splitting line and a drag bar on an inner side of the target bookmark. For example, refer to FIG. 20C. The framework layer may add the screen splitting line 93 and the drag bar 94 on an inner side of the bookmark 38.

Other details that are not described in Embodiment 7 are substantially the same as those in Embodiment 5. Therefore, reference may be made to the descriptions in Embodiment 5. Details are not described again.

### [Embodiment 9]

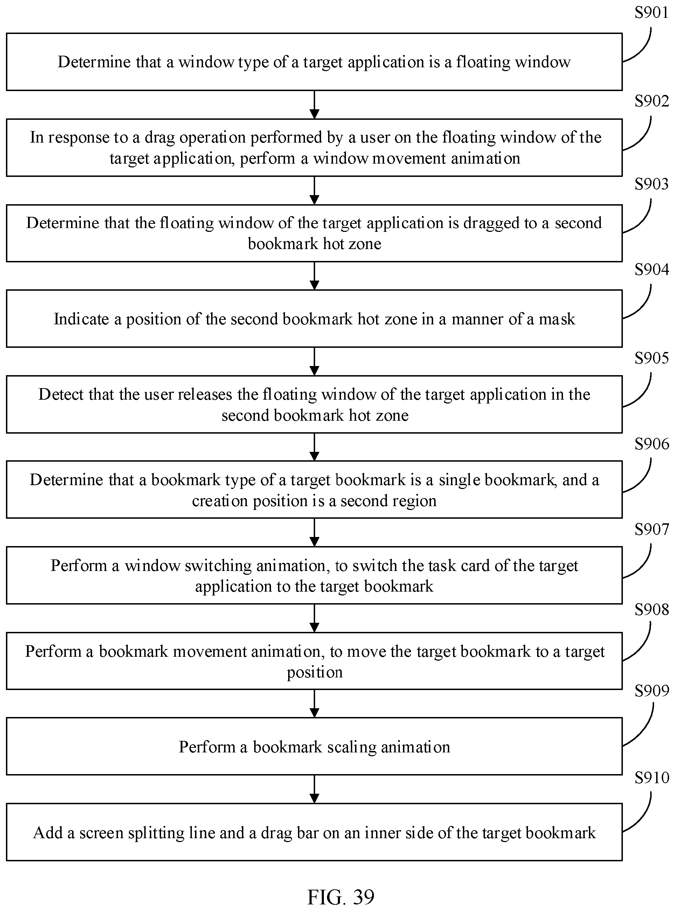

This embodiment is used to create a bookmark in a second region based on a floating window of an application. Refer to FIG. 39. An application display method provided in this embodiment may include the following steps (the steps in this embodiment may be performed by the electronic device 100).

S901: Determine that a window type of a target application is a floating window.

For example, refer to FIG. 22A. When the electronic device 100 starts the full-screen window 35 of the application B3 (used as an example of the target application), the Launcher application may obtain the type identifier "T102" of the window 31. The Launcher application may determine, based on the type identifier, that a window type of the window 35 is a floating window.

S902: In response to a drag operation performed by a user on the floating window of the target application, perform a window movement animation.

For example, refer to FIG. 22A. When the user drags the floating window 35, the Launcher application performs the window movement animation, to display a drag position of the floating window 35 in real time.

S903: Determine that the floating window of the target application is dragged to a second bookmark hot zone.

For example, refer to FIG. 22A. The Launcher application may monitor the drag position of the floating window 35. For example, when a position at which the user presses the floating window 35 is in the bookmark hot zone H02, the Launcher application determines that the floating window 35 is dragged to the bookmark hot zone H02. Alternatively, when a ratio of an area of the floating window 35 in the bookmark hot zone H02 to a total area of the floating window 35 exceeds a specified value (for example, 30%), the Launcher application determines that the floating window 35 is dragged to the bookmark hot zone H02.

S904: Indicate a position of the second bookmark hot zone in a manner of a mask.

For example, refer to FIG. 22A. When the floating window 35 is dragged to the bookmark hot zone H02, the Launcher application displays a mask to indicate a position of the bookmark hot zone H02.

S905: Detect that the user releases the floating window of the target application in the second bookmark hot zone.

For example, refer to FIG. 22A. When the user drags the floating window 35 to the bookmark hot zone H02 and lets go, the Launcher application detects that the user releases the floating window 35 in the bookmark hot zone H02.

S906: Determine that a bookmark type of a target bookmark (a bookmark of the target application) is a single bookmark, and a creation position of the target bookmark is a second region.

In response to detecting that the user releases the floating window 35 in the bookmark hot zone H02, the Launcher application determines to create a bookmark (that is, the target bookmark) of the application B3 in the second region of the screen, and a bookmark type is a single bookmark. For example, a bookmark type identifier (windowMode) of the single bookmark in the second region is T203.

In addition, the Launcher application may further determine boundary information (bounds) and position information (position) of the target bookmark based on information (for example, a quantity and a position) about a created bookmark in the second region.

After determining the bookmark type of the target bookmark, the Launcher application may send a bookmark creation request to the framework layer. The bookmark creation request may include a task identifier (taskId), windowMode (for example, T203), bounds, a position, a scaling ratio (scale), and the like of the target bookmark. For a method for determining scale, refer to step S808. Details are not described again.

S907: Perform a window switching animation, to switch the floating window of the target application to the target bookmark.

After receiving the bookmark creation request from the Launcher application, the framework layer performs the window switching animation, to switch the floating window 35 of the application B3 to the bookmark of the application B3. For example, refer to FIG. 22A. The bookmark 38 of the application B3 is formed at a position of the floating window 35 by performing the window switching animation. In addition, an initial length of the bookmark 38 may be a preset value, for example, 0.5 times a screen height.

S908: Perform a bookmark movement animation, to move the target bookmark to a target position.

After the window switching animation is performed, the framework layer continues to perform the bookmark movement animation. Refer to FIG. 22A and FIG. 22B. The bookmark 38 of the application B3 may be moved from the position of the floating window 35 to a position of an upper right vertex of the screen (that is, the target position of the target bookmark) by performing the bookmark movement animation.

S909: Perform a bookmark scaling animation.

For example, a length of the bookmark 38 may be shortened from the initial length to a final length (for example, a length shown in FIG. 23B) by performing the bookmark scaling animation.

In addition, the framework layer may perform the window switching animation, the bookmark movement animation, and the bookmark scaling animation by using an onConfigurationChanged procedure of a Task submodule.

S910: Add a screen splitting line and a drag bar on an inner side of the target bookmark. For example, refer to FIG. 22B. The framework layer may add the screen splitting line 93 and the drag bar 94 on an inner side of the bookmark 38.

Other details that are not described in Embodiment 9 are substantially the same as those in Embodiment 8. Therefore, reference may be made to the descriptions in Embodiment 8. Details are not described again.

### [Embodiment 10]

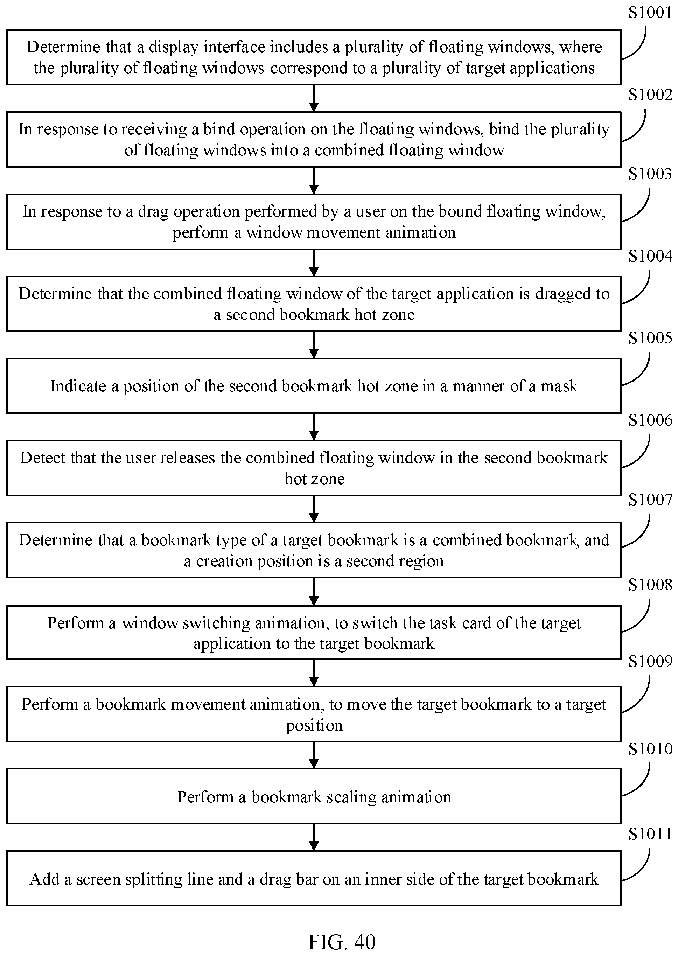

This embodiment is used to create a bookmark in a second region based on a combined floating window of an application. Refer to FIG. 40. An application display method provided in this embodiment may include the following steps (the steps in this embodiment may be performed by the electronic device 100).

S1001: Determine that a display interface includes a plurality of floating windows, where the plurality of floating windows correspond to a plurality of target applications.

For example, refer to FIG. 23A. A display interface of the electronic device 100 includes the floating window 35 of the application B3 (used as a third application) and the floating window 45 of the application B4. The window 35 and the window 45 overlap each other, and a ratio of an area of an overlapping region to an area of a single floating window (for example, the floating window 35) exceeds a specified value (for example, 30%). The Launcher application may determine, based on the window type identifiers "T102" of the window 35 and the window 45, that the two windows are floating windows.

S1002: In response to receiving a binding operation on the floating windows, bind the plurality of floating windows into a combined floating window.

For example, refer to FIG. 23A. When a user touches and holds a title bar of an upperlayer floating window (for example, the floating window 35), the Launcher application receives a binding operation performed by the user on the floating window 35 and the floating window 45. In response to the binding operation, the Launcher application binds the floating window 35 and the floating window 45 into the combined floating window CS34.

S1003: In response to a drag operation performed by a user on the bound floating window, perform a window movement animation.

S1004: Determine that the combined floating window of the target application is dragged to a second bookmark hot zone.

S1005: Indicate a position of the second bookmark hot zone in a manner of a mask.

S1006: Detect that the user releases the combined floating window in the second bookmark hot zone.

Steps S1003 to S1006 are substantially the same as steps S902 to S905 respectively. Therefore, reference may be made to the descriptions of steps S902 to S905. Details are not described again.

S1007: Determine that a bookmark type of a target bookmark is a combined bookmark, and a creation position of the target bookmark is a second region.

In response to detecting that the user releases the combined floating window CS34 in the bookmark hot zone H02, the Launcher application determines to create a combined bookmark (that is, the target bookmark) of the applications B3 and B4 in the second region of the screen. For example, a bookmark type identifier (windowMode) of the combined bookmark in the second region is T204.

In addition, the Launcher application may further determine boundary information (bounds) and position information (position) of the target bookmark based on information (for example, a quantity and a position) about a created bookmark in the second region.

After determining the bookmark type of the target bookmark, the Launcher application may send a bookmark creation request to the framework layer. The bookmark creation request may include a task identifier (taskId), windowMode (for example, T204), bounds, a position, a scaling ratio (scale), and the like of the target bookmark. For a method for determining scale, refer to step S808. Details are not described again.

S1008: Perform a window switching animation, to switch the floating window of the target application to the target bookmark.

After receiving the bookmark creation request from the Launcher application, the framework layer performs the window switching animation, to switch the combined floating window CS34 to the combined bookmark of the application B3 and the application B4. For example, refer to FIG. 23B. The combined bookmark CN34 of the application B3 and the application B4 is formed at a position of the combined floating window CS34 by performing the window switching animation. In addition, an initial length of the bookmark CN34 may be a preset value, for example, 0.5 times a screen height.

S1009: Perform a bookmark movement animation, to move the target bookmark to a target position.

After the window switching animation is performed, the framework layer continues to perform the bookmark movement animation. Refer to FIG. 23B and FIG. 23C. The combined bookmark CN34 may be moved from the position of the combined floating window CS34 to a position of an upper right vertex of the screen (that is, the target position of the target bookmark) by performing the bookmark movement animation.

S1010: Perform a bookmark scaling animation.

For example, a length of the combined bookmark CN34 may be shortened from the initial length to a final length (for example, a length shown in FIG. 23C) by performing the bookmark scaling animation.

In addition, the framework layer may perform the window switching animation, the bookmark movement animation, and the bookmark scaling animation by using an onConfigurationChanged procedure of a Task submodule.

S1011: Add a screen splitting line and a drag bar on an inner side of the target bookmark.

Other details that are not described in Embodiment 10 are substantially the same as those in Embodiment 9. Therefore, reference may be made to the descriptions in Embodiment 9. Details are not described again.

### [Embodiment 11]

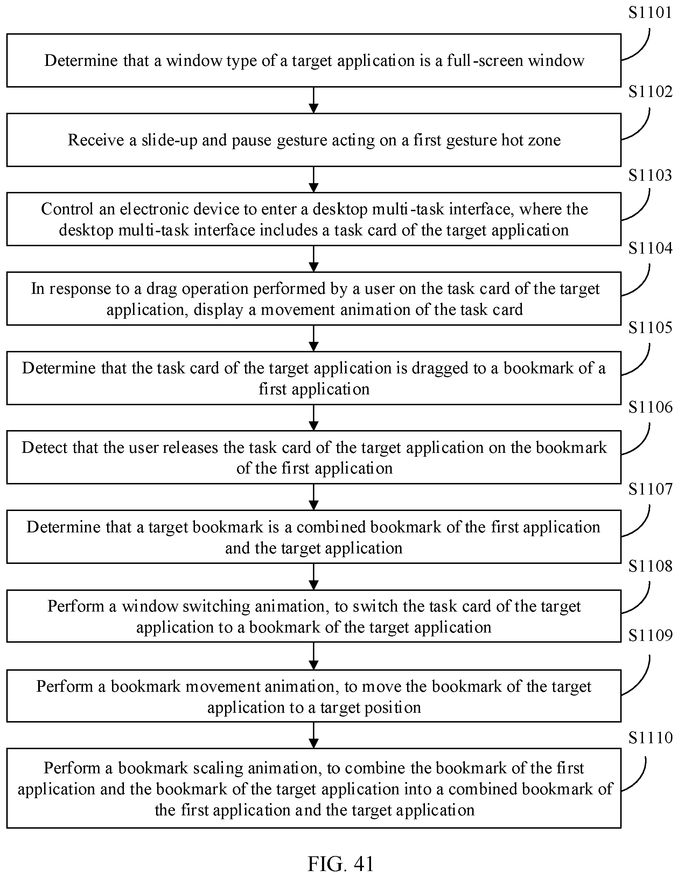

In this embodiment, a window of a second application (or referred to as a "target application") may be dragged to a bookmark (located in a second region) of a first application, to form a combined bookmark of the first application and the second application in the second region. Refer to FIG. 41. An application display method provided in this embodiment may include the following steps (the steps in this embodiment may be performed by the electronic device 100).

S1101: Determine that a window type of a target application is a full-screen window.

For example, refer to FIG. 24A. When the electronic device 100 starts the full-screen window 41 of the application B4 (used as an example of the target application), the Launcher application may obtain the type identifier "T100" of the window 41. The Launcher application may determine, based on the type identifier, that a window type of the window 41 is a full-screen window.

S1102: Receive a slide-up and pause gesture acting on a first gesture hot zone.

For example, refer to FIG. 24A. When the user performs a slide-up and pause gesture on the gesture hot zone H05, the Launcher application may receive the gesture operation of the user.

S1103: Control the electronic device 100 to enter a desktop multi-task interface, where the desktop multi-task interface includes a task card of the target application.

For example, refer to FIG. 24B. When a slide-up and pause gesture is completed (ACTION DOWN), the Launcher application controls the electronic device 100 to enter the desktop multi-task interface 81, where the desktop multi-task interface 81 includes the task card 42 of the application B4.

S1104: In response to a drag operation performed by a user on the task card of the target application, display a movement animation of the task card.

For example, refer to FIG. 24B. When the user drags the task card 42, the Launcher application performs a movement animation (RecentsAnimation) of the task card 42, to display a drag position of the task card 42 in real time.

S1105: Determine that the task card of the target application is dragged to a bookmark of a first application.

For example, refer to FIG. 24B. The Launcher application may monitor the drag position of the task card 42. For example, when a position at which the user presses the task card 42 is on the bookmark 38 of the application B3 (used as the first application), the Launcher application determines that the task card 42 is dragged to the bookmark 38.

S1106: Detect that the user releases the task card of the target application on the bookmark of the first application.

For example, refer to FIG. 24B. When the user drags the task card 42 to the bookmark 38 and lets go, the Launcher application detects that the user releases the task card 42 on the bookmark 38.

S1107: Determine that a target bookmark is a combined bookmark of the first application and the target application.

In response to detecting that the user releases the task card 12 on the bookmark 17, the Launcher application determines to create a combined bookmark of the application B1 and the application B2 (that is, the target bookmark). For example, a bookmark type identifier (windowMode) of the combined bookmark in the second region is T204.

In addition, the Launcher application may further determine bounds (for example, the same as bounds of the bookmark 38) and a position (for example, the same as a position of the bookmark 38) of the target bookmark.

After determining the bookmark type of the target bookmark, the Launcher application may send a bookmark creation request to the framework layer. The bookmark creation request may include a task identifier (taskId), windowMode (for example, T204), bounds, a position, a scaling ratio (scale), and the like of the target bookmark. For a method for determining scale, refer to step S808. In addition, the Launcher application may send the bookmark creation request to the framework layer through Bundle.

S1108: Perform a window switching animation, to switch the task card of the target application to a bookmark of the target application.

For example, refer to FIG. 24B. The bookmark of the application B4 is formed at a position of the task card 42 by performing the window switching animation. In addition, an initial length of the bookmark of the application B4 may be a preset value, for example, 0.5 times a screen height.

S1109: Perform a bookmark movement animation (or referred to as a "bookmark movement animation"), to move the bookmark of the target application to a target position.

After the window switching animation is performed, the framework layer continues to perform the bookmark movement animation. Refer to FIG. 24B and FIG. 24C. The bookmark of the application B4 may be moved from the position of the task card 42 to a position of the bookmark 38 by performing the bookmark movement animation.

S1110: Perform a bookmark scaling animation, to combine the bookmark of the first application and the bookmark of the target application into a combined bookmark of the first application and the target application (that is, the target bookmark).

For example, refer to FIG. 24C. The framework layer halves the bookmark 38 of the application B3 and moves the bookmark upward, and after the bookmark of the application B4 is scaled based on scale, halves the bookmark and moves the bookmark downward, to form the combined bookmark CM34 of the application B3 and the application B4.

In addition, the framework layer may perform the window switching animation, the bookmark movement animation, and the bookmark scaling animation by using an onConfigurationChanged procedure of a Task submodule.

Other details that are not described in Embodiment 10 are substantially the same as those in Embodiment 7. Therefore, reference may be made to the descriptions in Embodiment 7. Details are not described again.

### [Embodiment 12]

This embodiment provides an example operation method for a bookmark. In this embodiment, a user may perform an application open operation, an application preview operation, a focus bookmark designation operation, and a bookmark expanding operation on a created bookmark.

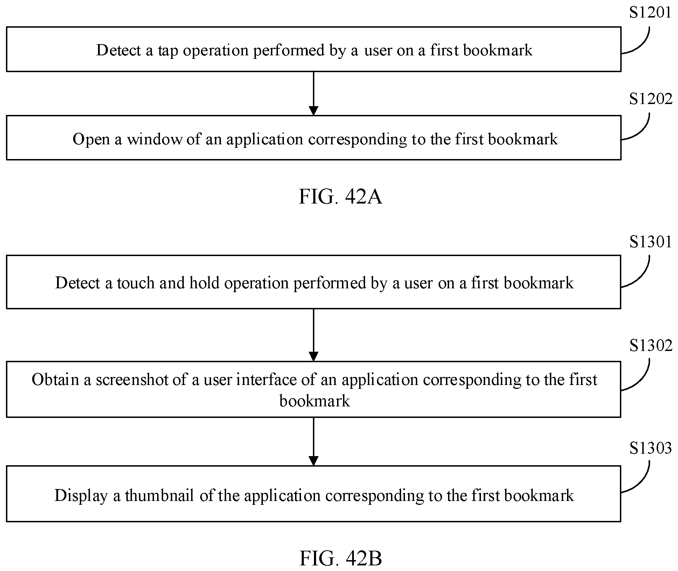

FIG. 42A shows an example of the application open operation. Refer to FIG. 42A. An application display method provided in this embodiment may include the following steps (the steps in this embodiment may be performed by the electronic device 100).

S1201: Detect a tap operation performed by a user on a first bookmark (used as an example of the application open operation).

For example, refer to FIG. 15A. The Launcher application detects a tap operation on the bookmark 37 (used as an example of the first bookmark).

For another example, refer to FIG. 15C. The Launcher application detects a tap operation on the combined bookmark CM12 (used as an example of the first bookmark).

After detecting the tap operation performed by the user on the first bookmark, the Launcher application sends an application open request to the window manager.

S1202: Open a window of an application corresponding to the first bookmark.

For example, refer to FIG. 15B. In response to the tap operation on the bookmark 37, the window manager opens the full-screen window 31 of the application B3.

For another example, refer to FIG. 15D. In response to the tap operation on the bookmark CM12, the window manager opens the split-screen window 14 of the application B1 and the split-screen window 24 of the application B2.

FIG. 42B shows an example of the application preview operation. Refer to FIG. 42B. An application display method provided in this embodiment may include the following steps.

S1301: Detect a touch and hold operation performed by a user on a first bookmark (used as an example of the application preview operation).

For example, refer to FIG. 16A. The Launcher application detects a touch and hold operation on the bookmark 37 (used as an example of the first bookmark).

For another example, refer to FIG. 16B. The Launcher application detects a touch and hold operation on the combined bookmark CM12 (used as an example of the first bookmark).

After detecting the touch and hold operation performed by the user on the first bookmark, the Launcher application sends an application open request to the window manager.

S1302: Obtain a screenshot of a user interface of an application corresponding to the first bookmark. After receiving an application preview request, the window manager obtains the screenshot of the user interface of the application corresponding to the first bookmark.

S1303: Display a thumbnail of the application corresponding to the first bookmark. After scaling the screenshot of the user interface of the application corresponding to the first bookmark, the window manager generates and displays a thumbnail of the user interface.

For example, refer to FIG. 16A. In response to the touch and hold operation on the bookmark 37, the window manager displays the thumbnail 39 of the user interface of the application B3.

For another example, refer to FIG. 16B. In response to the tap operation on the bookmark CM12, the window manager displays the thumbnail 19 of the user interface of the application B1 and the thumbnail 29 of the user interface of the application B2.

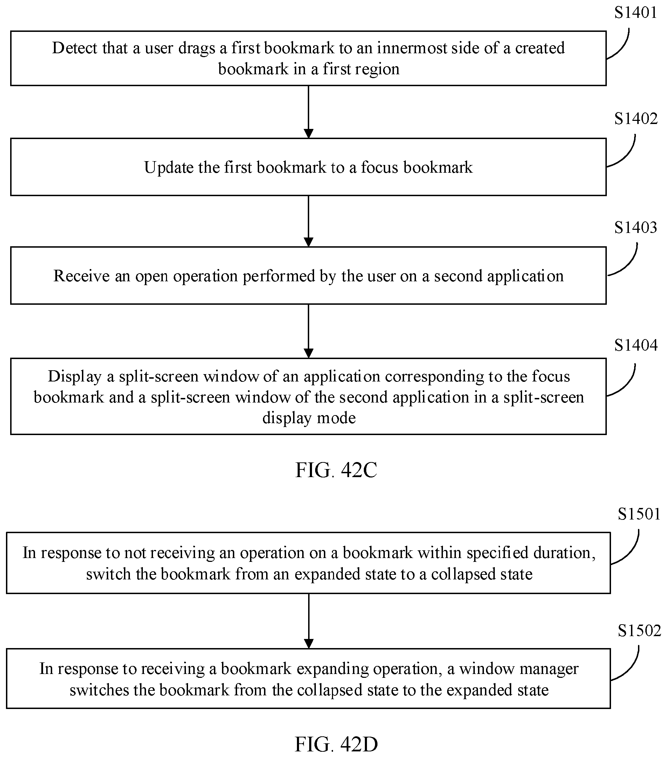

FIG. 42C shows an example of the focus bookmark designation operation. Refer to FIG. 42C. An application display method provided in this embodiment may include the following steps.

S1401: Detect that a user drags a first bookmark to an innermost side of a created bookmark in a first region (used as an example of the focus bookmark designation operation).

For example, refer to FIG. 17C. The Launcher application may monitor a drag operation performed by the user on a bookmark. When the user drags the bookmark 67 (used as the first bookmark) to the innermost side of the bookmark in the first region, the Launcher application may detect the operation of the user.

For example, refer to FIG. 17D. When the user drags the bookmark 67 to the innermost side of the bookmark in the first region and lets go (that is, when the user completes the focus bookmark designation operation), the Launcher application sends a drag result of the bookmark 67 to the window manager.

S1402: Update the first bookmark to a focus bookmark.

In response to the bookmark 67 being dragged to the innermost side, the window manager updates the bookmark 67 to a focus bookmark. For example, the window manager may add a focus mark 96 to the bookmark 67.

S1403: Receive an open operation performed by the user on a second application.

For example, when the user taps a desktop icon or an FA card of the second application (for example, Alarm), the window manager may receive the open operation performed by the user on the second application.

S1404: Display a split-screen window of an application corresponding to the focus bookmark and a split-screen window of the second application in a split-screen display mode.

FIG. 42D shows an example of the bookmark expanding operation. Refer to FIG. 42D. An application display method provided in this embodiment may include the following steps.

S1501: In response to not receiving an operation on a bookmark within specified duration (for example, within 1 min), switch the bookmark from an expanded state to a collapsed state.

For example, in response to not receiving the operation on the bookmark within the specified duration, the Launcher application sends, to the window manager, a notification indicating that the bookmark is not operated. After receiving the notification, the window manager may switch the bookmark from the expanded state shown in FIG. 17C to the collapsed state shown in FIG. 18.

S1502: In response to receiving a bookmark expanding operation, switch the bookmark from the collapsed state to the expanded state.

For example, refer to FIG. 18. When a user drags the drag bar 92 by a preset distance (for example, 100 pixels), the window manager receives the bookmark expanding operation, and then switches the bookmark from the collapsed state shown in FIG. 18 to the expanded state shown in FIG. 17C.

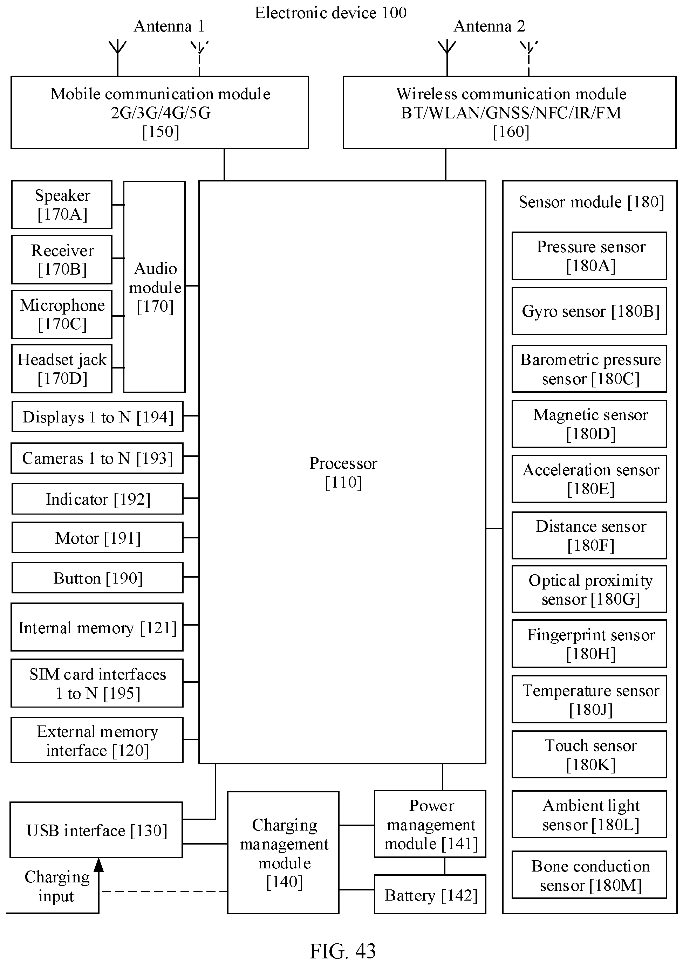

FIG. 43 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, or a subscriber identity module (subscriber identity module, SIM) interface.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

It may be understood that the interface connection relationship between the modules shown in this embodiment of the present invention is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The USB connector 130 is a connector that complies with a USB standard specification, and may be configured to connect the electronic device 100 and a peripheral device. Specifically, the USB connector 130 may be a standard USB connector (for example, a Type-C connector), a mini USB connector, a micro USB connector, or the like. The USB connector 130 may be configured to connect to a charger to charge the electronic device 100, or may be configured to transmit data between the electronic device 100 and a peripheral device, or may be configured to connect to a headset to play audio by using the headset. The connector may alternatively be configured to connect to another electronic device, such as an AR device. In some implementation solutions, the processor 110 may support a universal serial bus (Universal Serial Bus), and a standard specification of the universal serial bus may be USB 1.x, USB 2.0, USB 3.x, or USB 4.

The charging management module 140 is configured to receive charging input from a charger. The charger may be a wireless charger, or may be a wired charger. In some wired charging embodiments, the charging management module 140 may receive charging input from a wired charger through the USB connector 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The external memory interface 120 may be configured to connect to an external memory card, such as a micro SD card, to extend a storage capability of the electronic device 100. The external memory card communicates with the processor 110 through the external memory interface 120, to implement a data storage function. For example, files such as music or videos are stored in the external memory card.

The internal memory 121 may be configured to store computer executable program code, where the executable program code includes instructions. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS). The processor 110 performs various function applications and data processing of the electronic device 100 by running the instructions stored in the internal memory 121 and/or instructions stored in the memory disposed in the processor.

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB connector 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

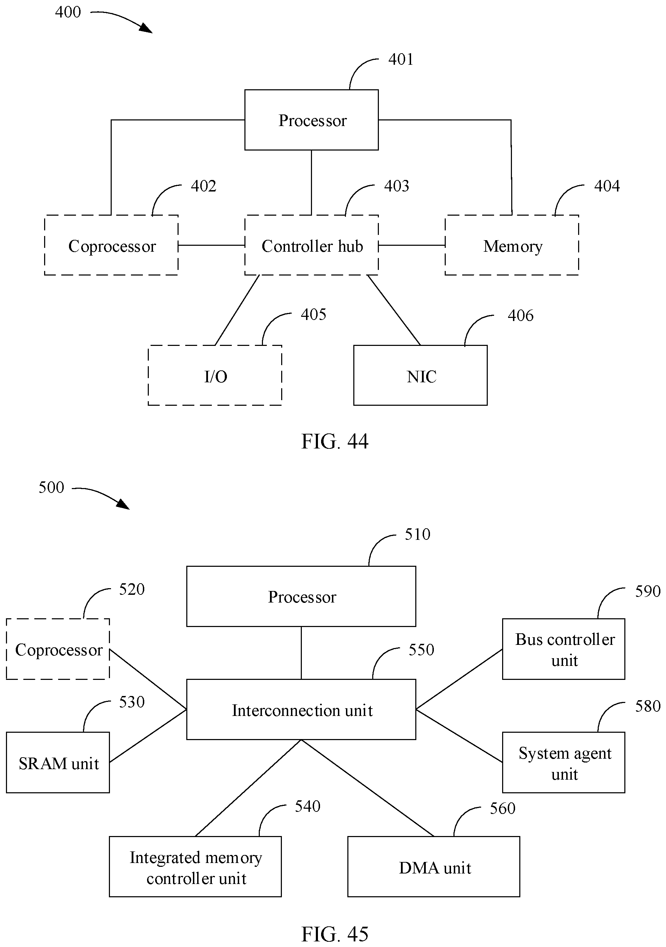

FIG. 44 is a block diagram of an electronic device 400 according to an embodiment of this application. The electronic device 400 may include one or more processors 401 coupled to a controller hub 403. For at least one embodiment, the controller hub 403 communicates with the processor 401 by using a multi-branch bus such as a front side bus (FSB, Front Side Bus), a point-to-point interface such as a quick path interconnect (QPI, Quick Path Interconnect), or a similar connection 406. The processor 401 executes an instruction for controlling a data processing operation of a general type. In an embodiment, the controller hub 403 includes, but is not limited to, a graphics & memory controller hub (GMCH, Graphics & Memory Controller Hub) (not shown) and an input/output hub (IOH, Input Output Hub) (which may be on a separate chip) (not shown). The GMCH includes a memory and a graphics controller, and is coupled to the IOH.

The electronic device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination of both. The memory 404 may include one or more tangible and non-transitory computer-readable media for storing data and/or instructions. The computer-readable storage medium stores instructions, and specifically, stores a transitory copy and a permanent copy of the instructions. The instructions may include instructions that cause the electronic device 400 to implement the methods shown in FIG. 31 to FIG. 42D when being executed by at least one processor. When the instructions are run on a computer, the computer is enabled to perform the application display method disclosed in embodiments of this application.

In an embodiment, the coprocessor 402 is a dedicated processor, for example, a high-throughput MIC (Many Integrated Core, many integrated core) processor, a network or communication processor, a compression engine, a graphics processing unit, a GPGPU (General-purpose computing on graphics processing units, general-purpose computing on graphics processing units), or an embedded processor. An optional property of the coprocessor 402 is represented by a dashed line in FIG. 44.

In an embodiment, the electronic device 400 may further include a network interface (NIC, Network Interface Controller) 406. The network interface 406 may include a transceiver, configured to provide a radio interface for the electronic device 400 to communicate with any other suitable device (for example, a front side module or an antenna). In various embodiments, the network interface 406 may be integrated with another component of the electronic device 400. The network interface 406 may implement a function of a communication unit in the foregoing embodiments.

The electronic device 400 may further include an input/output (I/O, Input/Output) device 405. The I/O 405 may include: a user interface, where this design enables a user to interact with the electronic device 400; a peripheral component interface, where this design enables a peripheral component to interact with the electronic device 400; and/or a sensor, where this sensor is configured to determine an environmental condition and/or position information related to the electronic device 400.

It should be noted that FIG. 44 is merely an example. To be specific, although FIG. 44 shows that the electronic device 400 includes a plurality of components such as the processor 401, the controller hub 403, and the memory 404, in actual application, the device that uses the methods in this application may include only some of the components of the electronic device 400, for example, may include only the processor 401 and the network interface 406. A property of an optional component in FIG. 44 is shown by using a dashed line.

FIG. 45 is a block diagram of a SoC (System on Chip, system on chip) 500 according to an embodiment of this application. In FIG. 45, similar components have a same reference numeral. In addition, a dashed-line box is an optional feature of a more advanced SoC. In FIG. 45, the SoC 500 includes: an interconnection unit 550, coupled to a processor 510; a system agent unit 580; a bus controller unit 590; an integrated memory controller unit 540; a group of or one or more coprocessors 520, which may include integrated graphics logic, an image processor, an audio processor, and a video processor; a static random access memory (SRAM, Static Random Access Memory) unit 530; and a direct memory access (DMA, Direct Memory Access) unit 560. In an embodiment, the coprocessor 520 includes a dedicated processor, for example, a network or communication processor, a compression engine, a GPGPU (General-purpose computing on graphics processing units, general-purpose computing on graphics processing units), a high-throughput MIC processor, or an embedded processor.

The static random access memory (SRAM) unit 530 may include one or more tangible and non-transitory computer-readable media that are configured to store data and/or instructions. The computer-readable storage medium stores instructions, and specifically, stores a transitory copy and a permanent copy of the instructions. The instructions may include instructions that cause the SoC to implement the methods shown in FIG. 31 to FIG. 42D when being executed by at least one processor. When the instructions are run on a computer, the computer is enabled to perform the application display method disclosed in embodiments of this application.

The term "and/or" in this specification is merely an association relationship of associated objects, and indicates that three relationships may exist. For example, A and/or B may indicate the following three cases: Only A exists, both A and B exist, and only B exists. In addition, in embodiments, values in each data range include end values. For example, A=10~50 indicates that A may be 10 or 50.

All method implementations of this application may be implemented by software, a magnetic component, firmware, or the like.

Program code may be used to input instructions, to perform functions described in this specification and generate output information. The output information may be used in one or more output devices in a known manner. For a purpose of this application, a processing system includes any system with a processor such as a digital signal processor (Digital Signal Processor, DSP), a microcontroller, an application-specific integrated circuit (ASIC), or a microprocessor.

The program code may be implemented by using a high-level programming language or an object-oriented programming language, to communicate with the processing system. The program code can also be implemented in an assembly language or a machine language when needed. Actually, the mechanism described in this specification is not limited to a scope of any particular programming language. In any case, the language may be a compiled language or an interpreted language.

One or more aspects of at least one embodiment may be implemented by using representative instructions stored in a computer-readable storage medium. The instructions represent various types of logic in a processor, and when the instructions are read by a machine, the machine is enabled to manufacture logic for performing the technologies described in this specification. These representations, referred to as an "intellectual property (Intellectual Property, IP) core" may be stored in a tangible computer-readable storage medium and provided for a plurality of customers or production facilities for loading into a manufacturing machine that actually manufactures the logic or processor.

In some cases, an instruction converter may be configured to convert instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by software, hardware, firmware, or a combination thereof. The instruction converter may be located on the processor, outside the processor, or partially on the processor and partially outside the processor.

## Claims

1. An application display method, applied to an electronic device, wherein the method comprises:
displaying a first window, wherein the first window is used to run a first application;
receiving a first operation;
in response to the first operation, switching the first window to a bookmark of the first application;
displaying a second window, wherein the second window is used to run a second application;
receiving a second operation, wherein the second operation is used to drag the second window to the bookmark of the first application; and
in response to the second operation, switching the bookmark of the first application to a combined bookmark of the first application and the second application.

2. The method according to claim 1, wherein the first operation is used to drag the first window to a first bookmark hot zone.

3. The method according to claim 2, wherein the first window is a fixed window, and the receiving a first operation comprises:
receiving a third operation, wherein the third operation is used to switch the first window to a movable window of the first application; and
receiving a fourth operation, wherein the fourth operation is used to drag the movable window of the first application to the first bookmark hot zone.

4. The method according to claim 3, wherein the first window is a full-screen window, and a display interface of the electronic device comprises a first gesture hot zone; and
the third operation is a first gesture operation acting on the first gesture hot zone.

5. The method according to claim 3, wherein the first window is one of a plurality of split-screen windows displayed on the electronic device, a display interface of the electronic device comprises a first gesture hot zone, the first gesture hot zone comprises a plurality of sub-hot zones, and the sub-hot zones correspond to different split-screen windows; and
the third operation is a first gesture operation acting on a sub-hot zone corresponding to the first window.

6. The method according to claim 3, wherein the movable window of the first application is a task card of the first application.

7. The method according to claim 2, wherein the first window is a floating window, and the receiving a first operation comprises:
receiving a fifth operation, wherein the fifth operation is used to drag the first window to the first bookmark hot zone.

8. The method according to any one of claims 2 to 7, wherein the bookmark of the first application is located in a first region of a screen of the electronic device, and the first bookmark hot zone does not overlap a created bookmark in the first region.

9. The method according to claim 8, wherein the first region is a side region or a vertex region of the screen of the electronic device, and the first bookmark hot zone is located on an inner side of the created bookmark in the first region and is set adjacent to the created bookmark in the first region.

10. The method according to claim 1, wherein the method further comprises:
receiving a sixth operation for the combined bookmark; and
in response to the sixth operation, restoring the combined bookmark to split-screen windows of the first application and the second application, or restoring the combined bookmark to floating windows of the first application and the second application.

11. The method according to claim 1, wherein the method further comprises:
receiving a seventh operation for the combined bookmark; and
in response to the seventh operation, displaying a thumbnail of a user interface of the first application and a thumbnail of a user interface of the second application.

12. The method according to claim 8, wherein the first region comprises a plurality of bookmarks, and the method further comprises:
switching the plurality of bookmarks to a collapsed state in response to receiving no operation for the plurality of bookmarks within specified duration.

13. The method according to claim 12, wherein the method further comprises:
receiving a bookmark expanding operation; and
in response to the bookmark expanding operation, restoring the plurality of bookmarks from the collapsed state to an expanded state.

14. The method according to claim 8, wherein the method further comprises:
displaying a third window, wherein the third window is used to run a third application;
receiving an eighth operation; and
in response to the eighth operation, switching the third window to a bookmark of the third application, wherein the bookmark of the third application is located in a second region of the screen of the electronic device, wherein
in a display direction of the electronic device, the first region and the second region are located on two opposite sides of the screen of the electronic device.

15. The method according to claim 14, wherein the eighth operation is used to drag the third window to a second bookmark hot zone; and
the second bookmark hot zone does not overlap a created bookmark in the second region and is set adjacent to the created bookmark in the second region.

16. The method according to claim 14, wherein one of the first region and the second region is a side region of the screen of the electronic device, and the other is a vertex region of the screen of the electronic device.

17. The method according to claim 14, wherein a bookmark in the first region is used to be restored to one of a fixed window and a floating window, and a bookmark in the second region is used to be restored to the other of the fixed window and the floating window.

18. An application display method, applied to an electronic device, wherein the method comprises:
displaying a split-screen interface, wherein the split-screen interface comprises a first split-screen window and a second split-screen window, the first split-screen window is used to run a fourth application, and the second split-screen window is used to run a fifth application;
receiving a ninth operation, wherein the ninth operation is used to drag a combined split-screen window of the first split-screen window and the second split-screen window to a first bookmark hot zone; and
in response to the ninth operation, switching the combined split-screen window of the first split-screen window and the second split-screen window to a combined bookmark of the fourth application and the fifth application.

19. The method according to claim 18, wherein a display interface of the electronic device comprises a first gesture hot zone, the first gesture hot zone comprises a plurality of sub-hot zones, and the sub-hot zones correspond to different split-screen windows; and
the receiving a ninth operation comprises:
receiving a third operation, wherein the third operation is a first gesture operation acting on a first sub-hot zone, the first sub-hot zone is a sub-hot zone corresponding to the combined split-screen window of the first split-screen window and the second split-screen window, and the third operation is used to switch the combined split-screen window to a combined movable window of the fourth application and the fifth application; and
receiving a fourth operation, wherein the fourth operation is used to drag the combined movable window to the first bookmark hot zone.

20. An application display method, applied to an electronic device, wherein the method comprises:
displaying a first floating window and a second floating window, wherein the first floating window is used to run a sixth application, the second floating window is used to run a seventh application, the first floating window and the second floating window overlap each other, and a ratio of an area of an overlapping region of the first floating window and the second floating window to an area of the first floating window exceeds a first threshold;
receiving a tenth operation;
in response to the tenth operation, binding the first floating window and the second floating window into a combined floating window;
receiving an eleventh operation, wherein the eleventh operation is used to drag the combined floating window to a first bookmark hot zone; and
in response to the eleventh operation, switching the combined floating window to a combined bookmark of the sixth application and the seventh application.

21. An electronic device, comprising:
a memory, configured to store instructions for execution by one or more processors of the electronic device; and
a processor, wherein when the processor executes the instructions in the memory, the electronic device is enabled to perform the application display method according to any one of claims 1 to 20.

22. A computer-readable storage medium, wherein the computer-readable storage medium stores instructions, and when the instructions are executed on a computer, the computer is enabled to perform the application display method according to any one of claims 1 to 20.
